(19)

Europäisches Patentamt
European Patent Office
Office européen des brevets

(11) **EP 2 060 884 A1**

(12) **EUROPEAN PATENT APPLICATION**
published in accordance with Art. 153(4) EPC

(43) Date of publication:
**20.05.2009 Bulletin 2009/21**

(21) Application number: **07806075.3**

(22) Date of filing: **24.08.2007**

(51) Int Cl.:
**G01G 3/18** (2006.01)　　**B07C 5/18** (2006.01)
**G01G 3/14** (2006.01)　　**G01G 11/00** (2006.01)
**G01L 1/22** (2006.01)

(86) International application number:
**PCT/JP2007/066489**

(87) International publication number:
**WO 2008/029648 (13.03.2008 Gazette 2008/11)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.09.2006 JP 2006240335**
**07.11.2006 JP 2006301517**

(71) Applicant: **ISHIDA CO., Ltd.**
**Kyoto-shi,**
**Kyoto 606-8392 (JP)**

(72) Inventors:
• **NAITO, Kazufumi**
**Otsu-shi, Shiga 520-0246 (JP)**
• **TAJIRI, Shoko**
**Ritto-shi, Shiga; 520-3026 (JP)**
• **TAKEICHI, Shinji**
**Ritto-shi, Shiga; 520-3026 (JP)**

(74) Representative: **Skone James, Robert Edmund**
**Gill Jennings & Every LLP**
**Broadgate House**
**7 Eldon Street**
**London EC2M 7LH (GB)**

(54) **LOAD CELL UNIT, WEIGHT CHECKER, ELECTRONIC WEIGHTING INSTRUMENT, AND WEIGHTING INSTRUMENT**

(57) A load cell unit which can satisfactorily measure the weight of a measured object if ambient temperature changes, and a weight checker and an electric balance using the load cell unit, are provided. A strain generating element includes plural strain generating portions. Each of strain gauges is a gauge of a temperature/sensitivity compensated type and is placed in a position on a corresponding strain generating portion. A bridge circuit includes the strain gauges. A zero compensation element compensates the zero of the bridge circuit in accordance with the temperature of the strain generating element, to roughly correct an output of the bridge circuit. A thermal sensitive resistor is a temperature sensor for detecting the temperature of the strain generating element. The zero compensation element and the thermal sensitive resistor are provided on a thick portion interposed between adjacent strain generating portions. A signal processor minutely corrects a roughly-corrected output of the bridge circuit. Thus, software compensation of zero can be further provided to an output of the bridge circuit, to which circuital compensation of zero is provided.

F I G . 5

EP 2 060 884 A1

**Description**

Technical Field

The present invention relates to a load cell unit which measures a weight of an object being measured based on a load signal, and a weight checker, an electronic balance, and a balance each of which uses the above-mentioned load cell unit, and more particularly relates to zero compensation of a bridge circuit using a strain gauge or output compensation of a bridge circuit.

Background Art

Conventionally, for a load cell which includes a bridge circuit formed of a strain gauge, techniques of computing an amount of change in zero based on a temperature detected by a temperature sensor, and correcting an output of the bridge circuit based on the computed amount of change in zero, have been known (for example, Patent document 1).

Also conventionally, techniques of reducing an amount of change in output of a bridge circuit, which change is caused due to change in ambient temperature by connecting a thermal sensitive resistor to an input side of the bridge circuit, to thereby compensate the sensitivity of a load cell unit (sensitivity correction), have been known (Patent document 2). Further, techniques of computing an amount of change in zero based on the temperature of a load cell unit and correcting an output of a bridge circuit, by utilizing a thermal sensitive resistor for sensitivity correction as a temperature sensor, have been known (Patent document 2).

Moreover, techniques of roughly compensating an output of a bridge circuit with the use of a thermal sensitive resistor which is connected in series with the bridge circuit and minutely compensating a roughly-compensated load voltage with the use of a function of temperature compensation or the like, to thereby compensate the output sensitivity of the bridge circuit, have conventionally been known (for example, Patent document 3).

It is noted that the term "zero" means a no-load output, and more specifically, a voltage (load signal) which is output from a bridge circuit of a load cell unit in a case where a voltage supplied from a power source is applied to the load cell unit when it is unloaded. It is also noted that the terms "output sensitivity" mean an amount of change in output provided from a bridge circuit in a case where a certain load is imposed on a load cell unit, that is, a value obtained by subtracting "zero" from an output of the bridge circuit.

   Patent document 1: Japanese Patent Application Laid-Open No. 11-125555

   Patent document 2: Examined Japanese Patent Application Laid-Open No. 7-069232

   Patent document 3: Japanese Patent Application Laid-Open No. 11-064123

Description of the Invention

Problems to be Solved by the Invention

However, in a case where an amount of change in zero which is caused due to temperature change is large, just slight change in ambient temperature of a load cell unit causes considerable change in output provided from a bridge circuit. As a result, apparatuses disclosed in Patent document 1 and Patent document 3 suffer from a problem of unreliable detection of a weight of an object being measured. In particular, in an apparatus in which processes for weight measurement are consecutively performed (for example, a weight checker), correction of zero can not be achieved for each of the processes, so that an amount of change in zero becomes problematic.

Also, in a case where a measurement mode having a smaller minimum scale interval is added to a measuring apparatus which measures a weight of an object being measured which is standing still (for example, electronic balance), an amount of change in zero is problematic. Specifically, to reduce a minimum scale interval relative to a rated capacity (the maximum load that a load cell unit can measure according to specifications) would occasionally cause a problem of non-stability of measurement values under influences of ambient temperature at which the load cell unit is placed.

To overcome the above problems, it is an object of the present invention to provide a load cell unit which can satisfactorily measure a weight of an object being measured even if ambient temperature changes, and a weight checker, an electronic balance, and a balance each of which uses the above-mentioned load cell unit.

Means for Solving Problems

In order to solve the above-described problems, the invention recited in claim 1 is directed to a load cell unit for measuring a weight of a measured object based on a load signal, which includes a strain generating element including a plurality of thin strain generating portions; a strain gauge placed on a corresponding one of the plurality of strain generating portions; a bridge circuit including the strain gauge; a zero compensation element which is connected in series with the strain gauge placed on one side of the bridge circuit and carry out rough correction on an output of the bridge circuit by compensating zero of the bridge circuit which varies along with temperature change in accordance with a temperature of the strain generating element; a temperature sensor for detecting the temperature of the strain generating element; and a signal processor which calculates an amount of change in the zero after the rough correction based on a result of detection provided by the temperature sensor and minutely corrects the output of the bridge circuit which is roughly corrected based on the amount of change, wherein the zero compensation element and the temperature sensor are provided in a portion interposed between adjacent ones of the plurality of strain generating portions.

Also, the invention recited in claim 2 is directed to the load cell unit according to claim 1, wherein the temperature sensor is a thermal sensitive resistor.

Also, the invention recited in claim 3 is directed to the load cell unit according to claim 2, wherein the thermal sensitive resistor is connected in series with an input side of the bridge circuit.

Also, the invention recited in claim 4 is directed to the load cell unit according to claim 3, wherein the strain gauge is a strain gauge of a temperature self-compensated type which is capable of compensating for thermal expansion of the strain generating element which is caused due to temperature change.

Also, the invention recited in claim 5 is directed to the load cell unit according to claim 1 or 2, wherein the strain gauge is a strain gauge of a temperature/sensitivity compensated type which is capable of compensating an amount of change in modulus of longitudinal elasticity of the strain generating element which is caused due to temperature change.

Also, the invention recited in claim 6 is directed to the load cell unit according to any of claims 1 through 5, wherein out of the plurality of strain generating portions, first and second strain generating portions which are adjacent to each other are provided at a side closer to a first surface which is substantially perpendicular to a load direction in which a load of the measured object is imposed, and receives the load of the measured object, in an outer surface of the strain generating element, third and fourth strain generating portions which are adjacent to each other are provided at a side closer to a second surface which is substantially perpendicular to the load direction and opposes the first surface with a through hole of the strain generating element interposed therebetween, and the strain gauge is provided on each of the first through fourth strain generating portions.

Also, the invention recited in claim 7 is directed to the load cell unit according to claim 5, wherein the bridge circuit includes first and second strain gauges and first and second fixed resistors, and the first strain gauge, the second strain gauge, the first fixed resistor, and the second fixed resistor are connected between a first input terminal and a first output terminal, between a second input terminal and the first output terminal, between the first input terminal and a second output terminal, and between the second input terminal and the second output terminal, respectively.

Also, the invention recited in claim 8 is directed to the load cell unit according to claim 7, wherein out of the plurality of strain generating portions, first and second strain generating portions which are adjacent to each other are provided at a side closer to a first surface which is substantially perpendicular to a load direction in which a load of the measured object is imposed, and receives the load of the measured object, in an outer surface of the strain generating element, third and fourth strain generating portions which are adjacent to each other are provided at a side closer to a second surface which is substantially perpendicular to the load direction and opposes the first surface with a through hole of the strain generating element interposed therebetween, and the first and second strain gauges are placed on one of the first surface and the second surface in positions respectively opposing the strain generating portions provided on the one of the first surface and the second surface.

Also, the invention recited in claim 9 is directed to the load cell unit according to any of claims 1 through 8, wherein the signal processor calculates the amount of change in the zero by second- or higher-order approximation.

Also, the invention recited in claim 10 is directed to a weight checker which includes: a measuring device for measuring weights of checked objects which are being transferred; and a sorting device for sorting the checked objects based on results of measurement of the checked objects which are provided by the measuring device, wherein the measuring device includes the load cell unit according to any of claims 1 through 9; and a measuring conveyor which is supported by the load cell unit and transfers the checked objects.

Also, the invention recited in claim 11 is directed to an electric balance which includes: the load cell according to any of claims 1 through 9; and a pan which is supported by the load cell and loads a measured object.

Also, the invention recited in claim 12 is directed to a load cell unit for measuring a weight of a measured object based on a load signal, which includes: a strain generating element including a plurality of thin strain generating portions; a strain gauge of a temperature/sensitivity compensated type which is placed on a corresponding one out of the plurality of strain generating portions and compensates output sensitivity of the bridge circuit, to roughly correct a bridge output of the bridge circuit, to compensate an amount of change in modulus of longitudinal elasticity of the strain generating element which is caused due to change; a bridge circuit including the strain gauge; a zero compensation element which is connected in series with the strain gauge placed on one side of the bridge circuit and roughly correct an output of the bridge circuit, by compensating zero of the bridge circuit which varies along with temperature change in accordance with a temperature of the strain generating element; a temperature sensor for detecting the temperature of the strain generating element; and a signal processor for further compensating the zero and the output sensitivity of the bridge circuit, based on a result of detection provided by the temperature sensor, by minutely correcting the bridge output of the bridge circuit which is zero-compensated by the zero compensation element, and is roughly corrected through compensation of the output sensitivity of the bridge circuit by the strain gauge wherein the zero compensation element and the temperature sensor are provided in a portion interposed between adjacent strain generating portions.

Also, the invention recited in claim 13 is directed to the load cell unit according to claim 12, wherein the temperature sensor is a thermal sensitive resistor.

Also, the invention recited in claim 14 is directed to a load cell unit for measuring a weight of a measured object based on a load signal, which includes: a strain generating element including a plurality of thin strain generating portions; a strain gauge of a temperature self-compensated type which is placed on a corresponding one out of the plurality of strain generating portions and is capable of compensating for thermal expansion of the strain generating element which is caused due to temperature change; a bridge circuit including the strain gauge; a zero compensation element which is connected in series with the strain gauge placed on one side of the bridge circuit and roughly correct an output of the bridge circuit by compensating zero of the bridge circuit which varies along with temperature change in accordance with a temperature of the strain generating element; thermal sensitive resistors which are connected in series with an input side of the bridge circuit, compensate an amount of change in modulus of longitudinal elasticity of the strain generating element which is caused due to temperature change, and roughly correct a bridge output of the bridge circuit, to compensate output sensitivity of the bridge circuit; and a signal processor for further compensating the zero and the output sensitivity of the bridge circuit, based on a result of detection provided by the temperature sensors, by minutely correcting the bridge output of the bridge circuit which is zero-compensated by the zero compensation element, and is roughly corrected through compensation of the output sensitivity of the bridge circuit by the thermal sensitive resistors wherein the zero compensation element and the thermal sensitive resistors which are employable as temperature sensors are provided in a portion interposed between adjacent strain generating portions.

Also, the invention recited in claim 15 is directed to the load cell unit according to claim 14, wherein a first thermal sensitive resistor and a second thermal sensitive resistor out of the thermal sensitive resistors are connected with an input-side first terminal of the bridge circuit and an input-side second terminal of the bridge circuit, respectively.

Also, the invention recited in claim 16 is directed to the load cell unit according to claim 14, wherein the thermal sensitive resistors are connected with one of input-side terminals of the bridge circuit.

Also, the invention recited in claim 17 us directed to a load cell unit for measuring a weight of a measured object based on a load signal, which includes: a strain generating element including a plurality of thin strain generating portions; a strain gauge of a temperature self-compensated type which is placed on a corresponding one out of the plurality of strain generating portions and is capable of compensating for thermal expansion of the strain generating element which is caused due to temperature changes; a bridge circuit including the strain gauge; a zero compensation element which is connected in series with the strain gauge placed on one side of the bridge circuit and roughly correct a bridge output of the bridge circuit, by compensating zero of the bridge circuit which varies along with temperature change in accordance with a temperature of the strain generating element; a thermal sensitive resistor which is employable as a temperature sensor; a signal processor which carries out signal processing on an input signal and includes; a variable gain amplifier which is connected with the thermal sensitive resistor and has amplification controlled based on a resistance of the thermal sensitive resistor which is in accordance with temperature change; and a compensation calculator which is capable of carrying out calculation for compensation based on an output signal provided by the variable gain amplifier; and a selecting part for selecting one of the bridge output and a reference output and is capable of inputting a selected output to the variable gain amplifier, wherein the zero compensation element and the thermal sensitive resistor are provided in a portion interposed between adjacent strain generating portions, when the selecting part is switched to a side of the bridge output so that the bridge output is input to the variable gain amplifier as the input signal, the variable gain amplifier compensates an amount of change in modulus of longitudinal elasticity of the strain generating element which is caused due to temperature change and roughly corrects the bridge output, to compensate output sensitivity of the bridge circuit, and the compensation calculator minutely corrects the bridge output of the bridge circuit which is zero-compensated by the zero compensation element, the bridge output being roughly corrected through compensation of the output sensitivity of the bridge circuit by the variable gain amplifier, based on a result of detection provided by the temperature sensor, to further compensate the zero and the output sensitivity of the bridge circuit, and when the selecting part is switched to a side of the reference output so that the reference output is input to the variable gain amplifier as the input signal, the variable gain amplifier outputs an output signal which is in accordance with a resistance of the thermal sensitive resistor, and the compensation calculator calculates the temperature of the strain generating element based on the output signal.

Also, the invention recited in claim 18 is directed to the load cell unit according to any of claims 12 through 17, wherein out of the plurality of strain generating portions, first and second strain generating portions which are adjacent to each other are provided at a side closer to a first surface which is substantially perpendicular to a load direction in which a load of the measured object is imposed, and receives the load of the measured object, in an outer surface of the strain generating element, third and fourth strain generating portions which are adjacent to each other are provided at a side closer to a second surface which is substantially perpendicular to the load direction and opposes the first surface with a through hole of the strain generating element interposed therebetween, and the strain gauge is placed on each of the first through fourth strain generating portions.

Also, the invention recited in claim 19 is directed to the load cell unit according to claim 12 or 13, wherein the bridge circuit includes first and second strain gauges and first and second fixed resistors, and the first strain gauge, the second strain gauge, the first fixed resistor, and the second fixed resistor are connected between a first input terminal and a first output terminal, between a second input terminal and the first output terminal, between the first input terminal and a second output terminal, and between the second input terminal and the second output terminal, respectively.

Also, the invention recited in claim 20 is directed to the load cell unit according to claim 19, wherein out of the plurality of strain generating portions, first and second strain generating portions which are adjacent to each other are provided at a side closer to a first surface which is substantially perpendicular to a load direction in which a load of the measured object is imposed, and receives the load of the measured object, in an outer surface of the strain generating element, third and fourth strain generating portions which are adjacent to each other are provided at a side closer to a second surface which is substantially perpendicular to the load direction and opposes the first surface with a through hole of the strain generating element interposed therebetween, and the first and second strain gauges are placed on one of the first surface and the second surface in positions respectively opposing the strain generating portions provided on the one of the first surface and the second surface.

Also, the invention recited in claim 21 is directed to the load cell unit according to any of claims 12 through 20, wherein the signal processor minutely corrects the bridge output which is roughly corrected by second- or higher-order approximation, to further compensate the zero of the bridge circuit.

Also, the invention recited in claim 22 is directed to the load cell unit according to any of claims 12 through 20, wherein the signal processor minutely corrects the bridge output which is roughly corrected by second- or higher-order approximation, to further compensate the output sensitivity of the bridge circuit.

Also, the invention recited in claim 23 is directed to the load cell unit according to any of claims 12 through 20, wherein the signal processor minutely corrects the bridge output which is roughly corrected by second- or higher-order approximation to compensate the zero of the bridge circuit, and also, achieves minute correction by second- or higher-order approximation to compensate the output sensitivity of the bridge circuit.

Also, the invention recited in claim 24 is directed to a weight checker, which includes: a measuring device for measuring weights of checked objects which are being transferred; and a sorting device for sorting the checked objects based on results of measurement provided by the measuring device, wherein the measuring device includes the load cell unit according to any of claims 12 through 23; and a measuring conveyor which is supported by the load cell unit and transfers the checked objects.

Also, the invention recited in claim 25 is directed to a balance which includes: the load cell unit according to any of claims 12 through 23; and a pan which is supported by the load cell and loads a measured object.

Effects of the Invention

According to the invention recited in claims 1 through 9, the thin strain generating portions have a higher thermal resistance than the other portions in the strain generating element, so that a portion interposed between adjacent strain generating portions does not easily fall under ambient thermal influences. Thus, the temperature sensor provided in the portion interposed between the adjacent strain generating portions can accurately and reliably detect the temperature of the strain generating element.

As a result, the zero compensation element can achieve rough correction, by compensating the zero of the bridge circuit while accurately reflecting the temperature of the strain generating element. Also, the signal processor can calculate the amount of change in zero which is roughly corrected, based on the temperature of the strain generating element which is accurately and reliably detected, and further, can minutely correct an output of the bridge circuit which is roughly corrected based on the calculated amount of change. Thus, software compensation of zero can be further provided to an output of the bridge circuit to which circuital (hardware) compensation of zero is provided. Accordingly, it is possible to further improve the output accuracy of the bridge circuit, and to further improve the repeatability of processes for weight measurement which are to be performed by the load cell unit.

In particular, according to the invention as recited by claim 2, it is possible to detect the temperature of the strain generating element based on change in resistance of the thermal sensitive resistor.

In particular, according to the invention as recited by claim 3, the thermal sensitive resistor is connected in series with the input side of the bridge circuit. As a result, the thermal sensitive resistor can be used as not only a sensitivity compensator for compensating for change in modulus of longitudinal elasticity of the strain generating element which is caused due to temperature change, in order to correct an output of the bridge circuit, but also a temperature sensor for the strain generating element. Accordingly, it is possible to reduce the number of components of the load cell unit, to thereby reduce the manufacturing costs of the load cell unit.

In particular, according to the invention as recited by claim 5, a strain gauge of a temperature/sensitivity compensated type is used as the strain gauge. As a result, it is possible to compensate for change in output of the bridge circuit which is caused due to change in modulus of longitudinal elasticity of the strain generating element without using an element for sensitivity compensation such as a thermal sensitive resistor. Accordingly, a circuit structure near the bridge circuit can be simplified.

In particular, according to the invention as recited by claim 9, the amount of change in zero after rough correction can be easily calculated by second- or higher-order approximation, and reduce calculating costs associated with minute correction.

According to the invention as recited by claim 10, circuital (hardware) and software compensation of zero is provided to the bridge circuit of the load cell unit. As a result, it is possible to compute the weight of each of checked objects based on an output of the bridge circuit which is controlled with high accuracy. Accordingly, even in a case where a measurement interval is so short that correction of zero can not be achieved for each times of measurement such as a case where weights of checked objects which are being transferred by a measuring conveyor are measured, it is possible to measure the weight of each of the checked objects with enhanced repeatability.

Also, according to the invention as recited by claim 10, the weight of each of checked objects can be computed based on an output of the bridge circuit which is controlled with high accuracy, so that the minimum scale interval relative to a rated capacity of the load cell unit can be set to a smaller value. Accordingly, even in a case where a load of the measuring conveyor (tare) which is greater in weight than each of checked objects is imposed on the load cell unit so that the rated capacity of the load cell unit should be set to be too large for the checked object, it is possible to improve the measurement accuracy (measurement resolution) for the checked objects.

Also, according to the invention as recited by claim 11, circuital and software compensation of zero is provided to the bridge circuit of the load cell unit. As a result, the weight of each of measured objects can be computed based on an output of the bridge circuit which is controlled with high accuracy. Accordingly, it is possible to set the minimum scale interval relative to the rated capacity of the load cell unit to a smaller value, which results in further improvement in the measurement accuracy (measurement resolution) for measured objects.

According to the invention as recited by claims 12, 13, and 18 through 23, the zero of the bridge circuit is compensated by the zero compensation element and the output sensitivity of the bridge circuit is compensated by the strain gauge, so that an output of the bridge circuit (bridge output) is roughly corrected. Also, the signal processor minutely corrects the bridge output which is roughly corrected based on results of detection provided by the temperature sensor, to further compensate the zero and the output sensitivity of the bridge circuit. Thus, two types of zero compensation and two types of temperature/sensitivity compensation are provided to the bridge circuit.

Further, according to the invention as recited by claims 12, 13, and 18 through 23, the thin strain generating portions have a higher thermal resistance than the other portions of the strain generating element, so that a portion interposed between adjacent strain generating portions does not easily fall under ambient thermal influences.

Thus, the zero compensation element provided in the portion interposed between the adjacent strain generating portions can compensate the zero of the bridge circuit while accurately reflecting the temperature of the strain generating element. Also, the temperature sensor provided in the portion interposed between the adjacent strain generating portions can accurately and reliably detect the temperature of the strain generating element.

As a result, the signal processor can minutely correct the bridge output which is roughly corrected with respect to the zero and the output sensitivity, based on the temperature of the strain generating element which is accurately and reliably detected. That is, software compensation of zero and sensitivity can be further provided to the bridge circuit to which circuital (hardware) compensation of zero and sensitivity is provided. Accordingly, the output accuracy of the bridge circuit can be further improved, which results in further improvement in the repeatability of results of weight measurement provided by the load cell unit.

In particular, according to the invention as recited by claim 13, the temperature of the strain generating element can be detected based on change in resistance of the thermal sensitive resistor.

According to the invention as recited by claims 14 through 18 and claims 21 through 23, the zero of the bridge circuit is compensated by the zero compensation element and the output sensitivity of the bridge circuit is compensated by the thermal sensitive resistor, so that an output of the bridge circuit (bridge output) is roughly corrected. Also, the signal processor minutely corrects the bridge circuit which is roughly corrected based on the temperature of the strain generating element which is detected by the thermal sensitive resistor, to further compensate the zero and the output sensitivity of the bridge circuit.

Also, according to the invention as recited by claims 14 through 18 and claims 21 through 23, the thin strain generating portions have a higher thermal resistance than the other portions of the strain generating element, so that a portion interposed between adjacent strain generating portions does not easily fall under ambient thermal influences.

Thus, the zero compensation element provided in the portion interposed between the adjacent strain generating portions can compensate the zero of the bridge circuit while accurately reflecting the temperature of the strain generating element. Also, the thermal sensitive resistor which is provided in the portion interposed between the adjacent strain generating portions and can be also used as a temperature sensor can roughly correct the output sensitivity of the bridge circuit while accurately reflecting the temperature of the strain generating element, and further, can accurately and reliably detect the temperature of the strain generating element.

As a result, the signal processor can minutely correct the bridge output which is roughly corrected with respect to the zero and the output sensitivity, based on the temperature of the strain generating element which is accurately and reliably detected. Accordingly, the output accuracy of the bridge circuit can be further improved, and can further improve the repeatability of results of weight measurement provided by the load cell unit.

According to the invention as recited by claim 17 and claims 21 through 23, the zero of the bridge circuit is compensated by the zero compensation element and the output sensitivity of the bridge circuit is compensated by the variable gain amplifier, so that an output of the bridge circuit (bridge output) is roughly corrected. Also, the compensation calculator minutely corrects the bridge output which is roughly corrected based on the temperature of the strain generating element, and further compensate the zero and the output sensitivity of the bridge circuit.

Also, according to the invention as recited by claim 17 and claims 21 through 23, the thin strain generating portions have a higher thermal resistance than the other portions of the strain generating element, so that a portion interposed between adjacent strain generating portions does not easily fall under ambient thermal influences.

Thus, the zero compensation element provided in the portion interposed between the adjacent strain generating portions can compensate the zero of the bridge circuit while accurately reflecting the temperature of the strain generating element. Also, when the selecting part is switched to the side of the bridge output, the variable gain amplifier can roughly correct the output sensitivity of the bridge circuit while accurately reflecting the temperature of the strain generating element based on change in resistance of the thermal sensitive resistor provided in the portion interposed between the adjacent strain generating portions. Further, when the selecting part is switched to the side of the reference output, the compensation calculator can accurately and reliably detect the temperature of the strain generating element.

As a result, the compensation calculator can minutely correct the bridge output which is roughly corrected with respect to the zero and the output sensitivity, based on the temperature of the strain generating element which is accurately and reliably detected. Accordingly, the output accuracy of the bridge circuit can be further improved, and the repeatability of results of weight measurement provided by the load cell unit can be further improved.

In particular, according to the invention as recited by claim 21, zero compensation by second- or higher-order approximation can be provided to the bridge output which is roughly corrected. Accordingly, minute correction can be accomplished at low costs.

In particular, according to the invention as recited by claim 22, compensation of output sensitivity by second- or higher-order approximation can be provided to the bridge output which is roughly corrected. Accordingly, minute correction can be accomplished at low costs.

In particular, according to the invention as recited by claim 23, compensation of zero and output sensitivity by second- or higher-order approximation can be provided to the bridge output which is roughly corrected. Accordingly, minute correction can be accomplished at low costs.

Also, according to the invention as recited by claim 24, circuital (hardware) compensation of zero and output sensitivity and software compensation of zero and output sensitivity are provided to the bridge circuit of the load cell unit, so that the weight of each of checked objects can be calculated based on the bridge output which is controlled with high accuracy. Accordingly, even in a case where a measuring conveyor which is greater in weight than each of the checked objects is supported by the load cell unit such as a case of a weight checker, the amount of change in bridge output which is caused due to temperature change can be reduced, to thereby measured .

Also, according to the invention as recited by claim 25, circuital (hardware) compensation of zero and output sensitivity and software compensation of zero and output sensitivity are provided to the bridge circuit of the load cell unit, so that the weight of each of checked objects can be calculated based on the bridge output which is controlled with high accuracy. Accordingly, the minimum scale interval relative to the rated capacity of the load cell unit can be set to a smaller value, which results in further improvement in the measurement accuracy (measurement resolution) for measured objects.

Brief Description of Drawings

Fig. 1 is a front view for showing an example of a device to which a load cell unit according to first through third preferred embodiments of the present invention is applied.

Fig. 2 is a front view for showing an example of a structure of a hardware of the load cell unit according to the first through third preferred embodiments of the present invention.

Fig. 3 is a plan view for showing the example of the structure of the hardware of the load cell unit according to the first through third preferred embodiments of the present invention.

Fig. 4 is a plan view for showing an example of a structure of a strain gauge according to the first through third preferred embodiments of the present invention.

Fig. 5 is a block diagram of a circuit of a load cell unit according to the first preferred embodiment.

Fig. 6 is a view for showing a relationship between the zero of a bridge circuit and the temperature of a strain generating element.

Fig. 7 is a block diagram of a circuit of a load cell unit according to the second preferred embodiment.

Fig. 8 is a block diagram of a circuit of a load cell unit according to the third preferred embodiment.

Fig. 9 is a front view for showing an example of a weight checker according to fourth through sixth preferred embodiments of the present invention.

Fig. 10 is a front view for showing an example of a structure of a hardware of a load cell unit according to the fourth through sixth preferred embodiments of the present invention.

Fig. 11 is a plan view for showing the example of the structure of the hardware of the load cell unit according to the fourth through sixth preferred embodiments of the present invention.

Fig. 12 is a plan view for showing an example of a structure of a strain gauge according to the fourth through sixth preferred embodiments of the present invention.

Fig. 13 is a block diagram of a circuit of the load cell unit according to the fourth preferred embodiment.

Fig. 14 is a view for showing a relationship between the zero of a bridge circuit and the temperature of the strain generating element.

Fig. 15 is a view for showing a relationship between the output sensitivity of the bridge circuit and the temperature of the strain generating element.

Fig. 16 is a block diagram of a circuit of a load cell unit according to the fifth preferred embodiment.

Fig. 17 is a block diagram of a circuit of a load cell unit according to the sixth preferred embodiment.

Fig. 18 is a block diagram of a circuit of a load cell unit according to the seventh preferred embodiment.

Fig. 19 is a view for explaining timing for switching between a bridge-output detection mode and a temperature detection mode in the seventh preferred embodiment.

Fig. 20 is a view for explaining timing for switching between a bridge-output detection mode and a temperature detection mode in the seventh preferred embodiment.

Fig. 21 is a front view for showing another example of a device to which the load cell unit according to the preferred embodiments of the present invention is applied.

Fig. 22 is a block diagram of a circuit of a load cell unit according to a modification.

Fig. 23 is a front view for showing another example of a device to which the load cell unit according to the preferred embodiments of the present invention is applied.

Best Mode for Carrying Out the Invention

Hereinafter, preferred embodiments of the present invention will be described in detail with reference to accompanying drawings.

<1. First preferred embodiment>

<1.1. Structure of weight checker>

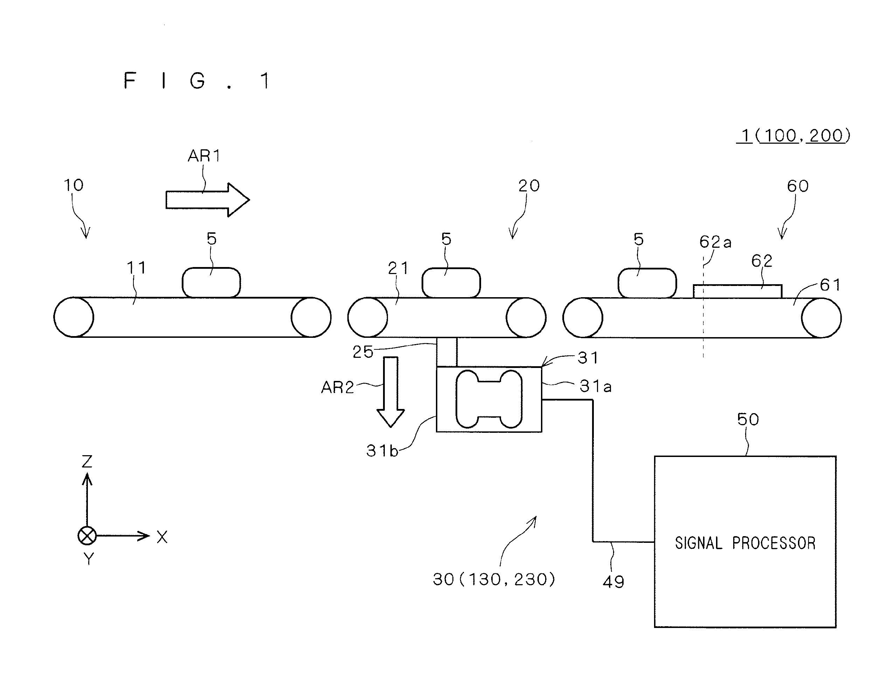

Fig. 1 is a front view for showing an example of an overall structure of a weight checker 1 according to a first preferred embodiment. The weight checker 1 measures weights of products which are transferred after being subjected to an upstream process such as a packing process, for example, and sorts the products based on results of the measurement. As shown in Fig. 1, the weight checker 1 principally includes a catching device 10, a measuring device 20, and a sorting device 60. It is noted that in Fig. 1 and subsequent figures, an XYZ rectangular coordinate system in which a Z-axis direction is a vertical direction and an X-Y plane is a horizontal plane is included as needed, in order to clarify respective directions in the figures.

The catching device 10 includes a catching conveyor 11 as shown in Fig. 1. The catching device 10 transfers a checked object 5 which is received from a device placed upstream relative to a transfer direction AR1 of the checked object 5, to the measuring device 20.

The measuring device 20 measures a weight of the checked object 5 while transferring the checked object (measured object) 5 which is received from the catching device 10. As shown in Fig. 1, the measuring device 20 principally includes a measuring conveyor 21 and a load cell unit 30.

The measuring conveyor 21 is a transfer part for transferring each of the checked objects 5 which are received from the catching device 10, to the sorting device 60. Also, the measuring conveyor 21 is supported by a strain generating element 31 of the load cell unit 30 via a mounting part 25, as shown in Fig. 1. As such, the strain generating element 31 receives a load of the measuring conveyor 21 and a load of the checked object 5 which is transferred onto the measuring conveyor 21.

The load cell unit 30 is a unit for measuring a weight of the checked object 5 which is an object being measured, based on a load signal. Details of a structure of the load cell unit 30 will be given later.

The sorting device 60 sorts the checked objects 5 based on results of measurement of the checked objects 5 which are provided by the measuring device 20. As shown in Fig. 1, the sorting device 60 principally includes a transfer conveyor 61 and a lever 62. The transfer conveyor 61 is a transfer part for transferring each of the checked objects 5 which is received from the measuring device 20 after weight measurement, along the transfer direction AR1. The lever 62 is able to turn around an axis 62a which is substantially perpendicular to the transfer direction AR1, and sorts the checked objects 5 which are transferred by the transfer conveyor 61.

For example, in a case where the results of measurement provided by the measuring device 20 are within the range of conforming products, the lever 62 is caused to turn such that the length thereof becomes substantially parallel to the transfer direction AR1 and the lever 62 is placed on the side of the transfer conveyor 61. As a result, the checked objects 5 are transferred to a conforming product line (not shown) which is laid on the extension of the transfer direction AR1.

On the other hand, in a case where the results of measurement provided by the measuring device 20 are not within the range of conforming products, the lever 62 is caused to turn so as to block transfer of the checked objects 5. As a result, the checked objects 5 which have arrived at the lever 62 move along the lever 62, and are transferred to a non-conforming product line (not shown) which is laid on the side of the transfer conveyor 61.

<1.2 Structure of load cell unit>

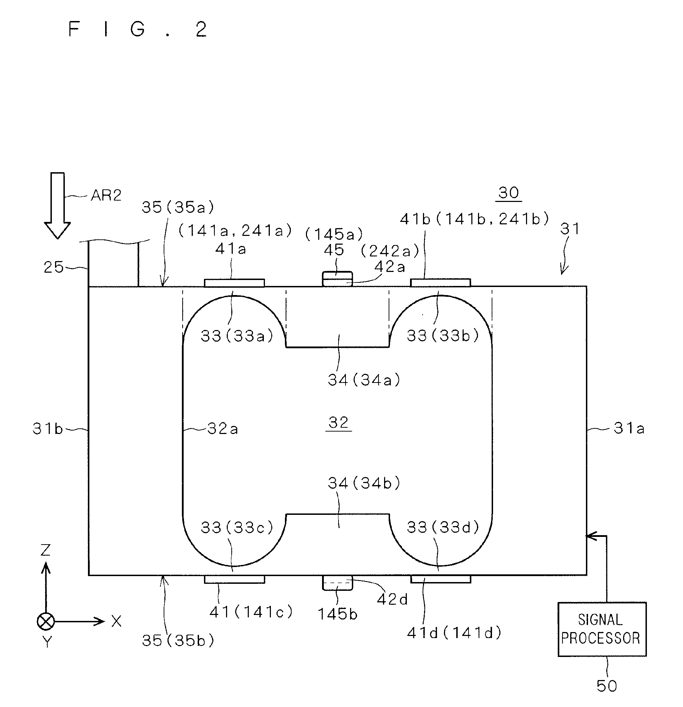

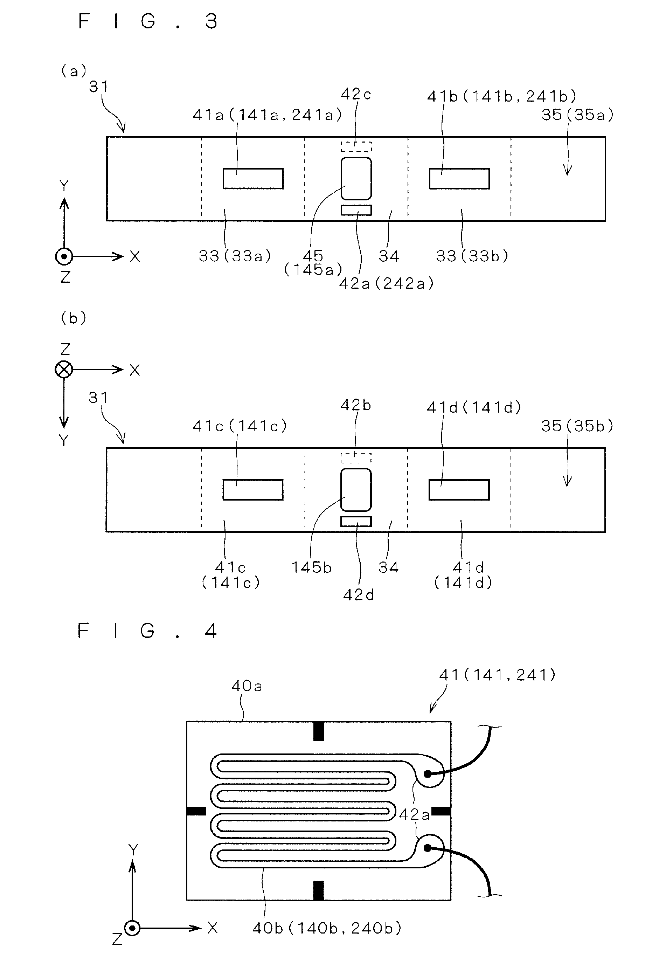

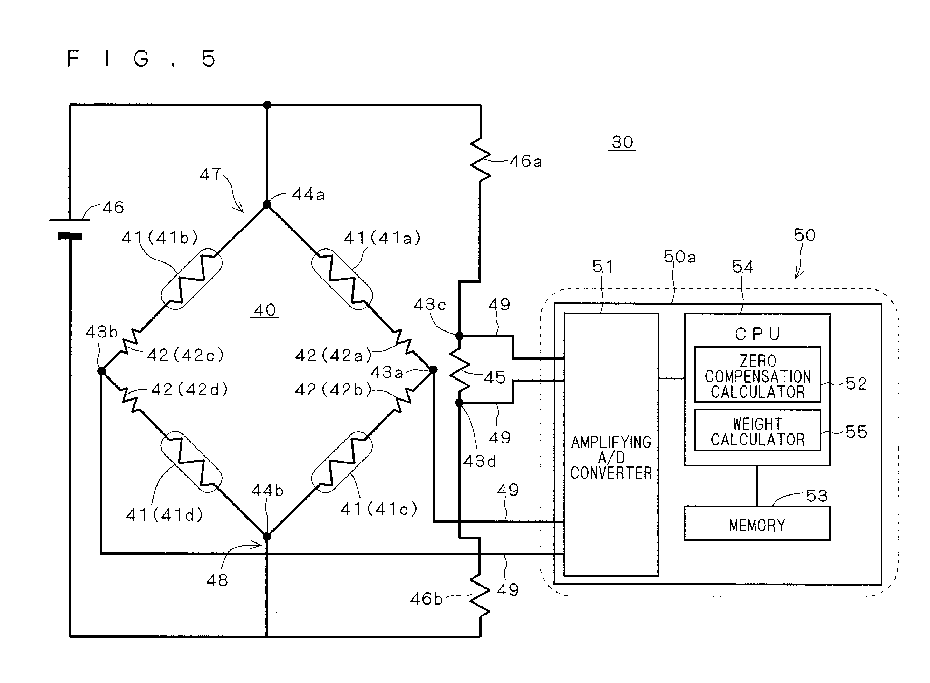

Figs. 2 and 3 are a front view and a plan view, respectively, for showing an example of a structure of a hardware of the load cell unit 30. Also, Fig. 4 is a plan view for showing an example of a structure of each of strain gauges 41. Further, Fig. 5 is a block diagram of a circuit of the load cell unit 30. As shown in Figs. 2 through 5, the load cell unit 30 principally includes the strain generating element 31, a plurality of strain gauges 41 (41a through 41d), a zero compensation element 42, a thermal sensitive resistor 45, and a signal processor 50.

The strain generating element 31 is a metal block having a through hole 32 as shown in Fig. 2, and is an elastic material formed of a metal such as an aluminum alloy or stainless steel, for example. The strain generating element 31 includes a plurality (four in the present preferred embodiment) of thin strain generating portions 33 (first through fourth strain generating portions 33a through 33d) which are interposed between an inner wall 32a and an outer surface 35 (which includes first and second surfaces 35a and 35b) of the through hole 32.

Out of the plurality of strain generating portions 33, two adjacent strain generating portions 33a and 33b are provided at the side closer to the first surface (upper surface) 35a which is substantially perpendicular to a load direction AR2 in which loads of the checked objects (measured objects) 5 are imposed, and receives loads of the checked objects 5. On the other hand, out of the plurality of strain generating portions 33, two adjacent strain generating portions 33c and 33d are provided at the side closer to the second surface (lower surface) 35b which is substantially perpendicular to the load direction AR2 and opposes the first surface 35a with the through hole 32 being provided therebetween.

Further, in a position between the first and second strain generating portions 33a and 33b, a first thick portion 34a which is thicker than each of the first and second strain generating portions 33a is formed. Also, in a position between the third and fourth strain generating portions 33c and 33d, a second thick portion 34b which is thicker than each of the third and fourth strain generating portions 33c and 33d is formed.

Because of formation of the foregoing portions, a fixed end 31a of the strain generating element 31 is fixed within the measuring device 20, and when a load is imposed on a free end 31 b, a compressive stress is caused at the side closer to the first surface (upper surface) 35a in the first strain generating portion 33a and at the side closer to the second surface (lower surface) 35b in the fourth strain generating portion 33d while a tensile stress is caused at the side closer to the first surface 35a in the second strain generating portion 33b and at the side closer to the second surface 35b in the third strain generating portion 33c. Accordingly, mechanical strain is generated in each of the strain generating portions 33a through 33d.

Also, when a load is imposed on the free end 31 b, the strain generating element 31 is deformed to be in the shape of an almost parallelogram and functions as a Roverbal mechanism. As such, moment acting on the strain generating element 31 is cancelled, and as a result, the same value is detected as a weight of the checked object 5 regardless of the position of the object 5 on the measuring conveyor 21. Thus, the strain generating element 31 forms a Roverbal mechanism with the plurality of strain generating portions 33 which are provided between the free end 31b on which a load is imposed and the fixed end 31a.

On the outer surface 35, the strain gauges 41 (41a through 41d) are placed in positions respectively opposing the plurality of strain generating portions 33, as shown in Figs. 2 and 3. More specifically, first and second strain gauges 41 a and 41 b are adhered to the first surface 35a in positions opposing the first and second strain generating portions 33a and 33b, respectively, and third and fourth strain gauges 41c and 41d are adhered in positions opposing the third and fourth strain generating portions 33c and 33d, respectively.

Each of the strain gauges 41 (41 a through 41d) is a resistive element 40b such as a photo-etched resistive foil which is formed in a meandering shape on a base material 40a made of a thin electrical insulator (polyimide resin, for example), as shown in Fig. 4. Accordingly, when strain is generated in each of the strain generating portions 33 (33a through 33d) and is transmitted to the resistive element 40b via the base material 40a, the resistance of the resistive element 40b changes in accordance with the value of the strain.

Meanwhile, according to the present preferred embodiment, a strain gauge of a temperature/sensitivity compensated type is used as each of the strain gauges 41. As such, in the present preferred embodiment, the strain generating element 31 thermally expands along with temperature rise in accordance with a coefficient of linear expansion thereof. Also, the modulus of longitudinal elasticity (Young's modulus) of the strain generating element 31 decreases along with temperature rise, and the value of strain caused by the same stress increases.

In this regard, the resistive element 40b of the strain gauge 41 according to the present preferred embodiment is formed of a metal such as a nickel-chromium (Ni-Cr) alloy, for example. Also, a ratio between nickel and chromium in the resistive element 40b of the strain gauge 41 is adjusted and a predetermined heat treatment is performed on the resistive element 40b such that a strain-sensitivity/temperature coefficient of the resistive element 40b is a negative value and the modulus of longitudinal elasticity of the resistive element 401b increases along with temperature rise.

Accordingly, even in a case where the strain generating element 31 expands due to temperature rise and the value of strain in the strain gauge 41 which is generated by the same load increases due to temperature rise, the resistance of the strain gauge 41 adhered to the strain generating element 31 is substantially the same within a predetermined temperature range. Thus, the strain gauge 41 of a temperature/sensitivity compensated type can compensate for thermal expansion of the strain generating element 31 which expands and contracts due to temperature change, to thereby suppress change in zero of the bridge circuit 40, and also can compensate an amount of change in modulus of longitudinal elasticity which is caused due to temperature change, to thereby suppress variation in output of the bridge circuit 40.

The bridge circuit 40 outputs the weight of the checked object 5 which is an object being measured, as a load signal. As shown in Fig. 5, the bridge circuit 40 principally includes the first through fourth strain gauges 41a through 41d. More specifically, (1) the first strain gauge 41 a is placed between a positive input terminal 44a and a positive output terminal 43a, (2) the second strain gauge 41b is placed between the positive input terminal 44a and a negative output terminal 43b, (3) the third strain gauge 41c is placed between the positive output terminal 43a and a negative input terminal 44b, and (4) the fourth strain gauge 41d is placed between the negative output terminal 43b and the negative input terminal 44b. Those strain gauges 41 (41a through 41d) form a full bridge. Then, a voltage between the output terminals 43a and 43b is detected as an output of the bridge circuit 40.

The zero compensation element 42 (42a through 42d) forms a resistive element (copper wire or nickel wire) which has a high temperature coefficient of resistance into the shape of a winding, and is placed on any of sides of the bridge circuit 40. Thus, any one of the zero compensation elements 42a through 42d shown in Fig. 5 is used and is connected in series with a corresponding one of the strain gauges 41 (41a through 41d). Meanwhile, the first zero compensation element 42a (refer to Fig. 2) is mounted in intimate contact with the first thick portion 34a located at the side closer to the first surface 35a, the second zero compensation element 42b (not shown) is mounted in intimate contact with the second thick portion 34b located at the side closer to the second surface 35b, the third zero compensation element 42c (not shown) is mounted in intimate contact with the first thick portion 34a located at the side closer to the first surface 35a, and the fourth zero compensation element 42d (refer to Fig. 2) is mounted in intimate contact with the second thick portion 34b located at the side closer to the second surface 35b. Additionally, the zero compensation element 42 is not limited to a resistive element in the shape of a winding, and may be a chip resistor having the same resistance and the same temperature coefficient of resistance as the above-cited resistive element, for example.

Now, it should be noted that as each of the strain gauges 41 a, a strain gauge of a temperature/sensitivity compensated type is used as described above. Accordingly, the resistances of the strain gauges 41 when no load is imposed on the strain generating element 31 (unloaded state) is kept at substantially the same value even if ambient temperature of the strain generating element 31 changes. Therefore, in a case where respective properties (such as a resistance and a temperature coefficient of resistance, for example) of the strain gauges 41 are substantially the same, the zero of the bridge circuit 40 are kept at substantially the same value even if ambient temperature changes.

However, in a case where there are individual differences among the strain gauges 41 or in a case where respective conditions of contacts of the strain gauges 41 differ from one another, the zero of the bridge circuit 40 changes along with change in ambient temperature, and consequently, the results of measurement provided by the measuring device 20 are influenced by ambient temperature.

In contrast thereto, according to the present preferred embodiment, the zero compensation element 42 which conforms to the amount of change in zero which is caused due to temperature change is placed on any of sides of the bridge circuit 40, and is connected in series with a corresponding one of the strain gauges 41. As such, zero which changes along with temperature change is compensated in accordance with the temperature of the strain generating element 31, and an output of the bridge circuit 40 is roughly corrected to fall within a certain range.

Also, the thin strain generating portions 33 have a higher thermal resistance than the other portions of the strain generating element 31, so that a portion interposed between two strain generating portions 33 which are adjacent to each other (i.e., the thick portion 34) does not easily fall under ambient thermal influences. Consequently, the zero compensation element 42 provided on the thick portion 34 can compensate the zero of the bridge circuit 40 while accurately reflecting the temperature of the strain generating element 31.

Additionally, the arrangement of the zero compensation element 42 is not limited to any of the sides of the bridge circuit 40. The zero compensation element 42 may be placed on each of one side of the bridge circuit 40 and another side which is diagonal relative to the one side, for example. Thus, either the first and fourth zero compensation elements 42a and 42d or the second and third zero compensation elements 42b and 42c can be used as the zero compensation elements 42. In other words, provision of the zero compensation element 42 on at least one side or more of the bridge circuit 40 would suffice.

The thermal sensitive resistor 45 is a resistive element having a high temperature coefficient of resistance, like the zero compensation element 42. For the thermal sensitive resistor 45, a nickel (Ni)-, copper (Cu)-, or platinum (Pt)-based material is used, for example. As shown in Fig. 2, the thermal sensitive resistor 45 is mounted in intimate contact with the first thick portion 34a located at the side closer to the first surface 35a.

Also, as shown in Fig. 5, one end of the thermal sensitive resistor 45 is electrically connected with a temperature measuring terminal 43c and the other end is electrically connected with a temperature measuring terminal 43d. Further, the temperature measuring terminal 43c and the temperature measuring terminal 43d are electrically connected with a positive side and a negative side of a power source 46 via precision resistors 46a and 46b, respectively. Moreover, the thermal sensitive resistor 45 has a higher temperature coefficient of resistance than the precision resistors 46a and 46b.

Accordingly, the temperature of the strain generating element 31 can be calculated based on a voltage applied to the thermal sensitive resistor 45 (a voltage across the temperature measuring terminals 43c and 43d) and the resistance-temperature characteristic of the thermal sensitive resistor 45. In this manner, in the present preferred embodiment, the temperature of the strain generating element 31 is detected based on change in resistance of the thermal sensitive resistor 45, and the thermal sensitive resistor 45 is used as a temperature sensor.

Also, the thermal sensitive resistor 45 is in intimate contact with the thick portion 34 which does not easily fall under ambient thermal influences, so that the resistance of the thermal sensitive resistor 45 varies while accurately reflecting the temperature of the strain generating element 31. As such, the temperature of the strain generating element 31 is accurately and reliably detected based on change in resistance of the thermal sensitive resistor 45.

Meanwhile, a load of the checked object 5 and a load of the measuring conveyor 21 (tare) are imposed on the load cell unit 30 used in the weight checker 1. Also, the weight of the measuring conveyor 21 is larger than the weight of the checked object 5 in most cases. As such, one possible approach for enhancing an S/N ratio of a load signal output from the bridge circuit 40 in order to improve measurement accuracy for the checked object 5 is to increase a voltage supplied from the power source 46.

On the other hand, when a supplied voltage increases so that power compensation in the thermal sensitive resistor 45 increases, the thermal sensitive resistor 45 itself generates heat in some cases. This makes it difficult to accurately measure the temperature of the strain generating element 31 based on the thermal sensitive resistor 45.

However, according to the present preferred embodiment in which a strain gauge of a temperature/sensitivity compensated type is used, the thermal sensitive resistor 45 with the precision resistors 46a and 46b and the bridge circuit 40 are connected in parallel with the power source 46. Accordingly, a voltage supplied from the power source 46 is divided among the precision resistors 46a and 46b and the thermal sensitive resistor 45.

For this reason, it is possible to reduce heat generation of the thermal sensitive resistor 45 by adjusting the resistances of the precision resistors 46a and 46b and the thermal sensitive resistor 45. As a result, it is possible to improve the measurement accuracy for the checked object 5 while alleviating the problem of heat generation of the thermal sensitive resistor 45.

The signal processor 50 performs signal processing based on a signal (a load signal, for example) provided by the bridge circuit 40. As shown in Fig. 5, the signal processor 50 principally includes an amplifying A/D converter 51, a memory 53, and a CPU 54. and those components 51, 53, and 54 are provided on a signal processing board 50a.

The amplifying A/D converter 51 converts each of an output voltage of the bridge circuit 40 (a voltage between the output terminals 43a and 43b) and a voltage applied to the bridge circuit 40 (a voltage between the input terminals 44a and 44b) which are detected as analog signals, into digital signals. Then, the digital signals obtained after conversion are input to the CPU 54.

The memory 53 is a storage portion including a non-volatile memory, for example, and stores programs, variables, and the like. Also, the CPU 54 exercises control in accordance with the programs stored in the memory 53. Accordingly, the CPU 54 can perform conversion in the amplifying A/D converter 51, computation for zero compensation, weight computation, and the like, at predetermined timing in accordance with the programs.

In particular, as shown in Fig. 5, the CPU 54 of the signal processor 50 chiefly implements a computing function for zero compensation (assigned to a zero compensation calculator 52) and a weight computing function (assigned to a weight calculator 55) in accordance with the programs stored in the memory 53.

The zero compensation calculator 52 of the CPU 54 calculates the temperature of the strain generating element 31 based on results of detection provided by the thermal sensitive resistor 45, and also calculates an amount of change in zero of the bridge circuit 40 after rough correction, based on the calculated temperature. Also, the zero compensation calculator 52 minutely corrects the output of the bridge circuit 40 which is roughly corrected, based on the calculated amount of change in zero.

The weight calculator 55 of the CPU 54 calculates the weight of the checked object 5 based on an output of the bridge circuit 40 which is minutely corrected. The sorting device 60 performs a sorting process based on results of calculation of the weight calculator 55.

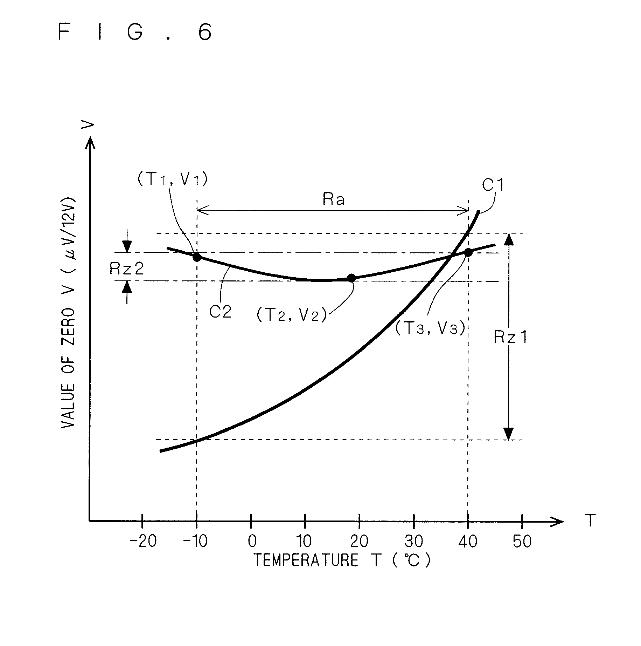

Fig. 6 is a view for showing a relationship between a value V of zero of the bridge circuit 40 and a temperature T of the strain generating element 31. A vertical axis in Fig. 6 represents the value V of zero (unit: $\mu$ V/12V) provided when a load of the checked object 5 is not imposed on the strain generating element 31 in a case where an excitation voltage (supplied voltage) provided from the power source 46 is set to a voltage Vs (Vs=12V in the present preferred embodiment). On the other hand, a horizontal axis in Fig. 6 represents the temperature T (unit:°C) of the strain generating element 31. Further, a curve C1 in Fig. 6 represents a relationship between the value V of zero provided when the zero compensation element 42 is not connected and the temperature T of the strain generating element 31, and a curve C2 in Fig. 6 represents a relationship between the value V of zero provided when the zero compensation element 42 is connected and the temperature T of the strain generating element 31.

It is known that the zero compensation element 42 is able to effectively compensate zero in a case where an amount of change in zero which is caused due to temperature change is linear (primary). However, as shown in Fig. 6, in a case where the temperature characteristic of the value V of zero in a predetermined temperature range Ra (-10≦T≦40, for example) has a certain curvature, zero compensation of the zero compensation element 42 can only better a varying range Rz of the value of zero from Rz1 to Rz2, and cannot reduce Rz to be smaller than Rz2. As a result, to merely use the zero compensation element 42 would have difficulties in further improving the repeatability of processes for weight measurement in the signal processor 50.

In view of the foregoing matters, according to the present preferred embodiment, the amount of change in zero of the bridge circuit 40 which is roughly corrected by the zero compensation element 42 is calculated by second- or higher-order approximation, and an output of the bridge circuit 40 is minutely corrected based on the calculated amount of change in zero. More specifically, (1) parameters required for minute correction of an output of the bridge circuit 40 are calculated, and (2) an output of the bridge circuit 40 is minutely corrected based on the parameters.

First, calculation of the parameters will be described by taking a case of second-order approximation as an example. Prior to mounting the load cell unit 30 onto the measuring device 20, the temperature characteristic of the amount of change in zero after rough correction is obtained. Specifically, in the bridge circuit 40 using the zero compensation element 42, the temperature T of the strain generating element 31 is caused to change to temperatures T1, T2, and T3 (all temperatures are within the temperature range Ra) while keeping the strain generating element 31 being unloaded, and outputs V1, V2, and V3 of the bridge circuit 40 which are provided at the temperatures T1, T2, T3, respectively, are obtained.

Subsequently, (T, V)=(T1, V1), (T2, V2), (T3, V3) is substituted into the following equation (1), and three resulting simultaneous equations are solved, to thereby calculate parameters a, b, and c. Then, the calculated parameters a, b, and c are stored in the memory 53.

$$V = a \cdot T \cdot T + b \cdot T + c \qquad \ldots \text{Equation (1)}$$

It is noted that the parameters a, b, and c are different from one another depending on individual differences among the strain gauges 41 or respective contact conditions of the strain gauges 41 even if the load cell units 30 include the same type of strain gauges 41. As such, the parameters a, b, and c should be calculated for each of the load cell units 30.

Next, minute correction using the parameters will be described. Prior to measuring the weight of the checked object 5, an output of the bridge circuit 40 and the temperature of the strain generating element 31 which are provided when the checked object 5 is not loaded onto the measuring conveyor 21, are obtained first. Subsequently, zero provided at the temperature is computed. The computed zero is stored in the memory 53.

Thereafter, the zero compensation calculator 52 obtains the amount of change in zero, which change is made after a predetermined time period passes from a time when zero is previously stored or after weight measurement is performed a predetermined number of times from a time when zero is previously stored, for each times of weight measurement if possible. Thus, the value of zero of the present moment is obtained by detecting the temperature T of the strain generating element 31 based on the thermal sensitive resistor 45 and substituting the result of detection into the above equation (1). Then, the zero compensation calculator 52 compensates an output of the bridge circuit 40 based on the amount of change in zero, which change is made from the time when zero is previously stored, to achieve minute correction.

<1.3 Advantages of load cell unit according to the first preferred embodiment>

As described above, according to the first preferred embodiment, software compensation of zero can be further provided to an output of the bridge circuit 40 to which circuital (hardware) compensation of zero is provided by the zero compensation element 42. Also, the temperature T of the strain generating element 31 used for software compensation of zero is accurately and reliably detected by the thermal sensitive resistor 45 which is in intimate contact with the thick portion 34.

Accordingly, the output accuracy of the bridge circuit 40 can be further improved. Thus, the repeatability of processes for weight measurement performed by the bridge circuit 40 can be further improved. As a result, even in a case where a measurement interval is so short that correction of zero can not be achieved for each times of measurement such as a case where the weights of the checked objects 5 being transferred are to be measured, the weights of the checked objects 5 can be measured with enhanced repeatability.

Also, according to the first preferred embodiment, each of the weights of the checked objects 5 can be computed based on an output of the bridge circuit 40 which is controlled with high accuracy, and the minimum scale interval relative to a rated capacity of the load cell unit 30 can be set to be smaller. Accordingly, even in a case where the load of the measuring conveyor 21 (tare) which is greater in weight than the checked object 5 is imposed on the load cell unit 30 and a rated capacity of the load cell should be set to be too large for the checked object 5, the measurement accuracy (measurement resolution) for the checked object 5 can be improved.

Further, according to the first preferred embodiment, a strain gauge of a temperature/sensitivity compensated type is used, and the thermal sensitive resistor 45 with the precision resistors 46a and 46b and the bridge circuit 40 are connected in parallel with the power source 46. For this reason, it is possible to reduce heat generation of the thermal sensitive resistor 45 by adjusting the resistances of the precision resistors 46a and 46b and the thermal sensitive resistor 45. As a result, accurate temperature detection is possible, and further, a time period required for stabilization of a voltage across the thermal sensitive resistor 45 (i.e., an output of the thermal sensitive resistor 45) at a time of turn-on can be shortened, so that the measurement accuracy for the checked object 5 can be improved.

<2. Second preferred embodiment>

Next, a second preferred embodiment of the present invention will be described. It is noted that a weight checker 100 according to the second preferred embodiment is identical to the weight checker 1 according to the first preferred embodiment except that a structure of a bridge circuit 140 in a load cell unit 130 is different. Thus, the following description will deal largely with the differences.

Additionally, in the following description, the same components as those in the weight checker 1 according to the first preferred embodiment are denoted by the same reference numerals. Since the components denoted by the same reference numerals as in the first preferred embodiment have already been described in the first preferred embodiment, the description thereof will be omitted in the present preferred embodiment.

<2.1 Structure of load cell unit>

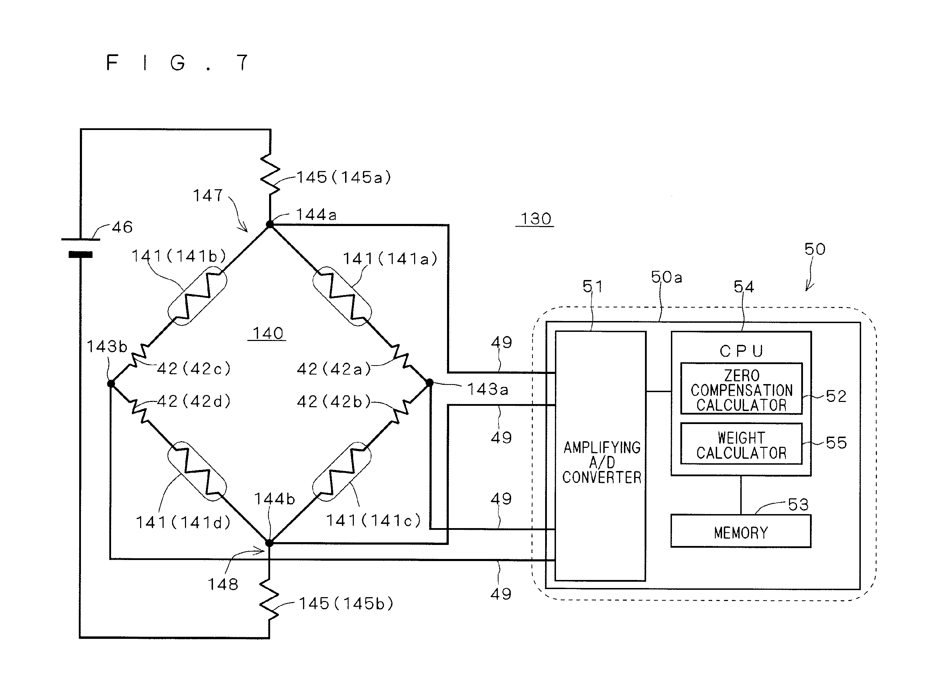

Figs. 2 and 3 are a front view and a plan view, respectively, for showing an example of a structure of a hardware of the load cell unit 130. Also, Fig. 4 is a plan view of an example of a structure of each of strain gauges 141. Further, Fig. 7 is a block diagram of a circuit of the load cell unit 130. As shown in Figs. 2 through 4 and 7, the load cell unit 130 principally includes the strain generating element 31, a plurality of strain gauges 141 (141a through 141d), the zero compensation element 42, a thermal sensitive resistor 145, and the signal processor 50.

On the outer surface 35, the strain gauges 141 (141a through 141d) are placed in positions respectively opposing the plurality of strain generating portions 33, as shown in Figs. 2 and 3. More specifically, first and second strain gauges 141a and 141b are adhered to the first surface 35a in positions opposing the first and second strain generating portions 33a and 33b, respectively, and third and fourth strain gauges 141c and 141d are adhered in positions opposing the third and fourth strain generating portions 33c and 33d, respectively.

Each of the strain gauges 141 (141a through 141d) is a resistive element 140b such as a photo-etched resistive foil which is formed in a meandering shape on a base material 140a composed of a thin electrical insulator (a polyimide resin, for example), as shown in Fig. 4. Accordingly, when strain is generated in each of the strain generating portions 33 (33a through 33d) and is transmitted to the resistive element 140b via the base material 140a, the resistance of the resistive element 140b varies in accordance with the value of the strain.

Further, according to the present preferred embodiment, a strain gauge of a temperature self-compensated type is used as each of the strain gauges 141. Specifically, the resistive element 140b of the strain gauge 141 is formed of a metal such as a copper-nickel (Cu-Ni) alloy, for example. Also, predetermined heat treatment is performed on the resistive element 140b of the strain gauge 141 such that a temperature coefficient of resistance of the resistive element 140b is a predetermined negative value which conforms to a coefficient of linear expansion of the strain generating element 31.

Accordingly, as the temperature of the strain generating element 31 increases, the gauge lengths of the strain gauges 41 adhered to the strain generating element 31 extend by expansion of the strain generating element 31 and the temperature coefficient of resistance of the resistive element 40b decreases. For this reason, the resistances of the strain gauges 141 adhered to the strain generating element 31 are substantially the same within a predetermined temperature range. In this manner, the strain gauges 141 of a temperature self-compensated type compensate for thermal expansion of the strain generating element 31 which expands and contracts due to temperature change, to thereby suppress change in zero of the bridge circuit 140.

The bridge circuit 140 outputs the weight of the checked object 5 which is an object being measured, as a load signal. As shown in Fig. 7, the bridge circuit 140 principally includes the first through fourth strain gauges 141 a through 141 d. More specifically, (1) the first strain gauge 141a is placed between a positive input terminal 144a and a positive output terminal 143a, (2) the second strain gauge 141b is placed between the positive input terminal 144a and a negative output terminal 143b, (3) the third strain gauge 141c is placed between the positive output terminal 143a and a negative input terminal 144b, and (4) the fourth strain gauge 141d is placed between the negative output terminal 143b and the negative input terminal 144b. Those strain gauges 141 (141a through 141 d) form a full bridge. Then, a voltage between the output terminals 143a and 143b is detected as an output of the bridge circuit 140.

The zero compensation element 42 (42a through 42d) forms a resistive element (copper wire or nickel wire) which has a high temperature coefficient of resistance into the shape of a winding, and is placed on any of sides of the bridge circuit 140. Thus, any one of zero compensation elements 42a through 42d shown in Fig. 7 is used and is connected in series with a corresponding one of the strain gauges 141 (141a, 141 b, 141 c, and 141d). Meanwhile, the first zero compensation element 42a (refer to Fig. 2) is mounted in intimate contact with the first thick portion 34a located at the side closer to the first surface 35a, the second zero compensation element 42b (not shown) is mounted in intimate contact with the second thick portion 34b located at the side closer to the second surface 35b, the third zero compensation element 42c (not shown) is mounted in intimate contact with the first thick portion 34a located at the side closer to the first surface 35a, and the fourth zero compensation element 42d (refer to Fig. 2) is mounted in intimate contact with the second thick portion 34b located at the side closer to the second surface 35b. Additionally, the zero compensation element 42 is not limited to a resistive element in the shape of a winding, and may be a chip resistor having the same resistance and the same temperature coefficient of resistance as the above-cited resistive element, for example.

Now, it should be noted that as each of the strain gauges 141, a strain gauge of a temperature self-compensated type is used as described above. Accordingly, the resistance of each of the strain gauges 141 when no load is imposed on the strain generating element 31 (unloaded state) is kept at substantially the same value even if ambient temperature of the strain generating element 31 changes. Therefore, in a case where respective properties (such as a resistance and a temperature coefficient of resistance, for example) of the strain gauges 141 are substantially the same, the zero of the bridge circuit 140 is kept at substantially the same value even if ambient temperature changes.

However, in a case where there are individual differences among the strain gauges 141 or in a case where respective conditions of contacts of the strain gauges 141 differ from one another, the zero of the bridge circuit 140 changes along with change in ambient temperature, and consequently, the results of weight measurement provided by the measuring device 20 are influenced by ambient temperature.

In contrast thereto, according to the present preferred embodiment, the zero compensation element 42 which conforms to the amount of change in zero which is caused due to temperature change is placed on any of sides of the bridge circuit 140, and is connected in series with a corresponding one of the strain gauges 141. As such, zero which changes along with temperature change is compensated in accordance with the temperature of the strain generating element 31, and an output of the bridge circuit 140 is roughly corrected to fall within a certain range.

Also, the thin strain generating portions 33 have a higher thermal resistance than the other portions of the strain generating element 31, so that a portion interposed between two strain generating portions 33 which are adjacent to each other (i.e., the thick portion 34) does not easily fall under ambient thermal influences. Consequently, the zero compensation element 42 provided on the thick portion 34 can compensate the zero of the bridge circuit 140 while accurately reflecting the temperature of the strain generating element 31.

Additionally, the location of the zero compensation element 42 is not limited to any of the sides of the bridge circuit 40. The zero compensation element 42 may be placed on each of one side of the bridge circuit 140 and another side which is diagonal relative to the one side, for example. Thus, either the first and fourth zero compensation elements 42a and 42d or the second and third zero compensation elements 42b and 42c can be used as the zero compensation elements 42. In other words, provision of the zero compensation element 42 on at least one side or more of the bridge circuit 40 would suffice.

Each of thermal sensitive resistors 145 (145a and 145b) is a resistive element having a high temperature coefficient of resistance, like the zero compensation element 42. For the first thermal sensitive resistor 145a and the second thermal sensitive resistor 145b, a nickel (Ni)-based material and a copper (Cu)-based material are used, respectively, for example.

As shown in Fig. 2, the first thermal sensitive resistor 145a and the second thermal sensitive resistor 145b are mounted in intimate contact with the first thick portion 34a located at the side closer to the first surface 35a and the second thick portion 34b located at the side closer to the second surface 35b, respectively. Also, as shown in Fig. 7, the first thermal sensitive resistor 145a and the second thermal sensitive resistor 145b are electrically connected with the terminal 144a on a positive input side 147 of the bridge circuit 140 and the terminal 144b on a negative input side 148 of the bridge circuit 140, respectively.

Now, assuming that a stress acting on the strain generating element 31 is $\sigma$ and the modulus of longitudinal elasticity of the strain generating element 31 is E, the value $\varepsilon 1$ of strain caused in the strain generating portions 33 can be obtained by the following equation (2).

$$\varepsilon 1 = \sigma / E \qquad \ldots \text{Equation (2)}.$$

Also, assuming that the value of strain in each of the strain gauges 141 which is caused by a stress is $\varepsilon 2$, the resistance of each of the strain gauges 141 is R, and the amount of change in resistance of each of the strain gauges 141 which is caused by a stress is $\Delta R$, the gauge factor of each of the strain gauges 141 can be expressed by the following equation (3).

$$K = \Delta R / (R \cdot \varepsilon 2) \qquad \ldots \text{Equation (3)}.$$

Then, if $\varepsilon 1$ of each of the strain generating portions 33 and the value $\varepsilon 2$ of strain in each of the strain gauges 141 which is adhered to the outer surface 35 (35a or 35b) of the strain generating portion 33, are substantially identical to each other, the amount $\Delta R$ of change in resistance of each of the strain gauges 141 can be expressed by the following equation (4).

$$\Delta R = R \cdot \sigma \cdot K / E \qquad \ldots \text{Equation (4)}.$$

It should be noted that the modulus E of longitudinal elasticity decreases along with rise in ambient temperature in most cases. Thus, even if a load imposed on the strain generating element 31 is the same, strain caused in each of the strain generating portions 33 increases along with temperature rise.

Accordingly, as the modulus E of longitudinal elasticity decreases along with rise in ambient temperature of the strain generating element 31, the amount $\Delta R$ of change in resistance of each of the gauges 141 increases as appreciated from the above equation (4).

In contrast thereto, the resistance of the thermal sensitive resistors 145 increases along with rise in ambient temperature, so that a voltage applied to the bridge circuit 140 (a voltage between the input terminals 144a and 144b) decreases.

As described above, when the thermal sensitive resistors 145 are connected to the positive and negative input sides 147 and 148 of the bridge circuit 140, a voltage applied to the bridge circuit 140 is adjusted in accordance with ambient temperature of the strain generating element 31. Thus, change in output of the bridge circuit 140 which is likely to be caused due to temperature change is suppressed, so that the output sensitivity of the bridge circuit 40 is electrically corrected.

Also, the temperature coefficient of resistance of the thermal sensitive resistors 145 used in the present preferred embodiment is higher than that of each of the strain gauges 141. As a result, each of the strain gauges 141 can be regarded as a precision resistor when compared with the thermal sensitive resistors 145. Consequently, the temperature of the strain generating element 31 is calculated based on a voltage applied to the bridge circuit 140 (a voltage between the input terminals 144a and 144b), an excitation voltage of the power source 46, and the resistance-temperature characteristic of the thermal sensitive resistors 145. Thus, according to the present preferred embodiment, the temperature of the strain generating element 31 is detected based on change in resistance of the thermal sensitive resistors 145.

As described above, the thermal sensitive resistors 145 are used as not only a sensitivity corrector for compensating an output of the bridge circuit 140 which is susceptible to temperature change, but also a temperature sensor of the strain generating element 31. As such, the number of components forming the load cell unit 130 can be reduced, to thereby reduce manufacturing costs of the load cell unit 130.

Further, the thermal sensitive resistors 145 are brought in intimate contact with the thick portions 34 which do not easily fall under ambient thermal influences. Accordingly, the resistance of the thermal sensitive resistors 145 varies while accurately reflecting the temperature of the strain generating element 31. Thus, the temperature of the strain generating element 31 is accurately and reliably detected based on change in resistance of the thermal sensitive resistors 145.

The signal processor 50 performs signal processing based on a signal (a load signal, for example) provided by the bridge circuit 140. As shown in Fig. 7, the signal processor 50 principally includes the amplifying A/D converter 51, the memory 53, and the CPU 54. and those components 51, 53, and 54 are provided on the signal processing board 50a.

The amplifying A/D converter 51 converts each of an output voltage of the bridge circuit 140 (a voltage between the output terminals 143a and 143b) and a voltage applied to the bridge circuit 140 (a voltage between the input terminals 144a and 144b) which are detected as analog signals, into digital signals. Then, the digital signals obtained after conversion are input to the CPU 54.

The memory 53 is a storage portion including a non-volatile memory, for example, and stores programs, variables, and the like. Also, the CPU 54 exercises control in accordance with the programs stored in the memory 53. Accordingly, the CPU 54 can perform conversion in the amplifying A/D converter 51, computation for zero compensation, weight computation, and the like, at predetermined times in accordance with the programs.

In particular, as shown in Fig. 7, the CPU 54 of the signal processor 50 chiefly implements a computing function for zero compensation (assigned to the zero compensation calculator 52) and a weight computing function (assigned to the weight calculator 55) in accordance with the programs stored in the memory 53.

The zero compensation calculator 52 of the CPU 54 calculates the temperature of the strain generating element 31 based on results of detection provided by the thermal sensitive resistors 145, and also calculates an amount of change in zero of the bridge circuit 140 after rough correction, based on the calculated temperature. Also, the zero compensation calculator 52 minutely corrects the output of the bridge circuit 140 which is roughly corrected, based on the calculated amount of change in zero.

In view of the foregoing matters, according to the present preferred embodiment, the amount of change in zero of the bridge circuit 140 which is roughly corrected by the zero compensation element 42 is calculated by second- or higher-order approximation, and an output of the bridge circuit 140 is minutely corrected based on the calculated amount of change in zero. More specifically, (1) parameters a, b, and c (refer to the above equation (1)) required for minute correction of an output of the bridge circuit 140 are calculated, and (2) an output of the bridge circuit 140 is minutely corrected based on the parameters a, b, and c.

The weight calculator 55 of the CPU 54 calculates the weight of the checked object 5 based on an output of the bridge circuit 140 which is minutely corrected. The sorting device 60 performs a sorting process based on the result of calculation provided by the weight calculator 55.

<2.2 Advantages of load cell unit according to the second preferred embodiment>

As described above, according to the second preferred embodiment, like the first preferred embodiment, software compensation of zero can be further provided to an output of the bridge circuit 140 to which circuital (hardware) compensation of zero is provided by the zero compensation element 42. Also, the temperature T of the strain generating element 31 used for software compensation of zero is accurately and reliably detected by the thermal sensitive resistors 145 which are in intimate contact with the thick portions 34.

Accordingly, the output accuracy of the bridge circuit 140 can be further improved. Thus, the repeatability of processes for weight measurement performed by the bridge circuit 140 can be further improved. As a result, even in a case where a measurement interval is so short that correction of zero can not be achieved for each times of weight measurement such as a case where the weights of the checked objects 5 being transferred are to be measured, the weights of the checked objects 5 can be measured with enhanced repeatability.

Also, according to the second preferred embodiment, like the first preferred embodiment, each of the weights of the checked objects 5 can be computed based on an output of the bridge circuit 140 which is controlled with high accuracy, and the minimum scale interval relative to a rated capacity of the load cell unit 30 can be set to be smaller. Accordingly, even in a case where the load of the measuring conveyor 21 (tare) which is greater in weight than the checked object 5 is imposed on the load cell unit 30 and a rated capacity of the load cell should be set to be too large for the checked object 5, the measurement accuracy (measurement resolution) for the checked object 5 can be improved.

Further, according to the second preferred embodiment, the thermal sensitive resistors 145 (145a and 145b) are connected in series with the positive and negative input sides 147 and 148 of the bridge circuit 140. Thus, the thermal sensitive resistors 145 are used as not only a sensitivity compensator for compensating for change in modulus of longitudinal elasticity of the strain generating element which is caused due to temperature change and for correcting an output of the bridge circuit 140, but also a temperature sensor of the strain generating element 31. As such, the number of components forming the load cell unit 130 can be reduced, to thereby reduce manufacturing costs of the load cell unit 130.

<3. Third preferred embodiment>

Next, a third preferred embodiment of the present invention will be described. It is noted that a weight checker 200 according to the third preferred embodiment is identical to the weight checker 1 according to the first preferred embodiment except that a structure of a bridge circuit 240 in a load cell unit 230 is different. Thus, the following description will deal largely with those differences.

Additionally, in the following description, the same components as those in the weight checker 1 according to the first preferred embodiment are denoted by the same reference numerals. Since the components denoted by the same reference numerals as in the first preferred embodiment have already been described in the first preferred embodiment, the description thereof will be omitted in the present preferred embodiment.

<3.1 Structure of load cell unit>

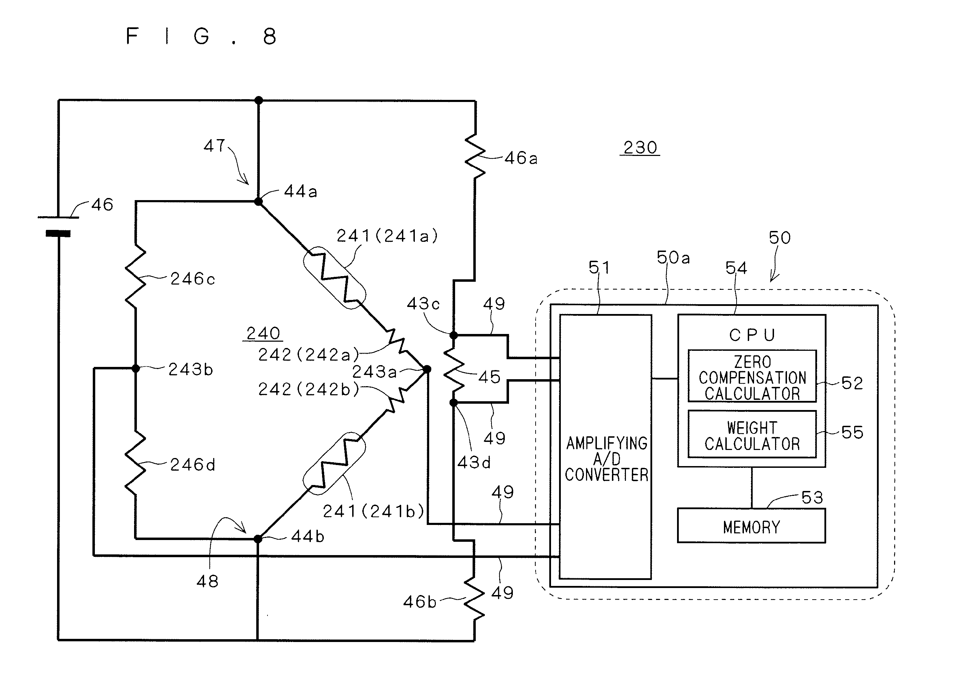

Figs. 2 and 3 are a front view and a plan view, respectively, for showing an example of a structure of a hardware of the load cell unit 230. Also, Fig. 4 is a plan view for showing an example of a structure of each of strain gauges 241. Further, Fig. 8 is a block diagram of a circuit of the load cell unit 230. As shown in Figs. 2 through 4 and 8, the load cell unit 230 principally includes the strain generating element 31, a plurality of strain gauges 241 (241 a and 241 b), a zero compensation element 242, the thermal sensitive resistor 45, and the signal processor 50.

On the outer surface 35, the strain gauges 241 (241a and 241b) are placed in positions respectively opposing the plurality of strain generating portions 33, as shown in Figs. 2 and 3. More specifically, first and second strain gauges 241a and 241b are adhered to the first surface 35a in positions opposing the first and second strain generating portions 33a and 33b, respectively.

Additionally, the arrangement of the strain gauges 241 is not limited to that described above. For example, the second and first strain gauges 241b and 241a may be adhered to the second surface 35b in positions opposing the third and fourth strain generating portions 33c and 33d, respectively. That is, it is essential only that the first and second strain gauges 241a and 241b are placed on one of the first surface (upper surface) 35a and the second surface (lower surface) 35b in positions respectively opposing the strain generating portions provided in the one of the two surfaces.

Now, it should be noted that as each of the strain gauges 241 (241a and 241b), a strain gauge of a temperature/ sensitivity compensated type like the strain gauges 41 in the first preferred embodiment is used. Accordingly, the strain gauges 241 compensate for thermal expansion of the strain generating element 31 which expands and contracts due to temperature change to thereby suppress change in zero of the bridge circuit 240, and also compensate the amount of change in modulus of longitudinal elasticity which is caused due to temperature change to thereby suppress change in output of the bridge circuit 240.

The bridge circuit 240 outputs the weight of the checked object 5 which is an object being measured, as a load signal. As shown in Fig. 8, the bridge circuit 240 principally includes the first and second strain gauges 241a and 241b and first and second fixed resistors 246c and 246d. More specifically, (1) the first strain gauge 241a is placed between the positive input terminal 44a and a positive output terminal 243a, (2) the second strain gauge 241b is placed between the positive output terminal 243a and the negative output terminal 44b, (3) the first fixed resistor 246c is placed between the positive input terminal 44a and a negative output terminal 243b, and (4) the second fixed resistor 246d is placed between the negative output terminal 243b and the negative input terminal 44b. Those strain gauges 241 (241a and 241b) form a half bridge. Then, a voltage between the output terminals 243a and 243b is detected as an output of the bridge circuit 240.

The zero compensation element 242 (242a and 242b) is a resistive element (copper wire or nickel wire) which has a high temperature coefficient of resistance formed in the shape of a winding, like the zero compensation element 42 according to the first preferred embodiment. As shown in Fig. 2, one of the first and second zero compensation resistors 242a is mounted in intimate contact with the first thick portion 34a located at the side closer to the first surface 35a. Also, as shown in Fig. 8, the zero compensation element 242 (242a and 242b) is connected in series with either of the strain gauges 241 (241a and 241b) placed on one of sides of the bridge circuit 240. Additionally, the zero compensation element 242 is not limited to a resistive element in the shape of a winding, and may be a chip resistor having the same resistance and the same temperature coefficient of resistance as the above-cited resistive element, for example.

Meanwhile, as described above, a strain gauge of a temperature self-compensated type is employed as each of the strain gauges 241. However, in a case where there are individual differences among the strain gauges 241 or in a case where respective conditions of contacts of the strain gauges 241 differ from one another, the zero of the bridge circuit 240 varies along with change in ambient temperature, and consequently, the results of measurement provided by the measuring device 20 are influenced by ambient temperature.

In contrast thereto, according to the present preferred embodiment, the zero compensation element 242 which conforms to the amount of change in zero which is caused due to temperature change is placed on any of sides of the bridge circuit 240, and is connected in series with a corresponding one of the strain gauges 241. As such, zero which varies along with temperature change is compensated in accordance with the temperature of the strain generating element 31, and an output of the bridge circuit 240 is roughly corrected to fall within a certain range.

Also, the thin strain generating portions 33 have a higher thermal resistance than the other portions of the strain generating element 31, so that a portion interposed between two strain generating portions 33 which are adjacent to each other (i.e., the thick portions 34) does not easily fall under ambient thermal influences. Consequently, the zero compensation element 242 provided on the thick portion 34 can compensate the zero of the bridge circuit 240 while accurately reflecting the temperature of the strain generating element 31.

Also, the thermal sensitive resistor 45 is a resistive element having a high temperature coefficient of resistance, like the zero compensation element 242. As shown in Fig. 2, the thermal sensitive resistor 45 is mounted in intimate contact with the first thick portion 34a located at the side closer to the first surface 35a. Further, the thermal sensitive resistor 45 has a higher temperature coefficient of resistance than the precision resistors 46a and 46b.

Accordingly, the temperature of the strain generating element 31 can be calculated based on a voltage applied to the thermal sensitive resistor 45 (a voltage across the temperature measuring terminals 43c and 43d) and the resistance-temperature characteristic of the thermal sensitive resistor 45. In this manner, the temperature of the strain generating element 31 is detected based on change in resistance of the thermal sensitive resistor 45, and the thermal sensitive resistor 45 is used as a temperature sensor.

Also, the thermal sensitive resistor 45 is in intimate contact with the thick portion 34 which does not easily fall under ambient thermal influences, so that the resistance of the thermal sensitive resistor 45 varies while accurately reflecting the temperature of the strain generating element 31. As such, the temperature of the strain generating element 31 is accurately and reliably detected based on change in resistance of the thermal sensitive resistor 45.

Below, the bridge circuit 240 according to the present preferred embodiment and a bridge circuit which includes the strain gauges 141 used in the second preferred embodiment in place of the strain gauges 241 will be compared with each other and considered. As described above, each of the strain gauges 141 is of a self-compensated type, and thus it is required to connect the thermal sensitive resistors 145 (145a and 145b) for sensitivity correction, to the input side of the bridge circuit (refer to Fig. 7).

However, the resistance-temperature characteristic of the strain gauges 141 is about 3 (ppm/°C), the temperature coefficient of resistance of the fixed resistors 246c and 246d is 25 (ppm/°C) while the temperature coefficient of relative resistance thereof is about 5 (ppm/°C). As such, a voltage applied to the bridge circuit (i.e., a voltage between input terminals) is influenced by not only change in resistance of the thermal sensitive resistors 145 which is caused due to temperature change, but also change in resistance of the fixed resistors 246c and 246d.

Accordingly, in a bridge circuit of a half-bridge type which includes two strain gauges 141 of a temperature self-compensated type and the fixed resistors 246c and 246d, the output sensitivity can not be satisfactorily corrected even by using series connection of the thermal sensitive resistors 145 in some cases.

In contrast thereto, according to the present preferred embodiment, the strain gauges 241 of a temperature/sensitivity compensated type are used as strain gauges, so that no thermal sensitive resistor for sensitivity correction is required on the input sides 47 and 48 of the bridge circuit 240. Thus, even if the bridge circuit 240 of a half-bridge type is formed, the output sensitivity can be satisfactorily corrected.

Further, according to the present preferred embodiment, the thermal sensitive resistor 45 with the precision resistors 46a and 46b and the bridge circuit 240 are connected in parallel with the power source 46. As such, a voltage supplied from the power source 46 is divided among the precision resistors 46a and 46b and the thermal sensitive resistor 45. For this reason, it is possible to reduce heat generation of the thermal sensitive resistor 45 by adjusting the resistances of the precision resistors 46a and 46b and the thermal sensitive resistor 45. As a result, accurate temperature detection is possible, and further, a time period required for stabilization of a voltage across the thermal sensitive resistor 45 (i.e., an output of the thermal sensitive resistor 45) at a time of turn-on can be shortened, so that the measurement accuracy for the checked object 5 can be improved.

The signal processor 50 performs signal processing based on a signal (a load signal, for example) provided by the bridge circuit 240. As shown in Fig. 8, the signal processor 50 principally includes the amplifying A/D converter 51, the memory 53, and the CPU 54, and those components 51, 53, and 54 are provided on the signal processing board 50a.

The memory 53 is a storage portion including a non-volatile memory, for example, and stores programs, variables, and the like. Also, the CPU 54 exercises control in accordance with the programs stored in the memory 53. Accordingly, the CPU 54 can perform conversion in the amplifying A/D converter 51, computation for zero compensation, weight computation, and the like, at predetermined times in accordance with the programs.

In particular, as shown in Fig. 8, the CPU 54 of the signal processor 50 chiefly implements a computing function for zero compensation (assigned to the zero compensation calculator 52) and a weight computing function (assigned to the weight calculator 55) in accordance with the programs stored in the memory 53

The amplifying A/D converter 51 converts each of an output voltage of the bridge circuit 240 (a voltage between the output terminals 243a and 243b) and a voltage applied to the bridge circuit 240 (a voltage between the input terminals 44a and 44b) which are detected as analog signals, into digital signals. Then, the digital signals obtained after conversion are input to the CPU 54.

The zero compensation calculator 52 of the CPU 54 calculates the temperature of the strain generating element 31 based on results of detection provided by the thermal sensitive resistor 45, and also calculates an amount of change in zero of the bridge circuit 240 after rough correction, based on the calculated temperature. Also, the zero compensation calculator 52 minutely corrects the output of the bridge circuit 240 which is roughly corrected, based on the calculated amount of change in zero.

In view of the foregoing matters, according to the present preferred embodiment, the amount of change in zero of the bridge circuit 240 which is roughly corrected by the zero compensation element 242 is calculated by second- or higher-order approximation, and an output of the bridge circuit 240 is minutely corrected based on the calculated amount of change in zero. More specifically, (1) parameters required for minute correction of an output of the bridge circuit 240 are calculated, and (2) an output of the bridge circuit 240 is minutely corrected based on the parameters.

The weight calculator 55 of the CPU 54 calculates the weight of the checked object 5 based on an output of the bridge circuit 240 which is minutely corrected. The sorting device 60 performs a sorting process based on the result of calculation provided by the weight calculator 55.

<3.2 Advantages of load cell unit according to the third preferred embodiment>

As described above, according to the present preferred embodiment, like the first preferred embodiment, software compensation of zero can be further provided to an output of the bridge circuit 240 to which circuital (hardware) compensation of zero is provided by the zero compensation element 242. Also, the temperature T of the strain generating element 31 used for software compensation of zero is accurately and reliably detected by the thermal sensitive resistor 45 which is in intimate contact with the thick portion 34.

Accordingly, the output accuracy of the bridge circuit 240 can be further improved. Thus, the repeatability of processes for weight measurement performed by the bridge circuit 240 can be further improved. As a result, even in a case where a measurement interval is so short that correction of zero can not be achieved for each times of weight measurement such as a case where the weights of the checked objects 5 being transferred by the measuring conveyor 21 are to be measured, the weights of the checked objects 5 can be measured with enhanced repeatability.

Also, according to the present preferred embodiment, each of the weights of the checked objects 5 can be computed based on an output of the bridge circuit 240 which is controlled with high accuracy, and the minimum scale interval relative to a rated capacity of the load cell unit 230 can be set to be smaller. Accordingly, even in a case where the load of the measuring conveyor 21 (tare) which is greater in weight than the checked object 5 is imposed on the load cell unit 230 and a rated capacity of the load cell should be set to be too large for the checked object 5, the measurement accuracy (measurement resolution) for the checked object 5 can be improved.

Further, according to the present preferred embodiment, a strain gauge of a temperature/sensitivity compensated type is used, and the thermal sensitive resistor 45 with the precision resistors 46a and 46b and the bridge circuit 240 are connected in parallel with the power source 46. For this reason, it is possible to reduce heat generation of the thermal sensitive resistor 45 by adjusting the resistances of the precision resistors 46a and 46b and the thermal sensitive resistor 45. As a result, accurate temperature detection is possible, and further, a time period required for stabilization of a voltage across the thermal sensitive resistor 45 (i.e., an output of the thermal sensitive resistor 45) at a time of turn-on can be shortened, so that the measurement accuracy for the checked object 5 can be improved.

<Fourth preferred embodiment>

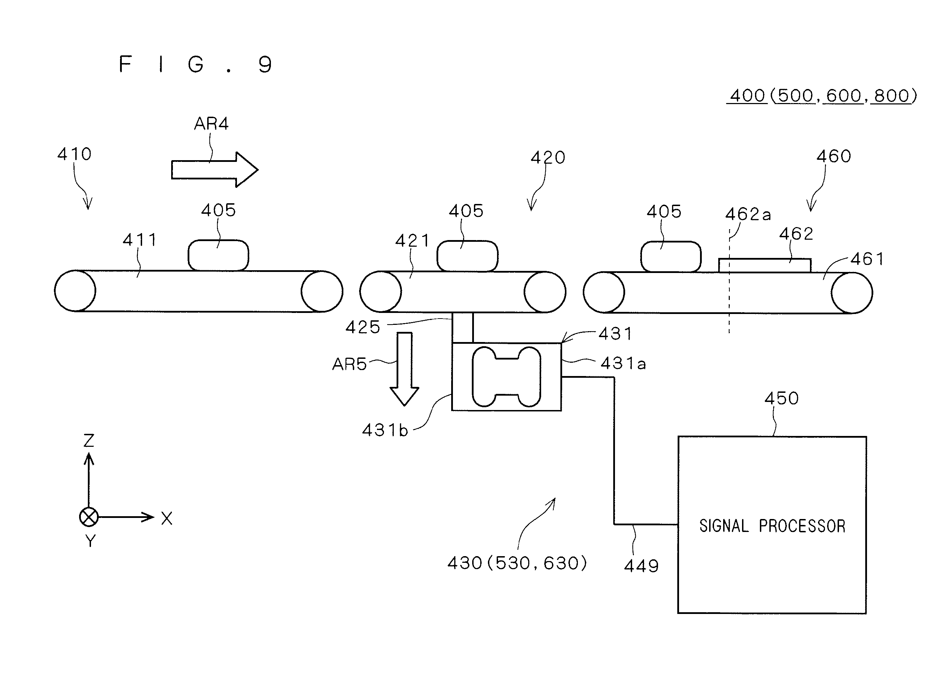

Fig. 9 is a front view for showing an example of an overall structure of a weight checker 400 according to a fourth preferred embodiment. The weight checker 400, like the weight checker 1 according to the first preferred embodiment, measures weights of products which are transferred after being subjected to an upstream process such as a packing process, for example, and sorts the products based on results of the measurement. The weight checker 400 measures the weight of a product under certain gravitational acceleration, and converts the measured weight into a mass.

As shown in Fig. 9, the weight checker 400 principally includes a catching device 410, a measuring device 420, and a sorting device 460. It is noted that in Fig. 9 and subsequent figures, an XYZ rectangular coordinate system in which a Z-axis direction is a vertical direction and an X-Y plane is a horizontal plane is included as needed, in order to clarify respective directions in the figures.

The catching device 410 includes a catching conveyor 411 as shown in Fig. 9. The catching device 410 transfers a checked object 405 which is received from a device placed upstream relative to a transfer direction AR4 of the checked object 405, to the measuring device 420.

The measuring device 420 measures a weight of the checked object 405 while transferring the checked object 405 (measured object) which is received from the catching device 410. As shown in Fig. 9, the measuring device 420 principally includes a measuring conveyor 421 and a load cell unit 430.

The measuring conveyor 421 is a transfer part for transferring each of the checked objects 405 which is received from the catching device 410, to the sorting device 460. Also, the measuring conveyor 421 is supported by a strain generating element 431 of the load cell unit 430 via a mounting part 425, as shown in Fig. 9. As such, the strain generating element 431 receives a load of the measuring conveyor 421 and a load of the checked object 405 which is transferred on the measuring conveyor 421.

The load cell unit 430 is a unit for measuring a weight of the checked object 405 which is an object being measured, based on a load signal. Details of a structure of the load cell unit 430 will be given later.

The sorting device 460 sorts the checked objects 5 based on results of measurement of the checked objects 405 provided by the measuring device 420. As shown in Fig. 9, the sorting device 460 principally includes a transfer conveyor 461 and a lever 462. The transfer conveyor 461 is a transfer part for transferring each of the checked objects 405 which is received from the measuring device 420 after weight measurement, along the transfer direction AR4. The lever 462 is able to turn around an axis 462a which is substantially perpendicular to the transfer direction AR4, and sorts the checked objects 405 which are transferred by the transfer conveyor 461.

For example, in a case where the results of measurement provided by the measuring device 420 are within the range of conforming products, the lever 462 is caused to turn such that the length thereof becomes substantially parallel to the transfer direction AR4 and the lever 462 is placed on the side of the transfer conveyor 461. As a result, the checked objects 405 are transferred to a conforming product line (not shown) which is laid on the extension of the transfer direction AR4.

On the other hand, in a case where the results of measurement provided by the measuring device 420 are not within the range of conforming products, the lever 462 is caused to turn so as to block transfer of the checked objects 405. As a result, the checked objects 405 which have arrived at the lever 462 move along the lever 462, and are transferred to a non-conforming product line (not shown) which is laid on the side of the transfer conveyor 461.

<4.2 Structure of load cell unit>

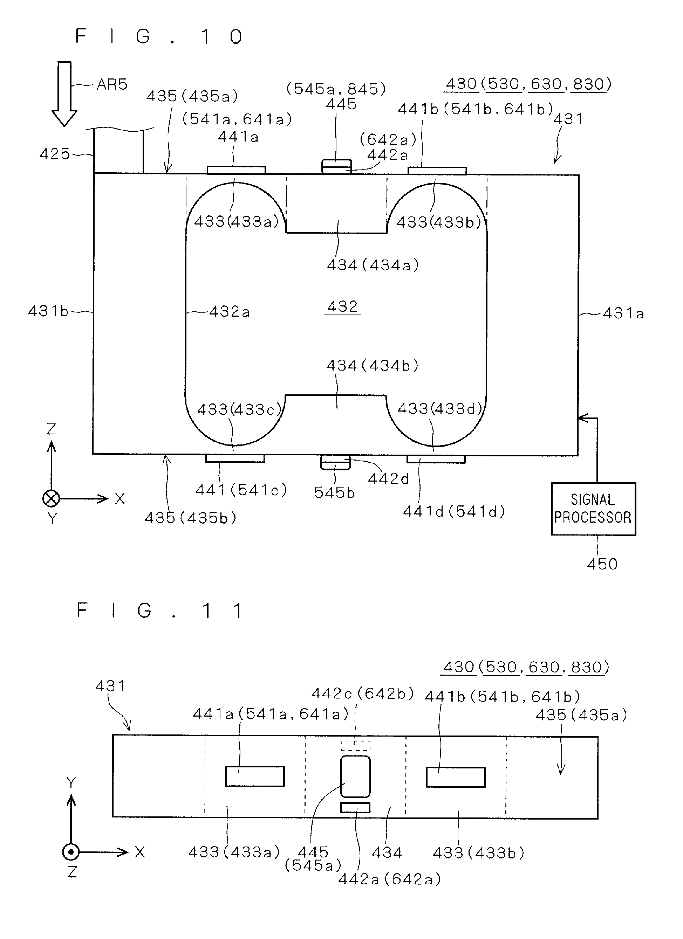

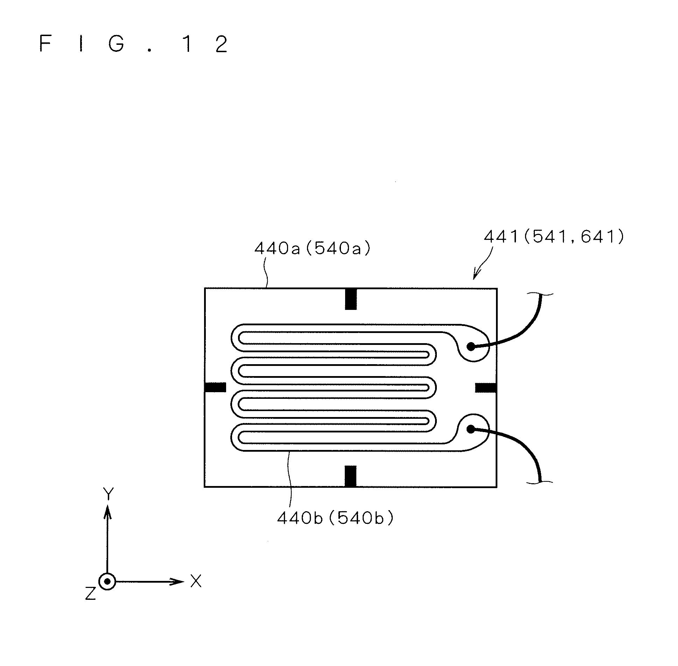

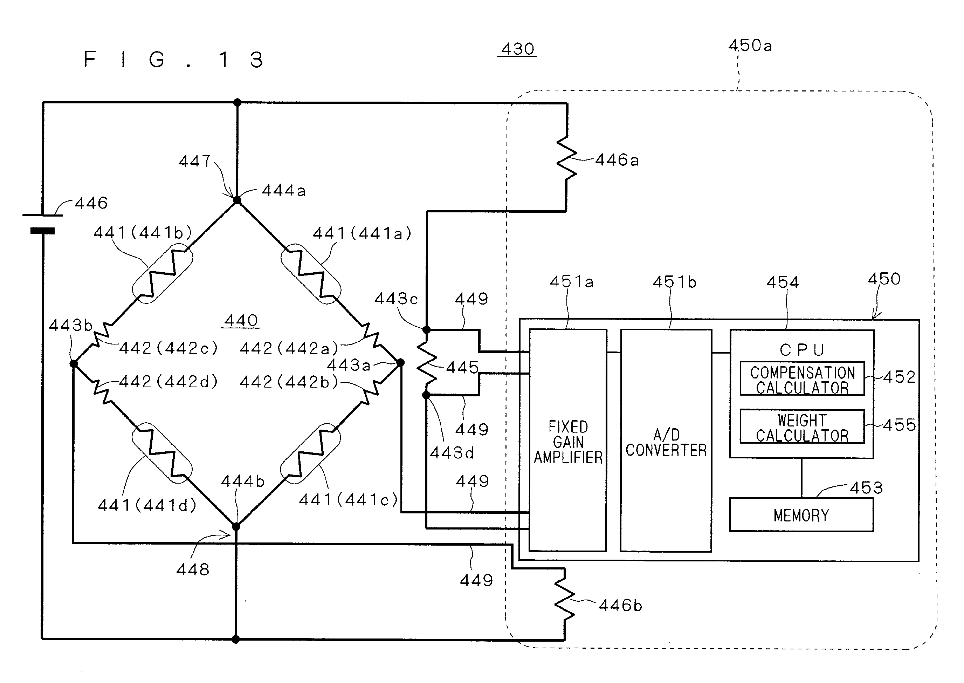

Figs. 10 and 11 are a front view and a plan view, respectively, for showing an example of a structure of a hardware of the load cell unit 430. Also, Fig. 12 is a plan view for showing an example of a structure of each of strain gauges 441. Further, Fig. 13 is a block diagram of a circuit of the load cell unit 430. As shown in Figs. 10 through 13, the load cell unit 430 principally includes the strain generating element 431, a plurality of strain gauges 441 (441a through 441d), a zero compensation element 442, a thermal sensitive resistor 445, and a signal processor 450.

The strain generating element 431 is a metal block having a through hole 432 as shown in Fig. 10, and is an elastic material formed of a metal such as an aluminum alloy or stainless steel, for example. The strain generating element 431 includes a plurality (four in the present preferred embodiment) of thin strain generating portions 433 (first through fourth strain generating portions 433a through 433d) which are interposed between an inner wall 432a and an outer surface 435 (which includes first and second surfaces 435a and 435b) of the through hole 432.

Out of the plurality of strain generating portions 433, two adjacent strain generating portions 433a and 433b are provided at the side closer to the first surface (upper surface) 435a which is substantially perpendicular to a load direction AR5 in which loads of the checked objects (measured objects) 405 are imposed and receives loads of the checked objects 405. On the other hand, out of the plurality of strain generating portions 433, two adjacent strain generating portions 433c and 433d are provided at the side closer to the second surface (lower surface) 435b which is substantially perpendicular to the load direction AR5 and opposes the first surface 35a with the through hole 432 being provided therebetween.

Further, in a position between the first and second strain generating portions 433a and 433b, a first thick portion 434a which is thicker than each of the first and second strain generating portions 433a is formed. Also, in a position between the third and fourth strain generating portions 433c and 433d, a second thick portion 434b which is thicker than each of the third and fourth strain generating portions 433c and 433d is formed.

Because of formation of the foregoing portions, a fixed end 431a of the strain generating element 431 is fixed within the measuring device 420, and when a load is imposed on a free end 431b, a compressive stress is caused at the side closer to the first surface (upper surface) 435a in the first strain generating portion 433a and at the side closer to the second surface (lower surface) 435b in the fourth strain generating portion 433d while a tensile stress is caused at the side closer to the first surface 435a in the second strain generating portion 433b and at the side closer to the second surface 435b in the third strain generating portion 433c. Accordingly, mechanical strain is generated in each of the strain generating portions 433a through 433d.

Also, when a load is imposed on the free end 431b, the strain generating element 431 is deformed to be in the shape of an almost parallelogram and functions as a Roverbal mechanism. As such, moment acting on the strain generating element 431 is cancelled, and as a result, substantially the same value is detected as a weight of the checked object 405 regardless of the position of the object 405 on the measuring conveyor 421. Thus, the strain generating element 431 forms a Roverbal mechanism with the plurality of strain generating portions 433 which are provided between the free end 431b on which a load is imposed and the fixed end 431a.

On the outer surface 43 5, the strain gauges 441 (441a through 441d) are placed in positions respectively opposing the plurality of strain generating portions 433, as shown in Figs. 10 and 11. More specifically, first and second strain gauges 441a and 441b are adhered to the first surface 435a in positions opposing the first and second strain generating portions 433a and 433b, respectively, and third and fourth strain gauges 441c and 441d are adhered in positions opposing the third and fourth strain generating portions 433c and 433d, respectively.

Each of the strain gauges 441 (441a through 441d) is a resistive element 440b such as a photo-etched resistive foil which is formed in a meandering shape on a base material 440a made of a thin electrical insulator (polyimide resin, for example), as shown in Fig. 12. Accordingly, when strain is generated in each of the strain generating portions 433 (433a through 433d) and is transmitted to the resistive element 440b via the base material 440a, the resistance of the resistive element 440b changes in accordance with the value of the strain.

Meanwhile, according to the present preferred embodiment, the strain generating element 431 thermally expands along with temperature rise in accordance with a coefficient of linear expansion thereof. Also, the modulus of longitudinal elasticity (Young's modulus) of the strain generating element 431 decreases along with temperature rise, and the value of strain caused by the same stress increases.

In this regard, according to the present preferred embodiment, a strain gauge of a temperature/sensitivity compensated type is employed as each of the strain gauges 441. Thus, the resistive element 440b of the strain gauge 441 according to the present preferred embodiment is formed of a metal such as a nickel-chromium (Ni-Cr) alloy, for example. Also, a ratio between nickel and chromium in the resistive element 440b of the strain gauge 441 is adjusted and a predetermined heat treatment is performed on the resistive element 440b such that a temperature coefficient of the resistive element 440b with respect to sensitivity to strain is a negative value and the modulus of longitudinal elasticity of the resistive element 440b increases along with temperature rise.

Accordingly, even in a case where the strain generating element 431 expands due to temperature rise and the value of strain in the strain gauge 441 which is generated by the same load increases due to temperature rise, the resistance of each of the strain gauges 441 adhered to the strain generating element 431 is substantially the same within a predetermined temperature range. Thus, the strain gauges 441 of a temperature/sensitivity compensated type can compensate for thermal expansion of the strain generating element 431 which expands and contracts due to temperature change, to thereby suppress change in zero of the bridge circuit 440, and further, the strain gauges 441 compensate an amount of change in modulus of longitudinal elasticity which is caused due to temperature change and roughly correct an output of the bridge circuit 440 (which will hereinafter be also referred to as a "bridge output"), to thereby compensate the output sensitivity of the bridge circuit 440.

Below, compensation of the output sensitivity of the bridge circuit 440 in a case where compensation is provided by the strain gauges 441 of a temperature/sensitivity compensated type and compensation of the output sensitivity of the bridge circuit 440 in case where compensation is provided by a thermal sensitive resistor will be compared.

First, in the case where the output sensitivity of the bridge circuit is compensated by a thermal sensitive resistor, a strain gauge of a temperature self-compensated type is placed on each of sides of the bridge circuit, and an input side of the bridge circuit is connected in series with a thermal sensitive resistor, for example. In this case, the elapse of a predetermined time period after application of a voltage to the thermal sensitive resistor is required until the resistance of the thermal sensitive resistor is stabilized at a time of turn-on. As such, the output sensitivity of the bridge circuit 440 can not be satisfactorily roughly corrected until the predetermined time period elapses.

In contrast thereto, in the bridge circuit 440 according to the present preferred embodiment, a strain gauge of a temperature/sensitivity compensated type is used as each of the strain gauges 441. Thus, the output sensitivity of the bridge circuit 440 is roughly corrected by not the thermal sensitive resistors 445, but the strain gauges 441 of a temperature/sensitivity compensated type. As such, even before the above-mentioned predetermined time period elapses, the output sensitivity of the bridge circuit 440 is roughly corrected satisfactorily. As a result, the output of the bridge circuit 440 is immediately stabilized at a time of turn-on, so that the load cell unit 430 can immediately start processes for weight measurement of the checked object 405.

The bridge circuit 440 outputs the weight of the checked object 405 as a load signal. As shown in Fig. 13, the bridge circuit 440 principally includes the first through fourth strain gauges 441a through 441d. More specifically, (1) the first strain gauge 441a is placed between a positive input terminal 444a and a positive output terminal 443 a, (2) the second strain gauge 441b is placed between the positive input terminal 444a and a negative output terminal 443b, (3) the third strain gauge 441c is placed between the positive output terminal 443a and a negative input terminal 444b, and (4) the fourth strain gauge 441d is placed between a negative output terminal 443b and the negative input terminal 444b. Those strain gauges 441 (441a through 441 d) form a full bridge. Then, a voltage between the output terminals 443a and 443b is detected as an output of the bridge circuit 440.

The zero compensation element 442 (442a through 442d) forms a resistive element (copper wire or nickel wire) which has a high temperature coefficient of resistance into the shape of a winding, and is placed on any of sides of the bridge circuit 440. Thus, any one of the zero compensation elements 442a through 442d shown in Fig. 13 is used and is connected in series with a corresponding one of the strain gauges 441 (441a, 441b, 441c, and 441d). Meanwhile, the first zero compensation element 442a (refer to Fig. 10) is mounted in intimate contact with the first thick portion 434a located at the side closer to the first surface 435a, the second zero compensation element 442b (refer to Fig. 10) is mounted in intimate contact with the second thick portion 434b located at the side closer to the second surface 435b, the third zero compensation element 442c (not shown) is mounted in intimate contact with the first thick portion 434a located at the side closer to the first surface 435a, and the fourth zero compensation element 442d (not shown) is mounted in intimate contact with the second thick portion 434b located at the side closer to the second surface 435b. Additionally, the zero compensation element 442 is not limited to a resistive element in the shape of a winding, and may be a chip resistor having the same resistance and the same temperature coefficient of resistance as the above-cited resistive element, for example.

Now, it should be noted that as each of the strain gauges 441, a strain gauge of a temperature/sensitivity compensated type is used as described above. Accordingly, the resistance of each of the strain gauges 441 when no load is imposed on the strain generating element 431 (unloaded state) is kept at substantially the same value even if ambient temperature of the strain generating element 431 changes. Therefore, in a case where respective properties (such as a resistance and a temperature coefficient of resistance, for example) of the strain gauges 441 are substantially the same, the zero of the bridge circuit 440 is kept at substantially the same value even if ambient temperature changes.

However, in a case where there are individual differences among the strain gauges 441 or in a case where respective conditions of contacts of the strain gauges 441 differ from one another, the zero of the bridge circuit 440 varies along with change in ambient temperature, and consequently, the results of measurement provided by the measuring device 420 are influenced by ambient temperature.

In contrast thereto, according to the present preferred embodiment, the zero compensation element 442 which conforms to the amount of change in zero which is caused due to temperature change is placed on any of sides of the bridge circuit 440, and is connected in series with a corresponding one of the strain gauges 441. As such, zero which varies along with temperature change is compensated in accordance with the temperature of the strain generating element 431, and an output of the bridge circuit 440 is roughly corrected to fall within a certain range.

Also, the thin strain generating portions 433 have a higher thermal resistance than the other portions of the strain generating element 431, so that a portion interposed between two strain generating portions 433 which are adjacent to each other (i.e., the thick portion 434) does not easily fall under ambient thermal influences of mounting surfaces at the sides of the fixed end 431a and the free end 431b. Consequently, the zero compensation element 442 provided on the thick portion 434 can compensate the zero of the bridge circuit 440 while accurately reflecting the temperature of the strain generating element 431.

Additionally, the arrangement of the zero compensation element 442 is not limited to any of the sides of the bridge circuit 440. The zero compensation element 442 may be placed on each of one side of the bridge circuit 440 and another side which is diagonal relative to the one side, for example. Thus, either the first and fourth zero compensation elements 442a and 442d or the second and third zero compensation elements 442b and 442c can be used as the zero compensation elements 442. In other words, provision of the zero compensation element 442 on at least one side or more of the bridge circuit 440 would suffice.

The thermal sensitive resistor 445 is a resistive element having a high temperature coefficient of resistance, like the zero compensation element 442. For the thermal sensitive resistor 445, a nickel (Ni)-, copper (Cu)-, or platinum (Pt)-based material is used, for example. As shown in Fig. 10, the thermal sensitive resistor 445 is mounted in intimate contact with the first thick portion 434a located at the side closer to the first surface 435a.

Also, as shown in Fig. 13, one end of the thermal sensitive resistor 445 is electrically connected with a temperature measuring terminal 443c and the other end is electrically connected with a temperature measuring terminal 443d. Further, the temperature measuring terminal 443c and the temperature measuring terminal 443d are electrically connected with a positive side and a negative side of a power source 446 via a precision resistor 446a and a precision resistor 446b which are provided on a signal processing board 450a, respectively.

Accordingly, the load cell unit 430 can calculate the temperature of the strain generating element 431 based on a voltage across the thermal sensitive resistor 445 (a voltage between the temperature measuring terminals 443c and 443d) and the resistance-temperature characteristic of the thermal sensitive resistor 445. In this manner, according to the present preferred embodiment, the temperature of the strain generating element 431 is detected based on change in resistance of the thermal sensitive resistor 445, and the thermal sensitive resistor 445 is used as a temperature sensor.

Also, the thermal sensitive resistor 445 is in intimate contact with the thick portion 434 which does not easily fall under ambient thermal influences, so that the resistance of the thermal sensitive resistor 445 varies while accurately reflecting the temperature of the strain generating element 431. As such, the temperature of the strain generating element 431 is accurately and reliably detected based on change in resistance of the thermal sensitive resistor 445.

Below, a case where a voltage supplied from a power source to a bridge circuit is increased in order to improve the S/N ratio of a load signal output from the bridge circuit and to improve the measurement accuracy for a checked object will be considered.

In a case where a strain gauge of a temperature self-compensated type is placed on each of sides of a bridge circuit and a thermal sensitive resistor is connected in series with both or one of a positive input side and a negative input side of the bridge circuit, when a voltage supplied to the bridge circuit is increased, a voltage supplied to the thermal sensitive resistor is accordingly increased, so that power consumption in the thermal sensitive resistor is increased.

As a result, the thermal sensitive resistor itself generates heat, which makes it difficult to accurately measure the temperature of a strain generating element based on the thermal sensitive resistor. Also, a standby time until the resistance of the thermal sensitive resistor is stabilized is required in order to accurately measure the temperature of the strain generating element, so that processes for weight measurement can not be immediately started.

In contrast thereto, in a case where a strain gauge of a temperature/sensitivity compensated type is used as a strain gauge as in the present preferred embodiment, the thermal sensitive resistor 445 with the precision resistors 446a and 446b and the bridge circuit 440 can be connected in parallel with the power source 446. As a result, a voltage supplied from the power source 446 is divided among the precision resistors 446a and 446b and the thermal sensitive resistor 445.

Consequently, by adjusting the resistance of each of the precision resistors 446a and 446b and the thermal sensitive resistor 445, it is possible to reduce heat generation of the thermal sensitive resistor 445 while setting a voltage applied to the bridge circuit 440 to be higher. As a result, it is possible to improve the measurement accuracy for the checked object 405 and to immediately start processes for weight measurement.

The signal processor 450 performs signal processing based on a signal (a load signal, for example) provided by the bridge circuit 440. As shown in Fig. 13, the signal processor 450 principally includes a fixed gain amplifier 451a, an A/D converter 451b, a memory 453, and a CPU 454. and those components 51a, 51b, 53, and 54 are provided on the signal processing board 450a.

The fixed gain amplifier 451a amplifies an output of the bridge circuit 440 (a voltage between the output terminals 443a and 443b) and a voltage applied to the thermal sensitive resistor 445 (a voltage between the input terminals 443c and 443d) which are detected as analog signals, by respective certain amplification factors (including an amplification factor of 1). Also, the A/D converter 451b converts the analog signals which are amplified and output from the fixed gain amplifier 451a into digital signals. Then, the digital signals obtained after conversion are input to the CPU 454.

The memory 453 is a storage portion including a non-volatile memory, for example, and stores programs, variables, and the like. Also, the CPU 454 exercises control in accordance with the programs stored in the memory 453. Accordingly, the CPU 454 can perform conversion in the A/D converter 451b, computation for compensation of zero and output sensitivity, weight computation including filtering, and the like, at predetermined times in accordance with the programs.

In particular, as shown in Fig. 13, the CPU 454 of the signal processor 450 chiefly implements a computing function for zero compensation and a computing function for output-sensitivity compensation (assigned to a zero compensation calculator 452) and a weight computing function (assigned to a weight calculator 455) in accordance with the programs stored in the memory 453.

The compensation calculator 452 of the CPU 454 minutely corrects a bridge output which is roughly corrected through compensation of the zero of the bridge circuit 440 which is provided by the zero compensation elements 442 and through compensation of the output sensitivity of the bridge circuit 440 which is provided by the strain gauges 441, based on the result of detection provided by the thermal sensitive resistor (temperature sensor) 445. Accordingly, the zero and the output sensitivity of the bridge circuit 440 are further compensated by the compensation calculator 452. It is noted that a process for minute correction which is performed by the compensation calculator 452 will be described later.

The weight calculator 455 of the CPU 454 calculates the weight of the checked object 5 based on a bridge output which is minutely corrected. The sorting device 460 performs a sorting process based on results of calculation of the weight calculator 455.

<4.3 Zero compensation provided by signal processor (compensation calculator)>

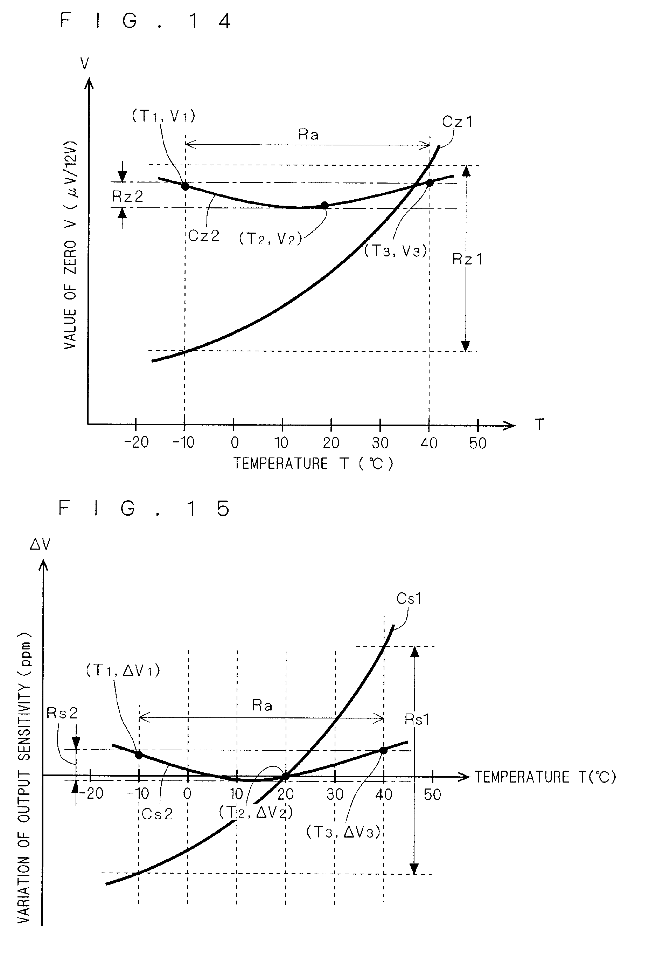

Fig. 14 is a view for showing a relationship between a value V of zero of the bridge circuit 440 and a temperature T of the strain generating element 431. A vertical axis in Fig. 14 represents the value V of zero (unit: $\mu$ V/12V) provided when a load of the checked object 405 is not imposed on the strain generating element 431 in a case where an excitation voltage (supplied voltage) provided from the power source 446 is set to a voltage Vs (Vs=12V in the present preferred embodiment). On the other hand, a horizontal axis in Fig. 14 represents the temperature T (unit:°C) of the strain generating element 431. Further, a curve Cz1 in Fig. 14 represents a relationship between the value V of zero provided when the zero compensation element 442 is not used and the temperature T of the strain generating element 431, and a curve Cz2 in Fig. 14 represents a relationship between the value V of zero provided when the zero compensation element 442 is used and the temperature T of the strain generating element 431.

It is known that the zero compensation element 442 is able to effectively compensate zero in a case where an amount of change in zero which is caused due to temperature change is linear (primary). However, as shown in Fig. 14 in a case where the temperature characteristic of the value V of zero in a predetermined temperature range Ra (-10 $\leqq$ T $\leqq$ 40, for example) has a certain curvature, zero compensation of the zero compensation element 442 can only better a varying range Rz of the value of zero from Rz1 to Rz2, and cannot reduce Rz to be smaller than Rz2. As a result, to merely use the zero compensation element 442 would have difficulties in further improving the repeatability of processes for weight measurement in the signal processor 450.

In view of the foregoing matters, according to the present preferred embodiment, the signal processor 450 minutely corrects a bridge output which is roughly corrected with respect to zero and output sensitivity by the zero compensation element 442 and the strain gauges 441, by second- or higher-order approximation, to thereby further compensate an amount of change in zero of the bridge circuit 440. More specifically, (1) parameters required for minute correction of a bridge output for zero compensation are calculated, and (2) the zero of the bridge circuit 440 is compensated based on the parameters.

First, calculation of the parameters will be described by taking a case of second-order approximation as an example. Prior to mounting the load cell unit 430 onto the measuring device 420, the temperature characteristic of the amount of change in zero after rough correction is obtained. Specifically, in the bridge circuit 440 using the strain gauges 441 of a temperature/sensitivity compensated type and the zero compensation element 442, the temperature T of the strain generating element 431 is caused to change to temperatures T1, T2, and T3 (all temperatures are within the temperature range Ra) while keeping the strain generating element 431 being unloaded, and bridge outputs V1, V2, and V3 which are provided at the temperatures T1, T2, T3, respectively, are obtained.

Subsequently, (T, V)=(T1, V1), (T2, V2), (T3, V3) is substituted into the following equation (5), and three resulting simultaneous equations are solved, to thereby calculate parameters a1, b1, and c1. Then, the calculated parameters a1, b1, and c1 are stored in the memory 453.

$$V = a1 \cdot T \cdot T + b1 \cdot T + c1 \qquad \text{.... Equation (5)}.$$

It is noted that the parameters a1, b1, and c1 are different from one another depending on individual differences among the strain gauges 441 or respective contact conditions of the strain gauges 441 even if the load cell units 430 include the same type of strain gauges 441. As such, the parameters a1, b1, and c1 should be calculated for each of the load cell units 430.

Below, minute correction using the parameters will be described. Prior to measuring the weight of the checked object 405, a bridge output and the temperature of the strain generating element 431 which are provided when the checked object 405 is not loaded onto the measuring conveyor 421, first. Subsequently, zero provided at the calculated temperature is computed. The computed zero is stored in the memory 453.

Subsequently, the compensation calculator 452 calculates the amount of change in zero which is made after a predetermined time period passes from a time when zero is previously stored or after measurement is made a predetermined number of times from a time when zero is previously stored for each times of measurement if possible. More specifically, the compensation calculator 452 detects the temperature T of the strain generating element 431 based on the thermal sensitive resistor 445, and substitutes the result of detection into the following equation (5), to thereby obtain the value of zero of the present moment. Then, the compensation calculator 452 compensates the zero of the bridge circuit 440 based on the amount of change in zero which is made from a time when zero is previously stored, to achieve minute correction of the zero.

<4.4 Compensation of output sensitivity which is provided by signal processor (compensation calculator)>

Fig. 15 shows a relationship between the variation $\Delta V$ (unit: ppm) of output sensitivity and the temperature T (unit: °C) of the strain generating element 431 in a case where the same load is imposed on the strain generating element 431, relative to a point at T = 20.

Specifically, assuming the value of zero at the temperature T is Ve(T) and the output sensitivity at the temperature T is V0(T), the variation $\Delta V(T)$ of output sensitivity at the temperature T is obtained by the following equation (6). Thus, when T is "20", the value of $\Delta V$ is "0".

$$\Delta V = ((V0(T) - (Ve(T)) - (V0(20) - Ve(20)))$$

$$/(V0(20) - Ve(20)) \qquad \dots. \text{ Equation (6).}$$

It is noted that a vertical axis and a horizontal axis in Fig. 15 represent the variation $\Delta V$ of output sensitivity and the temperature T, respectively. Also, a curve Cs1 in Fig. 15 shows a relationship between the variation $\Delta V$ of output sensitivity and the temperature T of the strain generating element 431 in a case where the bridge circuit 440 shown in Fig. 13 is formed by not strain gauges of a temperature/sensitivity compensated type, but strain gauges of a temperature self-compensated type. That is, under measuring conditions in the case of the curve Cs1, the variation $\Delta V$ provided when an output-sensitivity compensation element such as a thermal sensitive resistor is not used is measured.

Further, a curve Cs2 in Fig. 15 shows a relationship between the variation $\Delta V$ of output sensitivity and the temperature T of the strain generating element 431 in a case where the bridge circuit 440 is formed by the strain gauges 441 (output-sensitivity compensated gauges) which do not require an output-sensitivity compensation element.

As shown in Fig. 15, a varying range Rs2 of the curve Cs2 in a temperature range Ra is smaller than a varying range Rs1 of the curve Cs1. Also, the rate of change of the variation $\Delta V$ with temperature in the case of the curve Cs1 is about 600 (ppm/°C), and on the other hand, the rate of change of the variation $\Delta V$ with temperature in the case of the curve Cs2 is about 15 (ppm/°C).

As described above, even if a thermal sensitive resistor is not used, it is possible to keep a varying range Rs of output sensitivity within a certain range by forming the bridge circuit 440 using temperature/sensitivity compensated gauges, and also, by performing heat treatment on a metal foil, it is possible to reduce the rate of change of the variation $\Delta V$ with temperature, to about 15 (ppm/°C).

However, it is known that a temperature/sensitivity compensated gauge effectively compensates output sensitivity in a case where the amount of change in the variation $\Delta V$ which is caused due to temperature change is linear (primary). Accordingly, as shown in Fig. 15, in a case where the temperature characteristic of the variation $\Delta V$ in the temperature range Ra has a certain curvature, the varying range of $\Delta V$ can not be reduced to be smaller than Rs merely by sensitivity compensation with the use of a temperature/sensitivity compensated gauge. As a result, it is difficult to further improve the measurement accuracy of the signal processor 450 merely by using a temperature/sensitivity compensated gauge.

In view of the foregoing matters, according to the present preferred embodiment, the signal processor 450 minutely corrects output sensitivity, for which zero compensation is provided through minute correction after zero and output sensitivity are roughly corrected by the zero compensation element 442 and the strain gauges 441, by second- or higher-order approximation, to thereby further compensate the output sensitivity of the bridge circuit 440. As a result, the rate of change of the variation $\Delta V$ with temperature can be further reduced to about 1-5 (ppm/°C).

More specifically, (1) parameters required for minute correction of output sensitivity for compensation of output sensitivity are calculated, and (2) the output sensitivity of the bridge circuit 440 is compensated based on the calculated parameters.

First, calculation of the parameters for compensation of output sensitivity will be described by taking a case of second-order approximation as an example. In calculation of the parameters, prior to mounting the load cell unit 430 onto the measuring device 420, the temperature characteristic of the variation $\Delta V$ of output sensitivity is obtained for a bridge output which is roughly corrected by the zero compensation element 442 and the thermal sensitive resistor 445 and is minutely corrected with respect to the amount of change in zero. More specifically, the temperature of the strain generating element 431 is changed to the temperatures T1, to T2, and T3 (all of them are within the temperature range Ra) while imposing a load on the strain generating element 431, to obtain respective variations $\Delta$ V1, $\Delta$ V2, and $\Delta$ V3 of output sensitivity at the temperatures T1, T2 (="20"), and T3.

Subsequently, (T, $\Delta$ V(T))=(T1, $\Delta$ V1), (T2, $\Delta$ V2), (T3, $\Delta$ V3) is substituted into the following equation (7) and three resulting simultaneous equations are solved, to calculate parameters a2, b2, and c2. Then, the calculated parameters a2, b2, and c2 are stored in the memory 453.

$$\Delta V = a2 \cdot T \cdot T + b2 \cdot T + c2 \qquad \dots \text{ Equation (7).}$$

Additionally, the parameters a2, b2, and c2 in the above equation (7) are different from one another depending on individual differences among the strain gauges 441 or respective conditions of contact of the strain gauges 441 even if the load cell units 430 include the same type of strain gauges 441. Thus, like the parameters a1, b1, and c1, the parameters a2, b2, and c2 should be calculated for each load cell unit 430.

Next, minute correction using the parameters will be described. While the load of the measuring conveyor 421 (refer to Fig. 9) and the load of the checked object 405 are imposed on the strain generating element 431, the compensation calculator 452 compensates the amount of change in zero of a bridge output which is roughly corrected, to obtain a bridge output which is minutely corrected with respect to zero. Also, the compensation calculator 452 detects the temperature T of the strain generating element 431 at a time when the roughly-corrected bridge output is obtained, based on the thermal sensitive resistor 445.

Subsequently, the compensation calculator 452 substitutes the temperature T which is detected and the parameters a2, b2, and c2 stored in the memory 453 into the above equation (7), to thereby obtain the variation $\Delta$ V(T) of output sensitivity at the temperature T.

Thereafter, the compensation calculator 452 calculates a load M(T) at the temperature T based on the bridge output which is minutely corrected for zero compensation at the temperature T. In this regard, the load M(T) is calculated based on a relationship between output sensitivity V0(T) and the load M(T) which have been obtained in advance by experiments or the like.

Then, the weight calculator 455 corrects the load M(T) at the temperature T using the variation $\Delta$ V(T) at the temperature T, to thereby obtain a load M(20) provided at a reference temperature T=20. In short, the weight calculator 455 obtains the load M(20) based on the load M(T) and the variation $\Delta$ V(T). More specifically, the load M(20) is obtained by substituting the load M(T) and the variation $\Delta$ V(T) into the following equation (8).

$$]M(20) = M(T) \diagup (1 + \Delta V(T)) \qquad \dots \text{ Equation (8).}$$

It should be noted that a weight Mc of the measuring conveyor 421 (refer to Fig. 9) of the weight checker 400 is larger than a weight Mt of the checked object 405 in most cases. Meanwhile, the load of the checked object 405 and the load of the measuring conveyor 421 (tare) are imposed on the strain generating element 431 of the load cell unit 430 used in the weight checker 400. Further, the amount of change in bridge output which is caused due to temperature change increases as a load imposed on the strain generating element 431 increases. Accordingly, the result of measurement provided by the measuring device 420 of the weight checker 400 is more susceptible to change in ambient temperature than a result of measurement provided in a case where only the load of the measured object 405 is imposed.

In contrast thereto, the load cell unit 430 according to the present preferred embodiment can provide two types of zero compensation and two types of temperature/sensitivity compensation, and can compute the weight of each of the checked objects 405 based on a bridge output which is controlled with high accuracy. Thus, influences of a bridge output which varies due to temperature change are suppressed, so that the checked objects 405 can be measured with enhanced repeatability.

Also, in a case where the output sensitivity of the bridge circuit 440 is minutely corrected relative to a bridge output provided when the weight Mc of the measuring conveyor 421 (refer to Fig. 9) is put on the load cell unit 430, every time the measuring conveyor 421 is replaced and the weight Me thereof changes, the parameters a2, b2, and c2 in the above equation (8) should be re-calculated by re-sending the weight checker 400 to a factory and re-performing a heat test. As a result, there is a problem of increasing the number of processes required for re-calculation.

In contrast thereto, according to the present preferred embodiment, minute correction with respect to the output sensitivity of the bridge circuit 440 is provided to a bridge output which is zero-compensated by the compensation calculator 452. As a result, the weight Mt of the checked object 405 is obtained by subtracting the weight Mc(20) of the measuring conveyor 421 from the weight M(20) which is calculated by the weight calculator 455. As such, even when the measuring conveyor 421 is replaced, it is unnecessary to re-calculate the parameters a2, b2, and c2 in the equation (8), so that the weight Mt of the checked object 405 can be efficiently obtained.

<4.5 Advantages of load cell unit and weight checker according to the fourth preferred embodiment>

As described above, circuital (hardware) compensation of zero and output sensitivity are provided to the bridge circuit 440 according to the fourth preferred embodiment by the zero compensation element 442 and the strain gauges 442 of a temperature/sensitivity compensated type. Further, software compensation of zero and output sensitivity are provided to a bridge output which is circuitally compensated.

Also, the zero compensation element 442 is provided on the thick portion 434, and thus, can roughly correct the zero of the bridge circuit 440 while accurately reflecting the temperature of the strain generating element 431. Further, like the zero compensation element 442, the thermal sensitive resistor 445 is provided on the thick portion 434 and thus can accurately and reliably detect the temperature of the strain generating element 431.

As such, the signal processor 450 can minutely correct a bridge output which is roughly corrected with respect to zero and output sensitivity, based on the temperature of the strain generating element 431 which is accurately and reliably detected. Accordingly, the output accuracy of the bridge circuit 440 can be further improved, and as a result, the repeatability of results of weight measurement provided by the load cell unit 430 can be further enhanced.

Also, the weight checker 400 according to the fourth preferred embodiment can provide two types of zero compensation and two types of output-sensitivity compensation, to thereby compute the weight of each of the checked objects 405 based on an output of the bridge circuit 440 which is controlled with high accuracy. Accordingly, even in a case where the load of the checked object 405 and the load of the measuring conveyor 421 (tare) are imposed on the strain generating element 431, as in the case of the weight checker 400, influences of a bridge output which varies along with temperature change can be reduced, to thereby measure the weight of the checked object 405 with enhanced repeatability.

Also, according to the fourth preferred embodiment, not a thermal sensitive resistor which is connected in series with the bridge circuit 440, but the strain gauges 441 of a temperature/sensitivity compensated type are used as output-sensitivity compensation elements. As a result, in the load cell unit 430, unlike that in which a thermal sensitive resistor is used as an output-sensitivity compensation element, an output is immediately stabilized upon application of a voltage to a thermal sensitive resistor so that it is unnecessary to stand by for a predetermined time period. Consequently, the load cell unit 430 can immediately start processes for weight measurement of the checked object 405.

Further, according to the fourth preferred embodiment, a strain gauge of a temperature/sensitivity compensated type is used, and the thermal sensitive resistor 445 with the precision resistors 446a and 446b and the bridge circuit 440 are connected in parallel with the power source 446. For this reason, it is possible to reduce heat generation of the thermal sensitive resistor 445 by adjusting the resistances of the precision resistors 446a and 446b and the thermal sensitive resistor 445. As a result, accurate temperature detection is possible, and further, a time period required for stabilization of a voltage across the thermal sensitive resistor 445 (i.e., an output of the thermal sensitive resistor 445) at a time of turn-on can be shortened, so that the measurement accuracy for the checked object 405 can be improved.

<Fifth preferred embodiment>

Next, a fifth preferred embodiment of the present invention will be described. It is noted that a weight checker 500 according to the fifth preferred embodiment is identical to the weight checker 400 according to the fourth preferred embodiment except that a structure of a bridge circuit 540 is different. Thus, the following description will deal largely with the differences.

Additionally, in the following description, the same components as those in the weight checker 400 according to the fourth preferred embodiment are denoted by the same reference numerals. Since the components denoted by the same reference numerals as in the fourth preferred embodiment have already been described in the fourth preferred embodiment, the description thereof will be omitted in the present preferred embodiment.

<5.1 Structure of load cell unit>

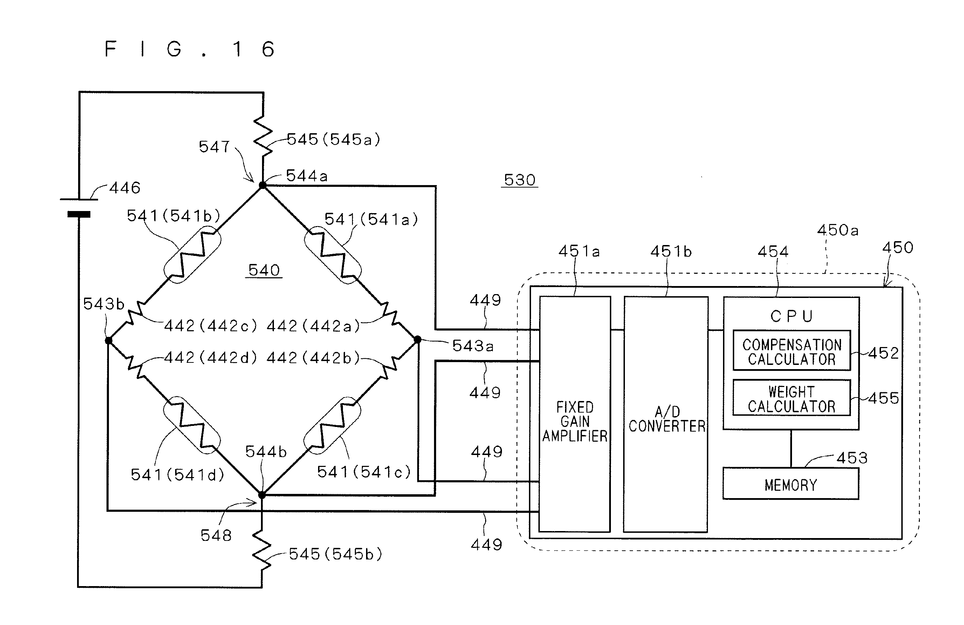

Figs. 10 and 11 are a front view and a plan view, respectively, for showing an example of a structure of a hardware of a load cell unit 530. Also, Fig. 12 is a plan view for showing an example of a structure of a strain gauge 541. Further, Fig. 16 is a block diagram of a circuit of the load cell unit 530. As shown in Figs. 10 through 12 and 16, the load cell unit 530 principally includes the strain generating element 431, a plurality of strain gauges 541 (541a through 541d), the zero compensation element 442, thermal sensitive resistors 545 (545a and 545b), and the signal processor 450.

On the outer surface 435, the strain gauges 541 (541a through 541d) are placed in positions respectively opposing the plurality of strain generating portions 433, as shown in Figs. 10 and 11. More specifically, first and second strain gauges 541a and 541b are adhered to the first surface 435a in positions opposing the first and second strain generating portions 433a and 433b, respectively, and third and fourth strain gauges 541c and 541d are adhered in positions opposing the third and fourth strain generating portions 433c and 433d, respectively.

Each of the strain gauges 541 (541a through 541d) is a resistive element 540b such as a photo-etched metal foil which is formed in a meandering shape on a base material 540a composed of a thin electrical insulator (a polyimide resin, for example), as shown in Fig. 12. Accordingly, when strain is generated in each of the strain generating portions 433 (433a through 433d) and is transmitted to the resistive element 540b via the base material 540a, the resistance of the resistive element 540b varies in accordance with the value of the strain.

Further, according to the present preferred embodiment, a strain gauge of a temperature self-compensated type is used as each of the strain gauges 541. Specifically, the resistive element 540b of each of the strain gauges 541 is formed of a metal such as a copper-nickel (Cu-Ni) alloy, for example. Also, predetermined heat treatment is performed on the resistive element 540b of each of the strain gauges 541 such that a temperature coefficient of resistance of the resistive element 540b is a preset negative value which conforms to a coefficient of linear expansion of the strain generating element 431.

Accordingly, as the temperature of the strain generating element 431 increases, the gauge lengths of the strain gauges 441 adhered to the strain generating element 431 extend by expansion of the strain generation element 431 and the temperature coefficient of resistance of the resistive element 440b decreases. For this reason, the resistances of the strain gauges 541 adhered to the strain generating element 431 are substantially the same in a predetermined temperature range. In this manner, the strain gauges 541 of a temperature self-compensated type compensate for thermal expansion of the strain generating element 431 which expands and contracts due to temperature change, to thereby suppress change in zero of the bridge circuit 540.

The bridge circuit 540 outputs the weight of the checked object 405 as a load signal. As shown in Fig. 16, the bridge circuit 540 principally includes the first through fourth strain gauges 541a through 541d. More specifically, (1) the first strain gauge 541a is placed between a positive input terminal 544a and a positive output terminal 543a, (2) the second strain gauge 541b is placed between the positive input terminal 544a and a negative output terminal 543b, (3) the third strain gauge 541c is placed between the positive output terminal 543a and a negative input terminal 544b, and (4) the fourth strain gauge 541d is placed between the negative output terminal 543b and the negative input terminal 544b. Those strain gauges 541 (541a through 541d) form a full bridge. Then, a voltage between the output terminals 543a and 543b is detected as an output of the bridge circuit 540.

The zero compensation element 442 (442a through 442d) forms a resistive element (copper wire or nickel wire) which has a high temperature coefficient of resistance into the shape of a winding, and is placed on any of sides of the bridge circuit 540. Thus, any one of the zero compensation elements 442a through 442d shown in Fig. 16 is used and is connected in series with a corresponding one of the strain gauges 541 (541a, 541b, 541c, and 541d). Meanwhile, the first zero compensation element 442a (refer to Fig. 10) is mounted in intimate contact with the first thick portion 434a located at the side closer to the first surface 435a, the second zero compensation element 442b (refer to Fig. 10) is mounted in intimate contact with the second thick portion 434b located at the side closer to the second surface 435b, the third zero compensation element 442c (not shown) is mounted in intimate contact with the first thick portion 434a located at the side closer to the first surface 435a, and the fourth zero compensation elements 442d (not shown) is mounted in intimate contact with the second thick portion 434b located at the side closer to the second surface 435b. Additionally, the zero compensation element 442 is not limited to a resistive element in the shape of a winding, and may be a chip resistor having the same resistance and the same temperature coefficient of resistance as the above-cited resistive element, for example.

As described above, for the strain gauges 541, a strain gauge of a temperature self-compensated type is used. As a result, the resistance of each of the strain gauges 541 when no load is imposed on the strain generating element 431 (unloaded state) is substantially the same even if ambient temperature of the strain generating element 431 changes. Accordingly, in a case where the properties (the resistance and the temperature coefficient of resistance of the resistive element 540b, for example) of the respective strain gauges 541 are substantially the same, the zero of the bridge circuit 540 is substantially the same even if ambient temperature changes.

However, in a case where there are individual differences among the strain gauges 541 or in a case where respective conditions of contacts of the strain gauges 541 differ from one another, the zero of the bridge circuit 540 varies along with change in ambient temperature, and consequently, the results of measurements provided by the measuring device 420 are influenced by ambient temperature.

In contrast thereto, according to the present preferred embodiment, the zero compensation element 442 which conforms to the amount of change in zero which is caused due to temperature change is placed on any of sides of the bridge circuit 540, and is connected in series with a corresponding one of the strain gauges 541. As such, zero which varies along with temperature change is compensated in accordance with the temperature of the strain generating element 431, and an output of the bridge circuit 540 is roughly corrected to fall within a certain range.

Also, the thin strain generating portions 433 have a higher thermal resistance than the other portions of the strain generating element 431, so that a portion interposed between two strain generating portions 433 which are adjacent to each other (i.e., the thick portion 434) does not easily fall under ambient thermal influences of mounting surfaces at the sides of the fixed end 431a and the free end 431b. Consequently, the zero compensation element 442 provided on the thick portion 434 can compensate the zero of the bridge circuit 540 while accurately reflecting the temperature of the strain generating element 431.

Additionally, the arrangement of the zero compensation element 442 is not limited to any of the sides of the bridge circuit 540. The zero compensation element 442 may be placed on each of one side of the bridge circuit 540 and another side which is diagonal relative to the one side, for example. Thus, either the first and fourth zero compensation elements 442a and 442d or the second and third zero compensation elements 442b and 442c can be used as the zero compensation elements 442. In other words, provision of the zero compensation element 442 on at least one side or more of the bridge circuit 540 would suffice.

Each of the thermal sensitive resistors 545 (545a and 545b) is a resistive element having a high temperature coefficient of resistance, like the zero compensation element 442. For the first thermal sensitive resistor 545a and the second thermal sensitive resistor 545b, a nickel (Ni)-based material and a copper (Cu)-based material are used, respectively, for example.

As shown in Fig. 10, the first thermal sensitive resistor 545a and the second thermal sensitive resistor 545b are mounted in intimate contact with the first thick portion 434a located at the side closer to the first surface 435a and the second thick portion 434b located at the side closer to the second surface 435b, respectively. Also, as shown in Fig. 16, the first thermal sensitive resistor 545a and the second thermal sensitive resistor 545b are electrically connected with the terminal 544a on a positive input side 547 of the bridge circuit 540 and the terminal 544b on a negative input side 548 of the bridge circuit 540, respectively.

Now, assuming that a stress acting on the strain generating element 431 is $\sigma$ and the modulus of longitudinal elasticity of the strain generating element 431 is E, the value $\varepsilon 1$ of strain caused in the strain generating portions 433 can be obtained by the above equation (2) in the second preferred embodiment.

Also, assuming that the value of strain in each of the strain gauges 541 which is caused by a stress is $\varepsilon 2$, the resistance of each of the strain gauges 541 is R, and the amount of change in resistance of each of the strain gauges 541 which is caused by the stress is $\Delta R$, the gauge factor of each of the strain gauges 541 can be expressed by the above equation (3) in the second preferred embodiment.

Then, if $\varepsilon 1$ of each of the strain generating portions 433 and the value $\varepsilon 2$ of strain in each of the strain generating elements 541, which is adhered to the outer surface 435 (435a or 435b) of the strain generating portion 433, are substantially identical to each other, the amount $\Delta R$ of change in resistance of each of the strain generating element 541 can be expressed by the above equation (4) in the second preferred embodiment.

It should be noted that the modulus E of longitudinal elasticity decreases along with rise in ambient temperature in most cases. Thus, even if a load imposed on the strain generating element 431 is the same, strain caused in each of the strain generating portions 433 increases along with temperature rise.

Accordingly, as the modulus E of longitudinal elasticity decreases along with rise in ambient temperature of the strain generating element 431, the amount $\Delta R$ of change in resistance of each of the gauges 541 increases as appreciated from the above equation (4).

In contrast thereto, the resistance of the thermal sensitive resistors 545 increases along with rise in ambient temperature, so that a voltage applied to the bridge circuit 540 (a voltage between the input terminals 544a and 544b) decreases.

As described above, when the thermal sensitive resistors 545 are connected to the positive and negative input sides 547 and 548 of the bridge circuit 540, a voltage applied to the bridge circuit 540 is adjusted in accordance with ambient temperature of the strain generating element 431. Thus, change in output of the bridge circuit 540 which is likely to be caused due to temperature change is suppressed, so that the output sensitivity of the bridge circuit 440 is electrically corrected.

More specifically, in a case where the thermal sensitive resistors 545 are connected to the positive and negative input sides 547 and 548 of the bridge circuit 540, the varying range Rs2 of the variation $\Delta V$ of output sensitivity is smaller than the varying range Rs1 in a case where the thermal sensitive resistors 545 are not connected, as shown in Fig. 15. Also, the rate of change of the variation $\Delta V$ with temperature in the curve Cs1 is about 660 (ppm/°C), while the rate of change of the variation $\Delta V$ with temperature in the curve Cs2 is about 15 (ppm/°C).

As described above, by connecting the thermal sensitive resistors 545 to the positive and negative input sides 547 and 548 of the bridge circuit 540, it is possible to keep the varying range Rs of output sensitivity within a certain range, to thereby reduce the rate of change of the variation $\Delta V$ with temperature, to about 15 (ppm/°C).

Also, the temperature coefficient of resistance of the thermal sensitive resistors 545 used in the present preferred embodiment is higher than that of each of the strain gauges 541. As a result, each of the strain gauges 541 can be regarded as a precision resistor when compared with the thermal sensitive resistors 545. Consequently, the temperature of the strain generating element 431 is calculated based on a voltage applied to the bridge circuit 540 (a voltage between the input terminals 544a and 544b), an excitation voltage of the power source 446, and the resistance-temperature characteristic of the thermal sensitive resistors 545. Thus, according to the present preferred embodiment, the temperature of the strain generating element 431 is detected based on change in resistance of the thermal sensitive resistors 545.

As described above, the thermal sensitive resistors 545 are used as not only a sensitivity corrector for compensating the output sensitivity of the bridge circuit 540 which is susceptible to temperature change, but also a temperature sensor of the strain generating element 431. As such, the number of components forming the load cell unit 530 can be reduced, to thereby reduce manufacturing costs of the load cell unit 530.

Further, the thermal sensitive resistors 545 are brought in intimate contact with the thick portions 434 which do not easily fall under ambient thermal influences of mounting surfaces at the sides of the fixed end 431a and the free end 431b. Accordingly, the resistance of the thermal sensitive resistors 545 varies while accurately reflecting the temperature of the strain generating element 431. Thus, the temperature of the strain generating element 431 is accurately and reliably detected based on change in resistance of the thermal sensitive resistors 545.

The signal processor 450 performs signal processing based on a signal (a load signal, for example) provided by the bridge circuit 540. As shown in Fig. 16, the signal processor 450 principally includes the fixed gain amplifier 451a, the A/D converter 451b, the memory 453, and the CPU 454, and those components 51a, 51b, 53, and 54 are provided on the signal processing board 450a.

The fixed gain amplifier 451a amplifies an output of the bridge circuit 540 (a voltage across the output terminals 543a and 543b) and a voltage applied to the bridge circuit 540 (a voltage between the input terminals 544a and 544b) which are detected as analog signals, by respective certain amplification factors (including an amplification factor of 1). Also, the A/D converter 451b converts the analog signals which are amplified and output from the fixed gain amplifier 451a into digital signals. Then, the digital signals obtained after conversion are input to the CPU 454.

The memory 453 is a storage portion including a non-volatile memory, for example, and stores programs, variables, and the like. Also, the CPU 454 exercises control in accordance with the programs stored in the memory 453. Accordingly, the CPU 454 can perform conversion in the A/D converter 451b, computation for compensation of zero and output sensitivity, weight computation, and the like, at predetermined times in accordance with the programs.

In particular, as shown in Fig. 16, the CPU 454 of the signal processor 450 chiefly implements a computing function for zero compensation and a computing function for output-sensitivity compensation (assigned to the zero compensation calculator 452) and a weight computing function (assigned to the weight calculator 455) in accordance with the programs stored in the memory 453.

The compensation calculator 452 of the CPU 454 calculates the temperature of the strain generating element 431 based on the result of detection provided by the thermal sensitive resistors 545. Also, the compensation calculator 452 minutely corrects a bridge output which is roughly corrected through compensation of the zero of the bridge circuit 540 which is provided by the zero compensation element 442 and through compensation of the output sensitivity of the bridge circuit 540 which is provided by the thermal sensitive resistors 545, based on the temperature of the strain generating element 431 which is detected by the thermal sensitive resistors 545. Accordingly, the zero and the output sensitivity of the bridge circuit 540 are further compensated by the compensation calculator 452 (refer to the above equations (5) and (7)), and the rate of change of the variation $\Delta V$ with temperature is reduced to about 1-5 (ppm/°C).

The weight calculator 455 of the CPU 454 calculates the weight of the checked object 405 based on an output of the bridge circuit 540 which is minutely corrected. The sorting device 460 performs a sorting process based on results of calculation of the weight calculator 455.

<5.2 Advantages of load cell unit and weight checker according to the fifth preferred embodiment>

As described above, according to the fifth preferred embodiment, circuital (hardware) compensation of zero and output sensitivity are provided by the zero compensation element 442 and the thermal sensitive resistors 545 connected in series with the bridge circuit 540. Further, software compensation of zero and output sensitivity are provided to a bridge output which is circuitally compensated.

Also, the zero compensation element 442 is provided on the thick portion 434, and thus, it is possible to compensate the zero of the bridge circuit 540 while accurately reflecting the temperature of the strain generating element 431. Further, the thermal sensitive resistors 545 are provided on the thick portion 434, like the zero compensation element 442. As a result, it is possible to compensate the output sensitivity of the bridge circuit 540 while accurately reflecting the temperature of the strain generating element 431 and to accurately and reliably detect the temperature of the strain generating element 431. Accordingly, the output accuracy of the bridge circuit 540 can be further improved, which results in further improvement of the repeatability of results of measurement provided by the load cell unit 430.

Also, the weight checker 500 according to the fifth preferred embodiment can provide two types of zero compensation and two types of output-sensitivity compensation, to thereby compute the weight of each of the checked objects 405 based on an output of the bridge circuit 540 which is controlled with high accuracy. Accordingly, even in a case where the load of the checked object 405 and the load of the measuring conveyor 421 (tare) are imposed on the strain generating element 431, as in the case of the weight checker 500, influences of a bridge output which varies along with temperature change can be reduced, to thereby measure the weight of the checked object 405 with enhanced repeatability.

Further, according to the fifth preferred embodiment, the thermal sensitive resistors 545 (545a and 545b) are connected in series with the positive and negative input sides 547 and 548 of the bridge circuit 540. As a result, the thermal sensitive resistors 545 can be used as not only sensitivity correctors for compensating for change in the modulus of longitudinal elasticity of the strain generating element, which change is caused due to temperature change in order to correct an output of the bridge circuit 540, but also as temperature sensors of the strain generating element 431. As such, the number of components forming the load cell unit 530 can be reduced, to thereby reduce manufacturing costs of the load cell unit.

<6. Sixth preferred embodiment>

Next, a sixth preferred embodiment of the present invention will be described. It is noted that a weight checker 600 according to the sixth preferred embodiment is identical to the weight checker 400 according to the fourth preferred embodiment except that a structure of a bridge circuit 640 is different. Thus, the following description will deal largely with those differences.

Additionally, in the following description, the same components as those in the weight checker 400 according to the fourth preferred embodiment are denoted by the same reference numerals. Since the components denoted by the same reference numerals as in the fourth preferred embodiment have already been described in the first preferred embodiment, the description thereof will be omitted in the present preferred embodiment.

<6.1 Structure of load cell unit>

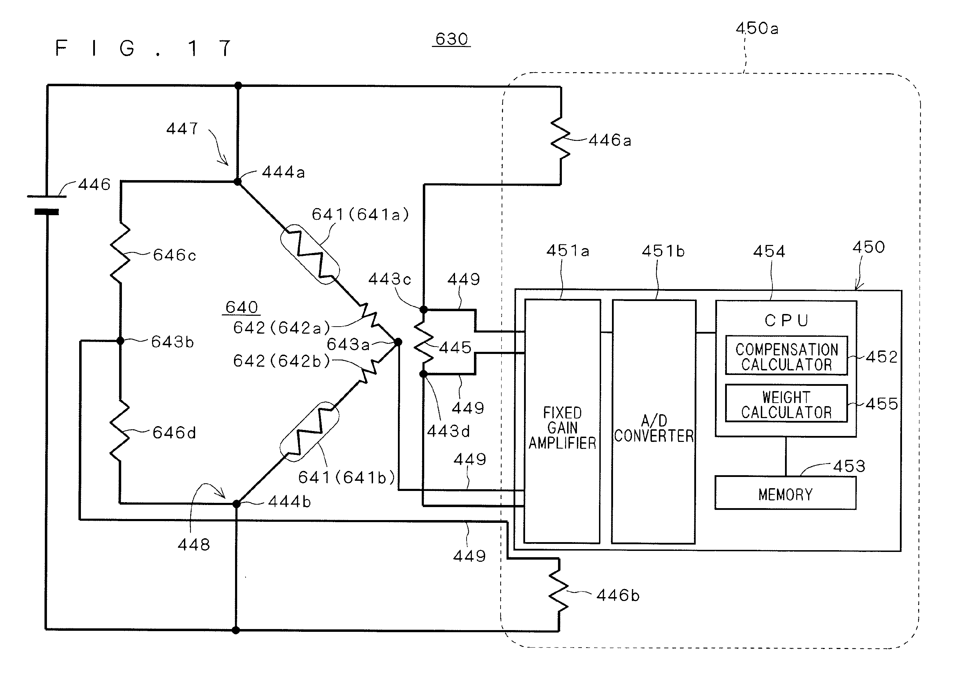

Figs. 10 and 11 are a front view and a plan view, respectively, for showing an example of a structure of a hardware of a load cell unit 630. Also, Fig. 12 is a plan view for showing an example of a structure of each of strain gauges 641. Further, Fig. 17 is a block diagram of a circuit of the load cell unit 630. As shown in Figs. 10 through 12 and 17, the load cell unit 630 principally includes the strain generating element 431, a plurality of strain gauges 641 (641a and 641b), a zero compensation element 642, the thermal sensitive resistor 445, and the signal processor 450.

On the outer surface 435, the strain gauges 641 (641a and 641b) are placed in positions respectively opposing the plurality of strain generating portions 433, as shown in Figs. 10 and 11. More specifically, first and second strain gauges 641a and 641b are adhered to the first surface 435a in positions opposing the first and second strain generating portions 433a and 433b, respectively.

Additionally, the arrangement of the strain gauges 641 is not limited to that described above. For example, the second and first strain gauges 641b and 641a may be adhered to the second surface 435b in positions opposing the sixth and fourth strain generating portions 433c and 433d, respectively. That is, it is essential only that the first and second strain gauges 641a and 641b are placed on one of the first surface (upper surface) 435a and the second surface (lower surface) 435b in positions opposing the respective strain generating portions provided in the one surface.

Now, it should be noted that as each of the strain gauges 641 (641a and 641b), a strain gauge of a temperature/ sensitivity compensated type like the strain gauges 441 in the fourth preferred embodiment is used. Accordingly, the strain gauges 641 compensate for thermal expansion of the strain generating element 431 which expands and contracts due to temperature change to thereby suppress change in zero of the bridge circuit 640, and also compensate the amount of change in modulus of longitudinal elasticity which is caused due to temperature change to thereby suppress change in output of the bridge circuit 640.

The bridge circuit 640 outputs the weight of the checked object 405 as a load signal. As shown in Fig. 17, the bridge circuit 640 principally includes first and second strain gauges 641a and 641b and first and second fixed resistors 646c and 646d. Specifically, (1) the first strain gauge 641a is placed between the positive input terminal 444a (first input terminal) and a positive output terminal 643a (first output terminal), (2) the second strain gauge 641b is placed between the positive output terminal 643a and the negative input terminal 44b (second input terminal), (3) the first fixed resistor 646c is placed between the positive input terminal 444a and a negative output terminal (second output terminal) 643b, and (4) the second fixed resistor 646d is placed between the negative output terminal 643b and the negative input terminal 44b. Those strain gauges 641 (641a and 641b) form a half bridge. Then, a voltage between the output terminals 643a and 643b is detected as an output of the bridge circuit 640.

The zero compensation element 642 (642a and 642b) is a resistive element (copper wire or nickel wire) which has a high temperature coefficient of resistance formed in the shape of a winding, like the zero compensation element 442 according to the fourth preferred embodiment. As shown in Fig. 10, one of the first and second zero compensation resistors 642a is mounted in intimate contact with the first thick portion 434a located at the side closer to the first surface 435a. Also, as shown in Fig. 17, the zero compensation element 642 (642a and 642b) is connected in series with either of the strain gauges 641 (641a and 641b) placed on one of sides of the bridge circuit 640. Additionally, the zero compensation element 642 is not limited to a resistive element in the shape of a winding, and may be a chip resistor having the same resistance and the same temperature coefficient of resistance as the above-cited resistive element, for example.

Meanwhile, as described above, a strain gauge of a temperature self-compensated type is employed as each of the strain gauges 641. However, in a case where there are individual differences among the strain gauges 641 or in a case where respective conditions of contacts of the strain gauges 641 differ from one another, the zero of the bridge circuit 640 varies along with change in ambient temperature, and consequently, the results of measurement provided by the measuring device 420 are influenced by ambient temperature.

In contrast thereto, according to the present preferred embodiment, the zero compensation element 642 which conforms to the amount of change in zero which is caused due to temperature change is placed on any of sides of the bridge circuit 640, and is connected in series with a corresponding one of the strain gauges 641. As such, the zero compensation element 642 roughly corrects zero which varies along with temperature change in accordance with the temperature of the strain generating element 431.

Also, the thin strain generating portions 433 have a higher thermal resistance than the other portions of the strain generating element 431, so that a portion interposed between two strain generating portions 433 which are adjacent to each other (i.e., the thick portion 434) does not easily fall under ambient thermal influences of the mounting surfaces at the sides of the fixed end 431a and the free end 431b. Consequently, the zero compensation element 642 provided on the thick portion 434 can compensate the zero of the bridge circuit 640 while accurately reflecting the temperature of the strain generating element 431.

Also, the thermal sensitive resistor 445 is a resistive element having a high temperature coefficient of resistance, like the zero compensation element 642. As shown in Fig. 10, the thermal sensitive resistor 445 is mounted in intimate contact with the first thick portion 434a located at the side closer to the first surface 435a. Further, the thermal sensitive resistor 445 has a higher temperature coefficient of resistance than the precision resistors 446a and 446b provided on the signal processing board 450a (refer to Fig. 17).

Accordingly, the temperature of the strain generating element 431 can be calculated based on a voltage across the thermal sensitive resistor 445 (a voltage between the temperature measuring terminals 443c and 443d) and the resistance-temperature characteristic of the thermal sensitive resistor 445. In this manner, the temperature of the strain generating element 431 is detected based on change in resistance of the thermal sensitive resistor 445, and the thermal sensitive resistor 445 is used as a temperature sensor.

Also, the thermal sensitive resistor 445 is in intimate contact with the thick portion 434 which does not easily fall under ambient thermal influences of the mounting surfaces at the sides of the fixed end 431a and the free end 431b, so that the resistance of the thermal sensitive resistor 445 varies while accurately reflecting the temperature of the strain generating element 431. As such, the temperature of the strain generating element 431 is accurately and reliably detected based on change in resistance of the thermal sensitive resistor 445.

Below, the bridge circuit 640 according to the present preferred embodiment and a bridge circuit which includes the strain gauges 541 used in the fifth preferred embodiment in place of the strain gauges 641 will be compared with each other. As described above, each of the strain gauges 541 is of a self-compensated type, and thus it is required to connect the thermal sensitive resistors 545 (545a and 545b) for sensitivity correction, to the input side of the bridge circuit (refer to Fig. 16).

However, the resistance-temperature characteristic of the strain gauges 541 is about 3 (ppm/°C), the temperature coefficient of resistance of the fixed resistors 646c and 646d is 25 (ppm/°C) while the temperature coefficient of relative resistance thereof is about 5 (ppm/°C). As such, a voltage applied to the bridge circuit (i.e., a voltage between input terminals) is influenced by not only change in resistance of the thermal sensitive resistors 545 which is caused due to temperature change, but also change in resistance of the fixed resistors 646c and 646d.

Accordingly, in a bridge circuit of a half-bridge type which includes two strain gauges 541 of a temperature self-compensated type and the fixed resistors 646c and 646d, the output sensitivity can not be satisfactorily corrected even by using series connection of the thermal sensitive resistors 545 in some cases.

In contrast thereto, according to the present preferred embodiment, the strain gauges 641 of a temperature/sensitivity compensated type are used as strain gauges, so that no thermal sensitive resistor for sensitivity correction is required on the input sides 447 and 448 of the bridge circuit 640. Thus, even if the bridge circuit 640 of a half-bridge type is formed, the output sensitivity can be satisfactorily corrected.

Further, according to the present preferred embodiment, the thermal sensitive resistor 445 with the precision resistors 446a and 446b and the bridge circuit 640 are connected in parallel with the power source 446. As such, a voltage supplied from the power source 446 is divided among the precision resistors 446a and 446b and the thermal sensitive resistor 445. For this reason, it is possible to reduce heat generation of the thermal sensitive resistor 445 by adjusting the resistances of the precision resistors 446a and 446b and the thermal sensitive resistor 445. As a result, accurate temperature detection is possible, and further, a time period required for stabilization of a voltage across the thermal sensitive resistor 445 (i.e., an output of the thermal sensitive resistor 445) at a time of turn-on can be shortened, so that the measurement accuracy for the checked object 405 can be improved.

The signal processor 450 performs signal processing based on a signal (a load signal, for example) provided by the bridge circuit 640. As shown in Fig. 17, the signal processor 450 principally includes the fixed gain amplifier 451a, the A/D converter 451b, the memory 453, and the CPU 454, and those components 51a, 51b, 53, and 54 are provided on a signal processing board 450a.

The memory 453 is a storage portion including a non-volatile memory, for example, and stores programs, variables, and the like. Also, the CPU 454 exercises control in accordance with the programs stored in the memory 453. Accordingly, the CPU 454 can perform conversion in the A/D converter 451b, computation for compensation of zero and output sensitivity, weight computation, and the like, at predetermined times in accordance with the programs.

In particular, as shown in Fig. 17, the CPU 454 of the signal processor 450 chiefly implements a computing function for zero compensation and output-sensitivity compensation (assigned to the zero compensation calculator 452) and a weight computing function (assigned to the weight calculator 455) in accordance with the programs stored in the memory 453.

The fixed gain amplifier 451a amplifies an output of the bridge circuit 640 (a voltage between the output terminals 643a and 643b) and a voltage across the thermal sensitive resistor 445 (an output of the thermal sensitive resistor 445) which are detected as analog signals, by respective certain amplification factors (including an amplification factor of 1). Also, the A/D converter 451b converts the analog signals which are amplified and output from the fixed gain amplifier 451a into digital signals. Then, the digital signals obtained after conversion are input to the CPU 454.

The compensation calculator 452 of the CPU 454 minutely corrects a bridge output which is roughly corrected through compensation of the zero of the bridge circuit 640 which is provided by the zero compensation elements 442 and through compensation of the output sensitivity of the bridge circuit 640 which is provided by the strain gauges 641, based on the result of detection provided by the thermal sensitive resistor (temperature sensor) 445. Accordingly, the zero and the output sensitivity of the bridge circuit 640 are further compensated by the compensation calculator 452 (refer to the above equations (5) and (7)).

The weight calculator 455 of the CPU 454 calculates the weight of the checked object 5 based on an output of the bridge circuit 540 which is minutely corrected. The sorting device 460 performs a sorting process based on results of calculation of the weight calculator 455.

<6.2 Advantages of load cell unit according to the sixth preferred embodiment>

As described above, the bridge circuit 640 according to the sixth preferred embodiment, like the fourth preferred embodiment, circuital (hardware) compensation of zero and output sensitivity is provided by the zero compensation element 442 and the strain gauges 442 of a temperature/sensitivity compensated type. Further, software compensation of zero and output sensitivity are provided to a bridge output which is circuitally compensated.

Also, the zero compensation element 442 is provided on the thick portion 434, and thus, can roughly correct the zero of the bridge circuit 640 while accurately reflecting the temperature of the strain generating element 431. Further, like the zero compensation element 442, the thermal sensitive resistor 445 is provided on the thick portion 434 and thus can accurately and reliably detect the temperature of the strain generating element 431.

Accordingly, in the sixth preferred embodiment, the output accuracy of the bridge circuit 640 can be further improved, and as a result, the repeatability of results of weight measurement provided by the load cell unit 630 can be further enhanced.

Also, the load cell unit 630 according to the sixth preferred embodiment, like the fourth preferred embodiment, can provide two types of zero compensation and two types of output-sensitivity compensation, to thereby compute the weight of each of the checked objects 405 based on an output of the bridge circuit 640 which is controlled with high accuracy. Accordingly, even in a case where the load of the checked object 405 and the load of the measuring conveyor 421 (tare) are imposed on the strain generating element 431, as in the case of the weight checker 600, influences of a bridge output which varies along with temperature change can be reduced, to thereby measure the weight of the checked object 405 with enhanced repeatability.

Further, according to the present preferred embodiment, a strain gauge of a temperature/sensitivity compensated type is used, and the thermal sensitive resistor 445 with the precision resistors 446a and 446b and the bridge circuit 640 are connected in parallel with the power source 446. For this reason, it is possible to reduce heat generation of the thermal sensitive resistor 445 by adjusting the resistances of the precision resistors 446a and 446b and the thermal sensitive resistor 445. As a result, accurate temperature detection is possible, and further, a time period required for stabilization of a voltage across the thermal sensitive resistor 445 (i.e., an output of the thermal sensitive resistor 445) at a time of turn-on can be shortened, so that the measurement accuracy for the checked object 405 can be improved.

<7. Seventh preferred embodiment>

Next, a seventh preferred embodiment of the present invention will be described. It is noted that a weight checker 800 according to the seventh preferred embodiment is identical to the weight checker 500 according to the fifth preferred embodiment except that a process for obtaining a signal from the bridge circuit 540 and a structure of a signal processor are different. Thus, the following description will deal largely with those differences.

Additionally, in the following description, the same components as those in the weight checker 500 according to the fifth preferred embodiment are denoted by the same reference numerals. Since the components denoted by the same reference numerals as in the fifth preferred embodiment have already been described in the fifth preferred embodiment, the description thereof will be omitted in the present preferred embodiment.

<7.1 Structure of load cell unit>

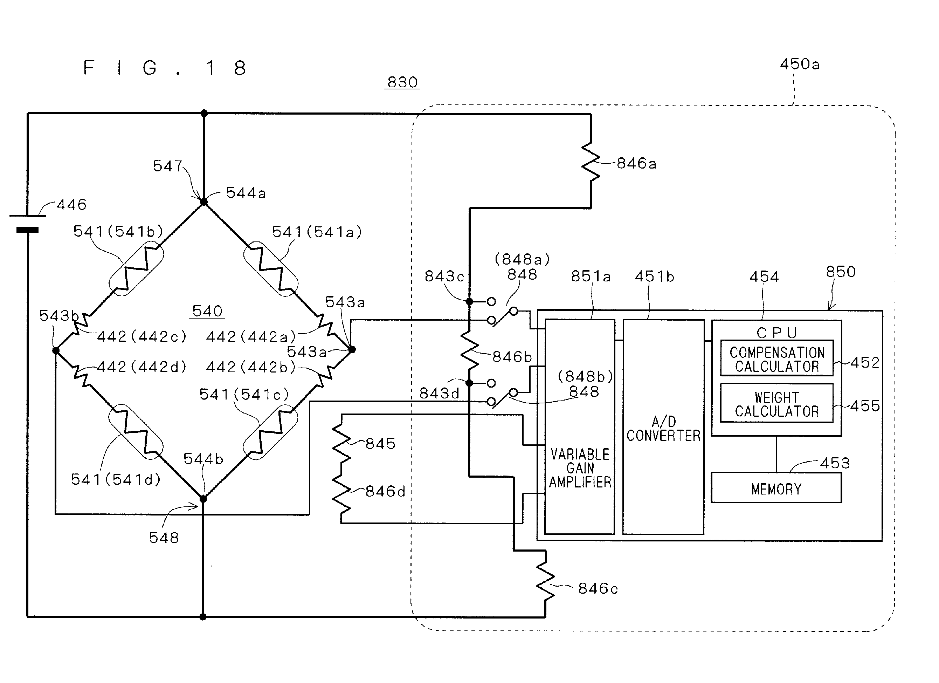

Figs. 10 and 11 are a front view and a plan view, respectively, for showing an example of a structure of a hardware of a load cell unit 830. Also, Fig. 12 is a plan view for showing an example of a structure of each of the strain gauges 541. Further, Fig. 18 is a block diagram of a circuit of the load cell unit 830. As shown in Figs. 10 through 12 and 18, the load cell unit 830 principally includes the strain generating element 431, a plurality of strain gauges 541 (541a through 541d), the zero compensation element 442, a thermal sensitive resistor 845, a plurality of (four in the present preferred embodiment) of precision resistors 846 (846a through 846d), and a signal processor 850. It is noted that for the strain gauges 541, a strain gauge of a temperature self-compensated type is used in the same manner as described in the fifth preferred embodiment.

The thermal sensitive resistor 845 is a resistive element having a high temperature coefficient of resistance, like the thermal sensitive resistors 545 according to the fifth preferred embodiment. For example, a nickel (Ni)-, cupper (Cu)-, or platinum (Pt)-based material is used for the thermal sensitive resistor 845. As shown in Fig. 10, the thermal sensitive resistor 845 is mounted in intimate contact with the first thick portion 434a located at the side closer to the first surface 435a.

Each of precision resistors 846a through 846d is a resistive element in which change in resistance caused due to temperature change is slight. As shown in Fig. 18, the precision resistors 846a, 846b, and 846c are provided on the signal processing board 450a, and are electrically connected in the order cited above. Also, the precision resistor 846a and the precision resistor 846c are electrically connected to a positive side of the power source 446 and a negative side of the power source 446, respectively. Further, the precision resistor 846d is electrically connected to the thermal sensitive resistor 845, as shown in Fig. 18.

Selecting parts 848 (848a and 848b) are so-called selector switches. As shown in Fig. 18, when the selecting part 848a and the selecting part 848b are switched to the side of the positive output terminal 543a and the side of the negative output terminal 543b, respectively (in other words, each of the selecting parts 848 is switched to a lower side: refer to Fig. 18), a bridge output provided by the bridge circuit 540 is input to a variable gain amplifier 851a,.

On the other hand, when the selecting part 848a and the selecting part 848b are switched to the side of a reference voltage terminal 843c and the side of a reference voltage terminal 843d, respectively (in other words, each of the selecting parts 848 is switched to an upper side), a voltage across the precision resistor 846b (i.e., an output of the precision resistor 846b) is input to the variable gain amplifier 851a. In this regard, a voltage across the precision resistor 846b is used as a reference output having substantially the same value for detection of the temperature of the strain generating element 431, as described later.

As described, each of the selecting parts 848 can input a bridge output and a reference output alternately to the variable gain amplifier 851a.

The signal processor 850 performs predetermined signal processing on an input signal. As shown in Fig. 18, the signal processor 850 principally includes the variable gain amplifier 851a, the A/D converter 451b, the memory 453, and the CPU 454, and each of the elements 851a, 51b, 53, and 54 are provided on the signal processing board 450a.

The variable gain amplifier 851a includes an instrumentation amplifier, for example, and is connected to the thermal sensitive resistor 845 and the precision resistor 846b as shown in Fig. 18. As a result, the amplification of the variable gain amplifier 851a is controlled based on the resistance of the thermal sensitive resistor 845 which is in accordance with temperature change in the strain generating element 431. Then, the variable gain amplifier 851 a amplifies an input signal based on the thus controlled amplification.

Also, the A/D converter 451b converts an analog signal which is amplified and output from the variable gain amplifier 851a into a digital signal. Then, the digital signal provided after conversion is input to the CPU 454.

It is noted that the modulus of longitudinal elasticity (Young's modulus) of the strain generating element 431 decreases along with temperature rise, and the value of strain caused by the same stress increases. As such, as temperature rises, the output sensitivity of the bridge circuit 540 increases. On the other hand, according to the present preferred embodiment, the amplification of the variable gain amplifier 851a is controlled to decrease as the temperature of the strain generating element 431 rises (so that the resistance of the thermal sensitive resistor 845 increases).

Consequently, when an appropriate resistor is previously selected as the thermal sensitive resistor 845 and each of the selecting parts 848 is switched to the side of a bridge output (a lower side) so that a bridge output provided by the bridge circuit 540 is input to the variable gain amplifier 851a as an input signal, the variable gain amplifier 851a can compensate the amount of change in the modulus of longitudinal elasticity of the strain generating element 431, which change is caused due to temperature change, to thereby roughly correct the bridge output. As a result, the output sensitivity of the bridge circuit 540 is compensated.

More specifically, in a case where the variable gain amplifier 851a which is electrically connected to the thermal sensitive resistor 845 is used, the varying range Rs2 of the variation $\Delta$V of the output sensitivity is smaller than the varying range Rs1 in a case where the thermal sensitive resistor 845 and the variable gain amplifier 851a are not used, as shown in Fig. 15. Also, the rate of change of the variation $\Delta$V with temperature in the curve Cs1 is about 600 (ppm/ °C), and on the other hand, the rate of change of the variation $\Delta$V with temperature in the curve Cs2 is about 15 (ppm/°C).

As described above, by using the thermal sensitive resistor 845 and the variable gain amplifier 851a, it is possible to keep the varying range Rs of the output sensitivity within a certain range, to thereby reduce the rate of change of the variation $\Delta$V with temperature, to about 15 (ppm/°C).

In contrast thereto, when each of the selecting parts 848 is switched to the side of a reference output (an upper side) so that a reference output is input to the variable gain amplifier 851a as an input signal, the variable gain amplifier 851a provides an output signal which is in accordance with the resistance of the thermal sensitive resistor 845.

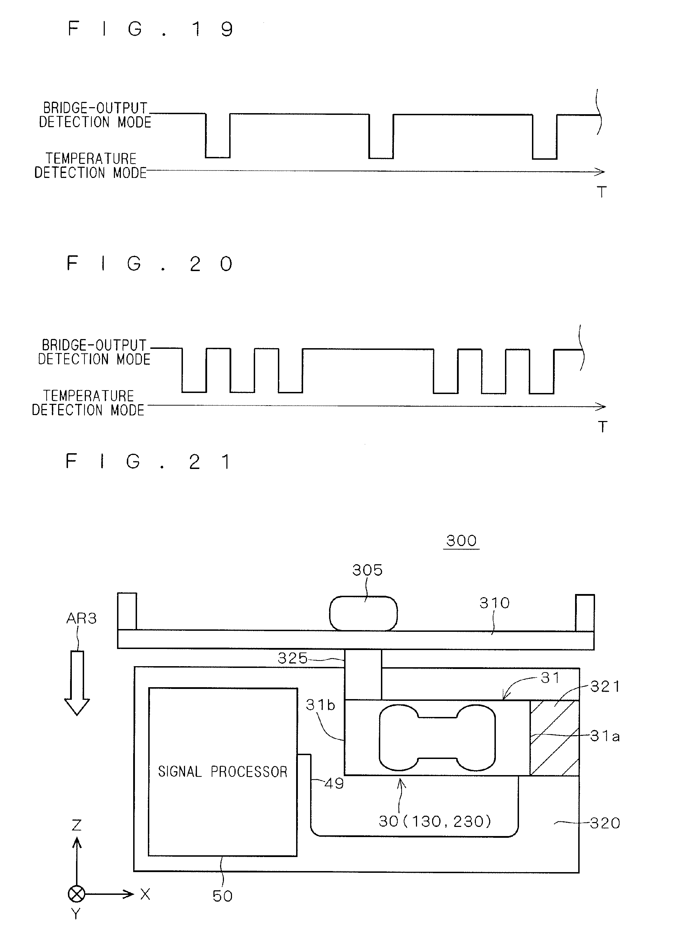

Now, timing for switching each of the selecting parts 848 between the side of a reference output (temperature detection mode) and the side of a bridge output (bridge-output detection mode) will be described. Figs. 19 and 20 are views for describing timing for switching the selecting parts between a bridge-output detection mode and a temperature detection mode.

For example, as shown in Fig. 19, the operation of each of the selecting parts 848 may be controlled such that a detection mode is switched to a temperature detection mode at regular intervals and the temperature of the strain generating element 431 is measured at regular intervals. Alternatively, as shown in Fig. 20, the operation of each of the selecting parts 848 may be controlled such that a detection mode is switched to a temperature detection mode at regular intervals in a non-measuring period and is switched to a bridge-output detection mode when processes for weight measurement are performed.

Additionally, according to the present preferred embodiment, digital filtering is performed on an output signal of the A/D converter 451b. As such, no delay time which is likely to be caused by filtering is caused, and thus, it is possible to switch the selecting parts between the above-noted modes at regular intervals as shown in Figs. 19 and 20.

The compensation calculator 452 of the CPU 454 performs calculation for compensation based on an output signal provided from the variable gain amplifier 851 a. For example, when the selecting parts 848 are switched to the side of a reference output (an upper side) so that a reference output is input to the variable gain amplifier 851a as an input signal, the compensation calculator 452 calculates the temperature of the strain generating element 431 based on a digital signal which is output from the variable gain amplifier 851a and is provided as a result of digital conversion in the A/D converter 451b.

On the other hand, when the selecting parts 848 are switched to the side of a bridge output so that a bridge output is input to the variable gain amplifier 851a as an input signal, the compensation calculator 452 minutely corrects a bridge output which is roughly corrected.

Thus, zero is compensated by the zero compensation element 442 and the output sensitivity is compensated by the variable gain amplifier 851a, to thereby achieve rough correction of a bridge output. Then, a bridge output which is roughly corrected is minutely corrected based on results of detection provided by the thermal sensitive resistor 845 which is used as a temperature sensor. That is, the zero and the output sensitivity of the bridge circuit 540 are further compensated (refer to the above equations (5) and (7)), and the rate of change of the variation $\Delta$V with temperature is further reduced to about 1-5 (ppm/°C).

The weight calculator 455 of the CPU 454 calculates the weight of the checked object 405 based on an output of the bridge circuit 540 which is minutely corrected. The sorting device 460 performs a sorting process based on results of calculation of the weight calculator 455.

<7.2 Advantages of load cell unit and weight checker according to the seventh preferred embodiment>

As described above, according to the seventh preferred embodiment, circuital (hardware) compensation of zero and sensitivity are provided by the zero compensation element 442 and the variable gain amplifier 851a connected with the thermal sensitive resistor 845. Further, software compensation of zero and output sensitivity are provided to a bridge output which is circuitally compensated.

Also, the zero compensation element 442 is provided on the thick portion 434, to thereby compensate the zero of the bridge circuit 440 while accurately reflecting the temperature of the strain generating element 431. Moreover, the thermal sensitive resistor 845 is provided on the thick portion 434, like the zero compensation element 442. As a result, the variable gain amplifier 851a can compensate the output sensitivity of the bridge circuit 540 while accurately reflecting the temperature of the strain generating element 431. Furthermore, the compensation calculator 452 can accurately and reliably detect the temperature of the strain generating element 431. Accordingly, the output accuracy of the bridge circuit 540 can be further improved, which results in further improvement of the repeatability of results of weight measurement provided by the load cell unit 830.

Also, the weight checker 800 according to the seventh preferred embodiment can provide two types of zero compensation and two types of output-sensitivity compensation, to thereby compute the weight of each of the checked objects 405 based on an output of the bridge circuit 540 which is controlled with high accuracy. Accordingly, even in a case where the load of the checked object 405 and the load of the measuring conveyor 421 (tare) are imposed on the strain generating element 431, as in the case of the weight checker 800, influences of a bridge output which varies along with temperature change can be reduced, to thereby measure the weight of the checked object 405 with enhanced repeatability.

Further, according to the seventh preferred embodiment, the thermal sensitive resistor 845 and the variable gain amplifier 851a can be used as not only sensitivity correctors for compensating for change in the modulus of longitudinal elasticity of the strain generating element, which change is caused due to temperature change in order to correct an output of the bridge circuit 540, but also as temperature sensors of the strain generating element 431. As such, the number of components forming the load cell unit 830 can be reduced, to thereby reduce manufacturing costs of the load cell unit.

<8. Modifications>

Hereinbefore, the preferred embodiments of the present invention have been described. However, the present invention is not limited to the above-described preferred embodiments, and various modifications can be devised.

(1) In the second preferred embodiment, though it has been described that the thermal sensitive resistors 145 (145a and 145b) are connected in series with both of the positive and negative input sides 147 and 148 of the bridge circuit 140, the present invention is not limited to that description.

The thermal sensitive resistors 145 may be connected only with either the positive input side 147 of the bridge circuit 140 or the negative input side 148 of the bridge circuit 140. In this manner, the number of components can be reduced, to thereby reduce the manufacturing costs of the load cell unit 30. Thus, it is only essential that the thermal sensitive resistors 145 are connected in series with at least one of the positive and negative input sides 147 and 148 of the bridge circuit 140.

(2) Also, in the first through third preferred embodiments, through it has been described that the load cell units 30, 130, and 230 are used for processes for weight measurement in the weight checker 1, 100, and 200, respectively, the application of the load cell unit 130 is not limited to that. The application is possible in any device that uses any of the load cell units 30, 130 and 230, such as an electric balance, for example.

Fig. 21 is a front view for showing another example of a device to which the load cell unit 30 (130 or 230) is applied (electric balance 300). The electric balance 300 is a device for measuring the weight of a measured object 305 which is standing still. As shown in Fig. 21, the electric balance 300 principally includes the load cell unit 30 (130 or 230) and a pan 310. The following description will deal chiefly with a case where the load cell unit 30 according to the first preferred embodiment is used.

The pan 310 is used as a loading part for loading the measured object 305. As shown in Fig. 21, the pan 310 is supported by the side of the free end 31b of the strain generating element 31 via a mounting part 325. Also, the fixed end 31a of the strain generating element 31 is attached to a fixed portion 321 in a body 320. Accordingly, the strain generating element 31 receives a load in a load direction AR3 (the almost Z-axis direction). Then, the signal processor 50 calculates the weight of the measured object 305 based on a load signal output from the bridge circuit 40 (refer to Fig. 5).

As described above, also in the electric balance 300, the signal processor 50 can calculate the weight of the measured object 305 with high accuracy. As a result, it is possible to set the minimum scale interval relative to a rated capacity of the load cell unit to a smaller value. Accordingly, the measurement resolution for a measured object can be further improved, which makes it possible to implement a measurement mode having a smaller minimum scale interval in the electric balance 300 with the same rated capacity.

For instance, it is possible to additionally implement a measurement mode having the maximum scale interval of 300 grams and the minimum scale interval of 0.05 gram in an electric balance in which a measurement mode having the maximum scale interval of 600 grams and the minimum scale interval of 0.2 gram and a measurement mode having the maximum scale interval of 300 grams and the minimum scale interval of 0.1 gram have been implemented.

Also, since the measurement resolution for the measured object 305 can be further improved, the weight of the measured object 305 can be measured with high accuracy even if a value of a voltage applied by the power source 46 is set to a small value. As a result, it is possible to provide the electric balance 300 with higher measurement accuracy even in a case of battery-powered operation.

In the meantime, in order to make the electric balance 300 battery-operable, it is necessary to reduce the electric energy consumed in the electric balance 300. In a case where the load cell unit 130 according to the second preferred embodiment is employed, for example, the thermal sensitive resistors 145 and the bridge circuit 40 are connected in series with the power source 46, and any of the thermal sensitive resistors 145 and any of the strain gauges 41 are selected such that the resistance of the bridge circuit 40 is equal to or larger than 1 kΩ. However, since a Cu- or Ni-based material is used for the thermal sensitive resistors 145 as described above, it would be difficult to set the resistance of the thermal sensitive resistors 145 to a larger value in some cases.

In contrast thereto, in a case where the load cell unit 30 or 230 according to the first or third preferred embodiment is employed, the thermal sensitive resistor 45 with the precision resistors 46a and 46b and the bridge circuit 40 or 240 are connected in parallel with the power source 46. This makes it possible to reduce the electric energy consumed in the electric balance 300 regardless of the value of the thermal sensitive resistors 45. Accordingly, by employing the load cell unit 30 or 230 in which a thermal sensitive resistor is not connected in series with the input sides 47 and 48 of the bridge circuit, it is possible to easily form the electric balance 300 which is battery-operable.

(3) In the fifth preferred embodiment, it has been described that the thermal sensitive resistors 545 (545a and 545b) are connected in series with both of the positive and negative input sides 547 and 548 of the bridge circuit 540. However, the present invention is not limited to that description.

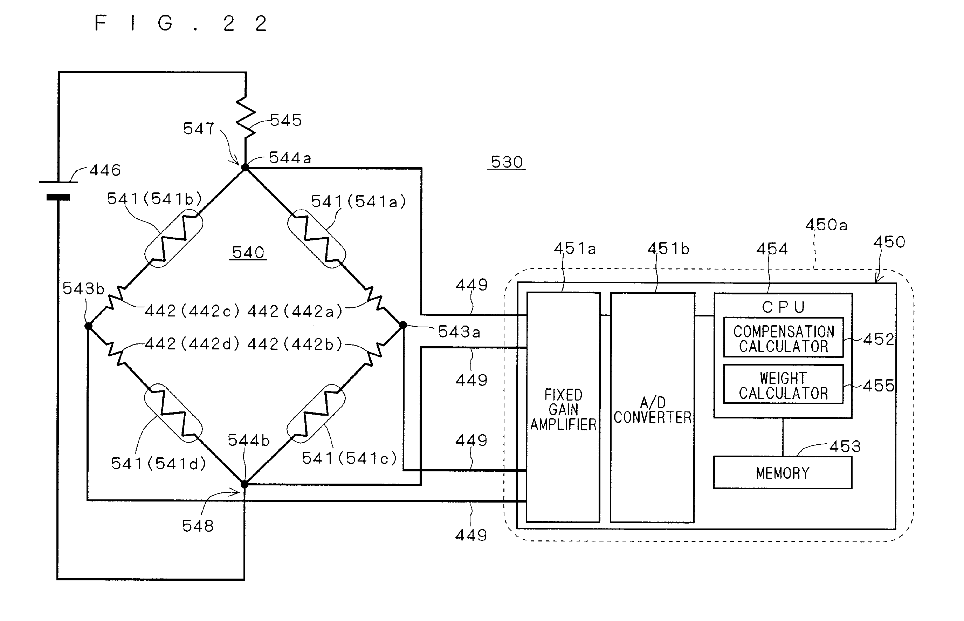

The thermal sensitive resistors 545 may be connected only with the positive input side 547 of the bridge circuit 540 (refer to Fig. 22), or may be connected only with the negative input side 548 of the bridge circuit 540. In this manner, the number of components can be reduced, to thereby reduce the manufacturing costs of the load cell unit 430. Thus, it is only essential that the thermal sensitive resistors 545 are connected in series with at least one of the positive and negative input sides 547 and 548 of the bridge circuit 540. Additionally, a material for the thermal sensitive resistors 545 is selected among a nickel (Ni)-based material, a cupper (Cu)-based material, a platinum (Pt)-based material, and the like, depending on the output sensitivity of the bridge circuit 540.

(4) Also, in the fourth through sixth preferred embodiments, though the accompanying drawings show that the signal processor 540 is formed distinctly from the strain generating element 431 (refer to Fig. 9), the location of the signal processor 450 is not limited to that, and the strain generating element 431 and the signal processor 450 may be formed integrally with each other.

(5) Also, in the fourth through sixth preferred embodiments, it has been described that the load cell units 430, 530, 630, and 830 are used for processes for weight measurement in the weight checkers 400, 500, 600, and 800, respectively. However, the application of the load cell unit 530 is not limited to that.

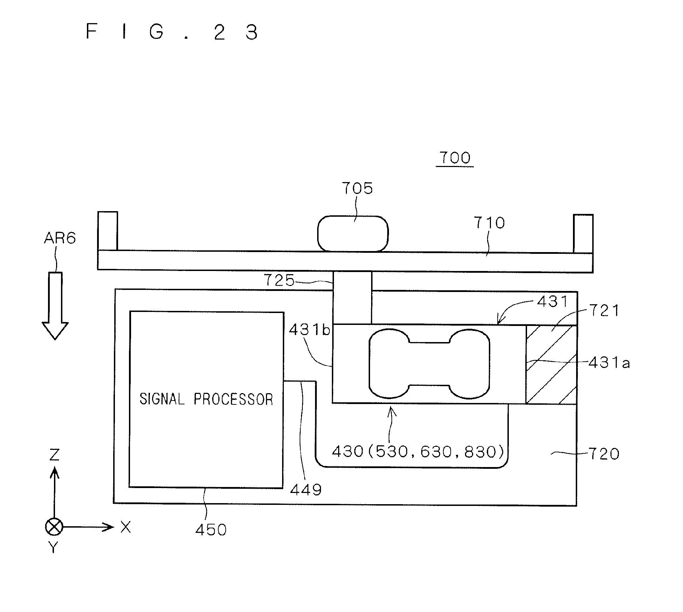

Fig. 23 is a front view for showing another example of a device to which the load cell unit 430 (530 or 630) is applied (balance 700). The balance 700 is an industrial balance which is required to provide highly accurate measurement results, and is a device for measuring the weight of a measured object 705 which is standing still. As shown in Fig. 23, the balance 700 principally includes the load cell unit 430 (530 or 630) and a pan 710. The following description will deal chiefly with a case where the load cell unit 430 according to the fourth preferred embodiment is used. It is noted that the balance 700 obtains the mass of a measured object by converting a measured weight, like the weight checkers 400, 500, 600, and 800 according to the first through sixth preferred embodiments.

The pan 710 is used as a loading part for loading the measured object 705. As shown in Fig. 23, the pan 710 is supported by the side of the free end 431b of the strain generating element 431 via a mounting part 725. Also, the fixed end 431a of the strain generating element 431 is attached to a fixed portion 721 in a body 720. Accordingly, the strain generating element 431 receives a load in a load direction AR6 (the almost Z-axis direction). Then, the signal processor 450 calculates the weight of the measured object 705 based on a load signal output from the bridge circuit 440 (refer to Fig. 13).

As described above, as circuital (hardware) compensation of zero and output sensitivity and also software compensation of zero and output sensitivity are provided to the bridge circuit 440 (540 or 640) of the balance 700, the weight of each of the measured objects 705 can be calculated based on a bridge output which is controlled with high accuracy. Accordingly, the minimum scale interval relative to the largest capacity of the load cell unit 430 (530 or 630) can be set to a smaller value, so that the measurement accuracy (measurement resolution) for a measured object can be further improved. For example, even in a case where a very small quantity of additive is added to a raw material, the weight of the additive can be accurately measured.

**Claims**

1.  A load cell unit for measuring a weight of a measured object based on a load signal, comprising

    (a) a strain generating element including a plurality of thin strain generating portions;

(b) a strain gauge placed on a corresponding one of said plurality of strain generating portions;

(c) a bridge circuit including said strain gauge;

(d) a zero compensation element which is connected in series with said strain gauge placed on one side of said bridge circuit and carry out rough correction on an output of said bridge circuit, by compensating zero of said bridge circuit which varies along with temperature change in accordance with a temperature of said strain generating element;

(e) a temperature sensor for detecting said temperature of said strain generating element; and

(f) a signal processor which calculates an amount of change in said zero after said rough correction based on a result of detection provided by said temperature sensor and minutely corrects said output of said bridge circuit which is roughly corrected based on said amount of change, wherein

said zero compensation element and said temperature sensor are provided in a portion interposed between adjacent ones of said plurality of strain generating portions.

2. The load cell unit according to claim 1, wherein
said temperature sensor is a thermal sensitive resistor.

3. The load cell unit according to claim 2, wherein
said thermal sensitive resistor is connected in series with an input side of said bridge circuit.

4. The load cell unit according to claim 3, wherein
said strain gauge is a strain gauge of a temperature self-compensated type which is capable of compensating for thermal expansion of said strain generating element which is caused due to temperature change.

5. The load cell unit according to claim 1 or 2, wherein
said strain gauge is a strain gauge of a temperature/sensitivity compensated type which is capable of compensating an amount of change in modulus of longitudinal elasticity of said strain generating element which is caused due to temperature change.

6. The load cell unit according to any of claims 1 through 5, wherein
out of said plurality of strain generating portions, first and second strain generating portions which are adjacent to each other are provided at a side closer to a first surface which is substantially perpendicular to a load direction in which a load of said measured object is imposed, and receives said load of said measured object, in an outer surface of said strain generating element,
third and fourth strain generating portions which are adjacent to each other are provided at a side closer to a second surface which is substantially perpendicular to said load direction and opposes said first surface with a through hole of said strain generating element interposed therebetween, and
said strain gauge is provided on each of said first through fourth strain generating portions.

7. The load cell unit according to claim 5, wherein
said bridge circuit includes first and second strain gauges and first and second fixed resistors, and
said first strain gauge, said second strain gauge, said first fixed resistor, and said second fixed resistor are connected between a first input terminal and a first output terminal, between a second input terminal and said first output terminal, between said first input terminal and a second output terminal, and between said second input terminal and said second output terminal, respectively.

8. The load cell unit according to claim 7, wherein
out of said plurality of strain generating portions, first and second strain generating portions which are adjacent to each other are provided at a side closer to a first surface which is substantially perpendicular to a load direction in which a load of said measured object is imposed, and receives said load of said measured object, in an outer surface of said strain generating element,
third and fourth strain generating portions which are adjacent to each other are provided at a side closer to a second surface which is substantially perpendicular to said load direction and opposes said first surface with a through hole of said strain generating element interposed therebetween, and
said first and second strain gauges are placed on one of said first surface and said second surface in positions respectively opposing said strain generating portions provided on said one of said first surface and said second surface.

9. The load cell unit according to any of claims 1 through 8, wherein

said signal processor calculates said amount of change in said zero by second- or higher-order approximation.

**10.** A weight checker comprising:

a measuring device for measuring weights of checked objects which are being transferred; and
a sorting device for sorting said checked objects based on results of measurement of said checked objects which are provided by said measuring device, wherein
said measuring device includes said load cell unit according to any of claims 1 through 9; and
a measuring conveyor which is supported by said load cell unit and transfers said checked objects.

**11.** An electric balance comprising:

said load cell according to any of claims 1 through 9; and
a pan which is supported by said load cell and loads a measured object.

**12.** A load cell unit for measuring a weight of a measured object based on a load signal, comprising:

(a) a strain generating element including a plurality of thin strain generating portions;
(b) a strain gauge of a temperature/sensitivity compensated type which is placed on a corresponding one out of said plurality of strain generating portions and compensates output sensitivity of said bridge circuit, to roughly correct a bridge output of said bridge circuit, to compensates an amount of change in modulus of longitudinal elasticity of said strain generating element which is caused due to temperature change;
(c) a bridge circuit including said strain gauge;
(d) a zero compensation element which is connected in series with said strain gauge placed on one side of said bridge circuit and roughly correct an output of said bridge circuit, by compensating zero of said bridge circuit which varies along with temperature change in accordance with a temperature of said strain generating element;
(e) a temperature sensor for detecting said temperature of said strain generating element; and
(f) a signal processor for further compensating said zero and said output sensitivity of said bridge circuit ,based on a result of detection provided by said temperature sensor, by minutely correcting said bridge output of said bridge circuit which is zero-compensated by said zero compensation element, and is roughly corrected through compensation of said output sensitivity of said bridge circuit by said strain gauge, wherein
said zero compensation element and said temperature sensor are provided in a portion interposed between adjacent strain generating portions.

**13.** The load cell unit according to claim 12, wherein
said temperature sensor is a thermal sensitive resistor.

**14.** A load cell unit for measuring a weight of a measured object based on a load signal, comprising:

(a) a strain generating element including a plurality of thin strain generating portions;
(b) a strain gauge of a temperature self-compensated type which is placed on a corresponding one out of said plurality of strain generating portions and is capable of compensating for thermal expansion of said strain generating element which is caused due to temperature change;
(c) a bridge circuit including said strain gauge;
(d) a zero compensation element which is connected in series with said strain gauge placed on one side of said bridge circuit and roughly correct an output of said bridge circuit, by compensating zero of said bridge circuit which varies along with temperature change in accordance with a temperature of said strain generating element;
(e) thermal sensitive resistors which are connected in series with an input side of said bridge circuit, compensate an amount of change in modulus of longitudinal elasticity of said strain generating element which is caused due to temperature change, and roughly correct a bridge output of said bridge circuit, to compensate output sensitivity of said bridge circuit; and
(f) a signal processor for further compensating said zero and said output sensitivity of said bridge circuit, based on a result of detection provided by said temperature sensors, by minutely correcting said bridge output of said bridge circuit which is zero-compensated by said zero compensation element, and is roughly corrected through compensation of said output sensitivity of said bridge circuit by said thermal sensitive resistors, wherein

said zero compensation element and said thermal sensitive resistors which are employable as temperature sensors are provided in a portion interposed between adjacent strain generating portions.

**15.** The load cell unit according to claim 14, wherein
a first thermal sensitive resistor and a second thermal sensitive resistor out of said thermal sensitive resistors are connected with an input-side first terminal of said bridge circuit and an input-side second terminal of said bridge circuit, respectively.

**16.** The load cell unit according to claim 14, wherein
said thermal sensitive resistors are connected with one of input-side terminals of said bridge circuit.

**17.** A load cell unit for measuring a weight of a measured object based on a load signal, comprising:

(a) a strain generating element including a plurality of thin strain generating portions;
(b) a strain gauge of a temperature self-compensated type which is placed on a corresponding one out of said plurality of strain generating portions and is capable of compensating for thermal expansion of said strain generating element which is caused due to temperature changes;
(c) a bridge circuit including said strain gauge;
(d) a zero compensation element which is connected in series with said strain gauge placed on one side of said bridge circuit and roughly correct a bridge output of said bridge circuit, by compensating zero of said bridge circuit which varies along with temperature change in accordance with a temperature of said strain generating element;
(e) a thermal sensitive resistor which is employable as a temperature sensor;
(f) a signal processor which carries out signal processing on an input signal and includes;

(f-1) a variable gain amplifier which is connected with said thermal sensitive resistor and has amplification controlled based on a resistance of said thermal sensitive resistor which is in accordance with temperature change; and
(f-2) a compensation calculator which is capable of carrying out calculation for compensation based on an output signal provided by said variable gain amplifier; and

(g) a selecting part for selecting one of said bridge output and a reference output and is capable of inputting a selected output to said variable gain amplifier, wherein
said zero compensation element and said thermal sensitive resistor are provided in a portion interposed between adjacent strain generating portions,
when said selecting part is switched to a side of said bridge output so that said bridge output is input to said variable gain amplifier as said input signal,

i) said variable gain amplifier compensates an amount of change in modulus of longitudinal elasticity of said strain generating element which is caused due to temperature change and roughly corrects said bridge output, to compensate output sensitivity of said bridge circuit, and
ii) said compensation calculator minutely corrects said bridge output of said bridge circuit which is zero-compensated by said zero compensation element, said bridge output being roughly corrected through compensation of said output sensitivity of said bridge circuit by said variable gain amplifier, based on a result of detection provided by said temperature sensor, to further compensate said zero and said output sensitivity of said bridge circuit, and
when said selecting part is switched to a side of said reference output so that said reference output is input to said variable gain amplifier as said input signal,
iii) said variable gain amplifier outputs an output signal which is in accordance with a resistance of said thermal sensitive resistor, and
iv) said compensation calculator calculates said temperature of said strain generating element based on said output signal.

**18.** The load cell unit according to any of claims 12 through 17, wherein
out of said plurality of strain generating portions, first and second strain generating portions which are adjacent to each other are provided at a side closer to a first surface which is substantially perpendicular to a load direction in which a load of said measured object is imposed, and receives said load of said measured object, in an outer surface of said strain generating element,
third and fourth strain generating portions which are adjacent to each other are provided at a side closer to a second surface which is substantially perpendicular to said load direction and opposes said first surface with a through hole of said strain generating element interposed therebetween, and

said strain gauge is placed on each of said first through fourth strain generating portions.

**19.** The load cell unit according to claim 12 or 13, wherein
said bridge circuit includes first and second strain gauges and first and second fixed resistors, and
said first strain gauge, said second strain gauge, said first fixed resistor, and said second fixed resistor are connected between a first input terminal and a first output terminal, between a second input terminal and said first output terminal, between said first input terminal and a second output terminal, and between said second input terminal and said second output terminal, respectively.

**20.** The load cell unit according to claim 19, wherein
out of said plurality of strain generating portions, first and second strain generating portions which are adjacent to each other are provided at a side closer to a first surface which is substantially perpendicular to a load direction in which a load of said measured object is imposed, and receives said load of said measured object, in an outer surface of said strain generating element,
third and fourth strain generating portions which are adjacent to each other are provided at a side closer to a second surface which is substantially perpendicular to said load direction and opposes said first surface with a through hole of said strain generating element interposed therebetween, and
said first and second strain gauges are placed on one of said first surface and said second surface in positions respectively opposing said strain generating portions provided on said one of said first surface and said second surface.

**21.** The load cell unit according to any of claims 12 through 20, wherein
said signal processor minutely corrects said bridge output which is roughly corrected by second- or higher-order approximation, to further compensate said zero of said bridge circuit.

**22.** The load cell unit according to any of claims 12 through 20, wherein
said signal processor minutely corrects said bridge output which is roughly corrected by second- or higher-order approximation, to further compensate said output sensitivity of said bridge circuit.

**23.** The load cell unit according to any of claims 12 through 20, wherein
said signal processor minutely corrects said bridge output which is roughly corrected by second- or higher-order approximation to compensate said zero of said bridge circuit, and also, achieves minute correction by second- or higher-order approximation to compensate said output sensitivity of said bridge circuit.

**24.** A weight checker, comprising:

a measuring device for measuring weights of checked objects which are being transferred; and
a sorting device for sorting said checked objects based on results of measurement provided by said measuring device, wherein
said measuring device includes:
said load cell unit according to any of claims 12 through 23; and
a measuring conveyor which is supported by said load cell unit and transfers said checked objects.

**25.** A balance comprising:

said load cell unit according to any of claims 12 through 23; and
a pan which is supported by said load cell and loads a measured object.

# F I G . 1

F I G . 2

FIG. 3

(a)

(b)

FIG. 4

F I G . 5

F I G . 6

FIG. 7

FIG.8

FIG. 9

F I G . 1 0

F I G . 1 1

F I G . 1 2

440a(540a)    441(541,641)

440b(540b)

Y

Z    X

FIG. 13

FIG. 14

FIG. 15

FIG.16

F I G . 1 7

F I G . 1 8

F I G . 1 9

BRIDGE-OUTPUT
DETECTION MODE

TEMPERATURE
DETECTION MODE

T

F I G . 2 0

BRIDGE-OUTPUT
DETECTION MODE

TEMPERATURE
DETECTION MODE

T

F I G . 2 1

<u>300</u>

305

310

AR3

325

31

321

31b

31a

SIGNAL PROCESSOR

49

30(130,230)

320

Z

X

Y

50

EP 2 060 884 A1

F I G . 2 2

F I G . 2 3

**INTERNATIONAL SEARCH REPORT**

| International application No. |
| --- |
| PCT/JP2007/066489 |

A.  CLASSIFICATION OF SUBJECT MATTER
*G01G3/18*(2006.01)i, *B07C5/18*(2006.01)i, *G01G3/14*(2006.01)i, *G01G11/00*
(2006.01)i, *G01L1/22*(2006.01)i

According to International Patent Classification (IPC) or to both national classification and IPC

B.  FIELDS SEARCHED

Minimum documentation searched (classification system followed by classification symbols)
G01G3/18, B07C5/18, G01G3/14, G01G11/00, G01L1/22

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2000-111425 A  (Kubota Corp.),<br>21 April, 2000 (21.04.00),<br>Full text; all drawings<br>(Family: none) | 1-16,18-25 |
| Y | JP 11-125555 A  (Toshiba Tec Corp.),<br>11 May, 1999 (11.05.99),<br>Figs. 10, 12<br>(Family: none) | 1-16,18-25 |
| Y | JP 3251081 B2  (Ishida Co., Ltd.),<br>16 November, 2001 (16.11.01),<br>Fig. 1<br>& GB 2273164 A          & US 5515737 A | 1-16,18-25 |

☐  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 September, 2007 (06.09.07) | 18 September, 2007 (18.09.07) |

| Name and mailing address of the ISA/<br>  Japanese Patent Office | Authorized officer |
| --- | --- |
| Facsimile No. | Telephone No. |

Form PCT/ISA/210 (second sheet) (April 2005)

**EP 2 060 884 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11125555 A
- JP 7069232 A
- JP 11064123 A